# EUROPEAN PATENT SPECIFICATION

(11) **EP 3 546 535 B1**
(45) Date of publication and mention of the grant of the patent: **30.12.2020**
(21) Application number: 19165700.6
(22) Date of filing: 28.03.2019
(51) Int. Cl.: C09D 11/328, C09D 11/326, C09D 11/102, C09D 11/106, C09D 11/107

(54) **AQUEOUS INK JET COMPOSITION**
WÄSSRIGE TINTENSTRAHLZUSAMMENSETZUNG
COMPOSITION À JET D'ENCRE AQUEUSE

(30) Priority: 28.03.2018 JP 2018062961; 28.03.2018 JP 2018062962; 28.03.2018 JP 2018062963; 28.03.2018 JP 2018062964; 28.03.2018 JP 2018062965; 28.03.2018 JP 2018062966; 27.11.2018 JP 2018221458
(43) Date of publication of application: 02.10.2019
(73) Proprietor: Seiko Epson Corporation, Tokyo 160-8801 (JP)
(72) Inventor: KITADA, Kenji, Suwa-shi, Nagano 392-8502 (JP); HAYASHI, Hiroko, Suwa-shi, Nagano 392-8502 (JP); IKEDA, Yasunari, Suwa-shi, Nagano 392-8502 (JP); HOKARI, Hirofumi, Suwa-shi, Nagano 392-8502 (JP); OKAMURA, Hisashi, Suwa-shi, Nagano 392-8502 (JP); KIKUCHI, Kenta, Suwa-shi, Nagano 392-8502 (JP); KAGAMI, Seiji, Suwa-shi, Nagano 392-8502 (JP); NAITO, Shinichi, Suwa-shi, Nagano 392-8502 (JP)
(74) Representative: Miller Sturt Kenyon

(56) References cited:
- EP-A1- 2 975 092
- CN-B- 101 709 177
- CN-B- 102 229 761
- US-A1- 2015 337 153
- US-A1- 2016 208 435

## Description

### BACKGROUND

### 1. Technical Field

The present invention relates to an aqueous ink jet composition.

### 2. Related Art

In recent years, the use of ink jet printing has been expanding, and is applied not only to printing machines for office or home use but also to commercial printing, textile printing, or the like.

An ink jet ink containing a disperse dye is also used.

Printing methods for such an ink jet inks include a direct printing method, in which an ink is given to (printed on) a recording medium (usually composed of fibers) to be dyed and then a dye is fixed by heat treatment such as steaming; and a thermal transfer printing method in which a dye ink is given to (printed on) an intermediate transfer medium (dedicated transfer paper) and then a dye is sublimated and transferred from a side on the intermediate transfer medium to a recording medium to be dyed.

An ink jet ink containing a disperse dye generally has the problems that ink storage stability is low and discharge stability in an ink jet method is also poor, due to a problem in long-term dispersion stability of the disperse dye.

For the purpose of solving such problems, an ink composition described in International Publication No. WO 2005/121263 has been proposed.

However, with such an ink composition, when it contains a specific disperse dye, storage stability of the ink composition cannot be made sufficiently excellent, so that there is a problem of clogging in a head filter or a nozzle during discharge by an ink jet method after long-term storage. The present inventor has found that these problems are exacerbated when the ink comprises, as a disperse dye, C.I. Disperse Yellow 54, which is a yellow disperse dye that exhibits an excellent color development, C.I. Disperse Blue 359 which is a blue disperse dye that exhibits an excellent color development, or C.I. Disperse Red 60 which is a red disperse dye that exhibits an excellent color development.

### SUMMARY

The invention can be realized in the following features
[1] An aqueous ink jet composition, comprising:
   at least one disperse dye selected from the group consisting of C.I. Disperse Yellow 54, C.I. Disperse Red 60, and C.I. Disperse Blue 359; and
   a styrene maleic acid-based dispersing agent represented by Formula (1). 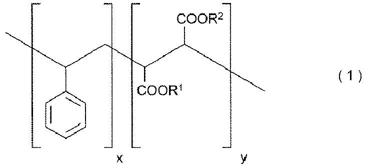 wherein:
      one of R¹ and R² is -(CH₂CH₂O)ₙR³, -CH₂CH(CH₃)₂ or -(CH₂)₃CH₃; the other of R¹ and R² is -H, - (CH₂CH₂O)ₙR³, -CH₂CH(CH₃)₂,
      -(CH₂)₃CH₃, or a counterion such that the compound of formula (1) is a salt;
      each R³ is independently H, CH₃, or C₂H₅; and
      each n is independently an integer of equal to or greater than 1; and
      x and y have a relationship such that the ratio of y: x is equal to or greater than 0.2:1 and equal to or less than 1.0:1.
[2] The aqueous ink jet composition according to [1], in which when the content of the disperse dye is set as XD [% by mass] and the content of the styrene maleic acid-based dispersing agent is set as XM [% by mass], a relationship of 0.04 ≤ XM/XD ≤ 25 is satisfied.
[3] The aqueous ink jet composition according to [1] or [2], in which the content of the disperse dye is equal to or greater than 0.1% by mass and equal to or less than 30% by mass with reference to the total mass of the aqueous ink jet composition.
[4] The aqueous ink jet composition according to any one of [1] to [3], in which a content of the styrene maleic acid-based dispersing agent is equal to or greater than 0.1% by mass and equal to or less than 30% by mass with reference to the total mass of the aqueous ink jet composition.
[5] The aqueous ink jet composition according to any one of [1] to [4], in which the styrene maleic acid-based dispersing agent has a weight average molecular weight of equal to or greater than 7,000 and equal to or less than 20,000.
[6] The aqueous ink jet composition according to any one of [1] to [5], further containing: an acetylene-based surfactant, wherein the content of the acetylene-based surfactant is equal to or greater than 5.0 parts by mass and equal to or less than 75 parts by mass with respect to 100 parts by mass of the disperse dye.
[7] An aqueous ink jet composition, comprising:
   at least one disperse dye selected from the group consisting of C.I. Disperse Yellow 54, C.I. Disperse Red 60, and C.I. Disperse Blue 359;
   a substance A which is at least one type of compound selected from the group consisting of a compound represented by Formula (2-1), a compound represented by Formula (2-2), an ethylene oxide adduct of tristyrylphenol, and a derivative of the ethylene oxide adduct of tristyrylphenol; and
   an anionic dispersing agent. 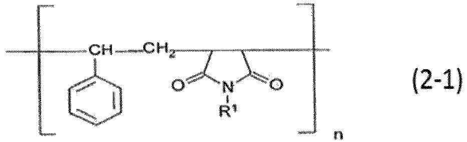 In Formula (2-1):
      R¹ is a hydrocarbon group having 1-6 carbon atoms, or
      -(CH₂)ₘ-NR⁸R⁹
         m is an integer of from 1 to 6; and
         R⁸ and R⁹ are each independently a hydrogen atom or a hydrocarbon group 1-6 carbon atoms; and
      n is an integer of equal to or greater than 1. 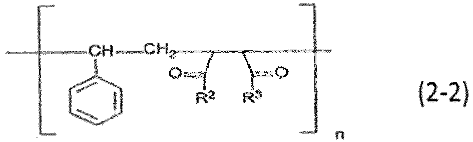 In Formula (2-2):
         one of R² and R³ is -OH, the other of R² and R³ is -NR⁴R⁵
            R⁴ and R⁵ are each independently a hydrogen atom or a hydrocarbon group having 1-6 carbon atoms; and
         n is an integer of equal to or greater than 1.
[8] The aqueous ink jet composition according to [7], in which the anionic dispersing agent is at least one of a compound represented by Formula (2-3), a sodium salt of a naphthalene sulfonic acid formalin condensate, and lignin sulfonic acid. 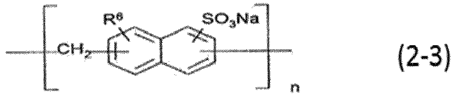 In Formula (2-3):
   R⁶ is a hydrocarbon group having 1-4 carbon atoms; and
   n is an integer of equal to or greater than 1.
[9] The aqueous ink jet composition according to [7] or [8], in which when the content of the disperse dye is set as XD [% by mass] and the content of the substance A is set as XA [% by mass], a relationship of 0.002 ≤ XA/XD ≤ 1.5 is satisfied.
[10] The aqueous ink jet composition according to any one of [7] to [9], in which when the content of the disperse dye is set as XD [% by mass] and the content of the anionic dispersing agent is set as XB [% by mass], a relationship of 0.3 ≤ XB/XD ≤ 2.0 is satisfied.
[11] The aqueous ink jet composition according to any one of [7] to [10], in which when the content of the substance A is set as XA [% by mass] and the content of the anionic dispersing agent is set as XB [% by mass], a relationship of 0.002 ≤ XA/XB ≤ 1.5 is satisfied.
[12] The aqueous ink jet composition according to any one of [7] to [11], in which the content of the disperse dye is equal to or greater than 0.1% by mass and equal to or less than 30% by mass with respect to the total mass of the aqueous ink jet composition.
[13] The aqueous ink jet composition according to any one of [7] to [12], in which the content of the substance A is equal to or greater than 0.05% by mass and equal to or less than 8.0% by mass with respect to the total mass of the aqueous ink jet composition.
[14] The aqueous ink jet composition according to any one of [7] to [13], in which the content of the anionic dispersing agent is equal to or greater than 0.1% by mass and equal to or less than 30% by mass with respect to the total mass of the aqueous ink jet composition.
[15] The aqueous ink jet composition according to any one of [7] to [14], in which the anionic dispersing agent has a weight average molecular weight of equal to or greater than 1,000 and equal to or less than 20,000.

### DETAILED DESCRIPTION

Hereinafter, a first suitable embodiment of the invention will be described in detail. Aqueous ink jet composition

Of the various disperse dyes, C.I. Disperse Yellow 54 has features such as an excellent color development but also has certain problems. Thus, when C.I. Disperse Yellow 54 has been used as a constituent component of an aqueous ink jet composition in the related art, the ink has poor storage stability, which causes significant problems of clogging in a head filter or a nozzle during discharge by an ink jet method after long-term storage.

As a result of intensive studies, the present inventor found that this problem appears to be due to weak flocculation of components of inks containing C.I. Disperse Yellow 54.

Therefore, the present inventor has conducted further studies aimed at suppressing generation of weakly-flocculated bodies due to weak flocculation, while taking advantage of the excellent characteristics of C.I. Disperse Yellow 54. As a result, the present inventor has reached the invention.

In a first aspect of the invention there is provided an aqueous ink jet composition comprising C.I. Disperse Yellow 54 and a styrene maleic acid-based dispersing agent represented by Formula (1). 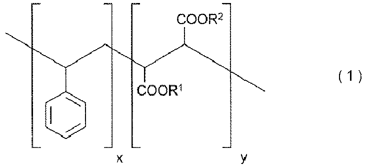 wherein:
one of R¹ and R² is -(CH₂CH₂O)ₙR³, -CH₂CH(CH₃)₂ or -(CH₂)₃CH₃; the other of R¹ and R² is -H, - (CH₂CH₂O)ₙR³, -CH₂CH(CH₃)₂,
-(CH₂)₃CH₃, or a counterion such that the compound of formula (1) is a salt;
each R³ is independently H, CH₃, or C₂H₅; and
each n is independently an integer of equal to or greater than 1; and
x and y have a relationship such that the ratio of y: x is equal to or greater than 0.2:1 and equal to or less than 1.0:1.
An aqueous ink jet composition comprising these components has beneficial effects obtained by the inclusion of C.I. Disperse Yellow 54, for example it has excellent color developing properties in a low-temperature process due to the relatively small molecular weight of the disperse dye, but does not cause significant generation of weakly-flocculated bodies on long-term storage. Therefore there is reduced clogging in a head filter or a nozzle during discharge by an ink jet method even after long-term storage.

When the styrene maleic acid-based dispersing agent is not used, or when another dispersing agent is used in place of the styrene maleic acid-based dispersing agent (for example, a dispersing agent other than a styrene maleic acid-based dispersing agent, a dispersing agent which is a styrene maleic acid-based dispersing agent but is other than the styrene maleic acid-based dispersing agent represented by the above formula, or the like), the above-mentioned excellent effects cannot be obtained.

For example, when the dispersing agent is a compound similar to the compounds of Formula (1) except that the ratio of y:x is less than 0.2:1, the maleic acid chain is small relative to a styrene chain, so that the dispersion stability of C.I. Disperse Yellow 54 in an aqueous ink jet composition cannot be ensured and weakly-flocculated bodies are easily generated during long-term storage of the aqueous ink jet composition.

Also, when the dispersing agent is a compound similar to the compounds of Formula (1) except that the ratio of y:x is greater than 1.0:1, the styrene chain is small relative to the maleic acid chain, so that adsorptivity of the dispersing agent onto C.I. Disperse Yellow 54 is poor, and desorption of the dispersing agent easily occurs. Thus, weakly-flocculated bodies are easily generated during long-term storage of the aqueous ink jet composition.

In the present specification, "weak flocculation" refers to a softly flocculated state in which particles are not present as flocculated particles having a predetermined particle diameter (unlike ordinary strong flocculation (hard flocculation)) and which does not have a definite particle diameter and easily causes deformation like "fluffy mass".

The extent of progression of such weak flocculation can be determined, for example, by measurement with FPIA (a wet-type flow-type particle diameter and particle shape analyzer). Thus, before and after a lapse of a predetermined time, , measurement of an aqueous ink jet composition is performed with FPIA to obtain the number of particles having a particle diameter of equal to or greater than 0.5 µm and equal to or less than 40.0 µm. Formation of weakly-flocculated bodies is said to have taken place when the number of particles in this diameter range has increased after the lapse of the predetermined time compared to before the lapse of the predetermined time. Suitable FPIA instruments include, for example, FPIA-2100, FPIA-3000, and FPIA-3000S which are flow-type particle image analyzers manufactured by Sysmex Corporation.

In addition, in the present specification, an "aqueous ink jet composition" includes not only an ink for discharge in an ink jet method but also a stock solution used for preparing the ink. In other words, the aqueous ink jet composition of the invention may be subjected to discharge by an ink jet method as it is, or may be subjected to discharge by an ink jet method after treatments such as dilution.

### Styrene maleic acid-based dispersing agent

The aqueous ink jet composition of the invention contains a styrene maleic acid-based dispersing agent represented by Formula (1).

Use of the styrene maleic acid-based dispersing agent in combination with C.I. Disperse Yellow 54 leads to excellent dispersion stability of C.I. Disperse Yellow 54 in the aqueous ink jet composition and excellent storage stability of the aqueous ink jet composition. Also, there is no significant generation of weakly-flocculated bodies after long-term storage and therefore clogging in a head filter or a nozzle during discharge by an ink jet method, which are due to long-term storage, can be effectively prevented. As a result, the aqueous ink jet composition can be stably discharged for a long period of time and high quality recorded matter obtained by an ink jet method can be consistently produced over a long period. In addition, the styrene maleic acid-based dispersing agent is a component which causes no significant adverse effects on quality of recorded matter or adverse effects in sublimation printing.

As described above, the styrene maleic acid-based dispersing agent may have a counterion such that it constitutes a salt. In this case, the counterion is preferably a monovalent ion.

Examples of such monovalent ions include ammonium, mono-, di- or tri-alkylammonium andalkali metal ions.

As set out above, either or both of R¹ and R² may be -(CH₂CH₂O)ₙR³, where n is an integer of equal to or greater than 1. However, n is preferably an integer of equal to or greater than 1 and equal to or less than 10, and more preferably an integer of equal to or greater than 1 and equal to or less than 5.

Accordingly, storage stability of the aqueous ink jet composition is further improved, and generation of weakly-flocculated bodies during long-term storage or the like is more effectively prevented.

As described above, one of R¹ and R² is -(CH₂CH₂O)ₙR³ -CH₂CH(CH₃)₂, or -(CH₂)₃CH₃, and the other is -H, -(CH₂CH₂O)ₙR³, -CH₂CH(CH₃)₂, -(CH₂)₃CH₃, or a counterion such that the compound of formula (1) is a salt; where each R³ and n is independently as defined above. It is preferable that one of R¹ and R² be -CH₂CH(CH₃)₂ and the other be -H.

Accordingly, dispersion stability of C.I. Disperse Yellow 54 in the aqueous ink jet composition and storage stability of the aqueous ink jet composition can be further improved, and significant generation of weakly-flocculated bodies and occurrence of clogging in a head filter or a nozzle during discharge by an ink jet method, which are due to long-term storage, can be more effectively prevented. As a result, it is possible to more stably perform discharge of the aqueous ink jet composition for a long period of time, and high quality recorded matter obtained by an ink jet method can be consistently produced over a long period.

As discussed above, the ratio of y:x is suitably equal to or greater than 0.2:1 and equal to or less than 1.0:1. It is preferable that of the ratio of y:x is equal to or greater than 0.3:1 and equal to or less than 0.9:1, and more preferably equal to or greater than 0.4:1 and equal to or less than 0.8:1.

This leads to improved dispersion stability of C.I. Disperse Yellow 54, since the ratio of hydrophilic groups to hydrophobic groups is made more suitable, and long-term stability of the aqueous ink jet composition is further improved.

The weight average molecular weight Mw of the styrene maleic acid-based dispersing agent is not particularly limited. The weight average molecular weight Mw is preferably equal to or greater than 7,000 and equal to or less than 20,000, more preferably equal to or greater than 8,000 and equal to or less than 18,000, and even more preferably equal to or greater than 10,000 and equal to or less than 15,000.

Accordingly, storage stability of the aqueous ink jet composition is further improved, and generation of weakly-flocculated bodies during long-term storage or the like is more effectively prevented.

The aqueous ink jet composition may contain a single compound or two or more compounds represented by General Formula (1).

The content of the styrene maleic acid-based dispersing agent represented by Formula (1) in the aqueous ink jet composition is preferably equal to or greater than 0.1% by mass and equal to or less than 30% by mass, more preferably equal to or greater than 0.5% by mass and equal to or less than 20% by mass, and even more preferably equal to or greater than 1.0% by mass and equal to or less than 15% by mass.

Accordingly, storage stability of the aqueous ink jet composition is further improved, and generation of weakly-flocculated bodies during long-term storage or the like is more effectively prevented.

In particular, when the aqueous ink jet composition is an ink to be discharged by an ink jet method without further treatment or modification (e.g. dilution), the content of the styrene maleic acid-based dispersing agent represented by Formula (1) in the ink is preferably equal to or greater than 0.1% by mass and equal to or less than 10% by mass, more preferably equal to or greater than 1.0% by mass and equal to or less than 9.0% by mass, and even more preferably equal to or greater than 2.0% by mass and equal to or less than 8.0% by mass with reference to the total mass of the aqueous ink jet composition.

When the aqueous ink jet composition is a stock solution used for preparing an ink to be discharged by an ink jet method, the content of the styrene maleic acid-based dispersing agent represented by Formula (1) in the stock solution is preferably equal to or greater than 1.0% by mass and equal to or less than 30% by mass, more preferably equal to or greater than 5.0% by mass and equal to or less than 25% by mass, and even more preferably equal to or greater than 10% by mass and equal to or less than 20% by mass.

When the aqueous ink jet composition contains two or more compounds represented by General Formula (1), the "content", refers to the total content of all compounds of General Formula (1).

### C.I. Disperse Yellow 54

The aqueous ink jet composition contains C.I. Disperse Yellow 54 as a disperse dye.

the content of C.I. Disperse Yellow 54 in the aqueous ink jet composition is preferably equal to or greater than 0.1% by mass and equal to or less than 25% by mass, more preferably equal to or greater than 1.0% by mass and equal to or less than 20% by mass, and even more preferably equal to or greater than 2.0% by mass and equal to or less than 15% by mass with respect to the total mass of the aqueous ink jet composition.

Accordingly, it is possible to obtain a higher color density in a recorded portion formed by using the aqueous ink jet composition, while further improving storage stability of the aqueous ink jet composition and more effectively preventing generation of weakly-flocculated bodies during long-term storage.

When the content of C.I. Disperse Yellow 54 in the aqueous ink jet composition is set as XD [% by mass] and the content of the styrene maleic acid-based dispersing agent is set as XM [% by mass], it is preferable that a relationship of 0.04 ≤ XM/XD ≤ 25 be satisfied, it is more preferable that a relationship of 0.1 ≤ XM/XD ≤ 5.0 be satisfied, and it is even more preferable that a relationship of 0.35 ≤ XM/XD ≤ 1.3 be satisfied.

Accordingly, storage stability of the aqueous ink jet composition is further improved, and generation of weakly-flocculated bodies during long-term storage or the like is more effectively prevented.

The average particle diameter of C.I. Disperse Yellow 54 in the aqueous ink jet composition is preferably equal to or greater than 50 nm and equal to or less than 250 nm, more preferably equal to or greater than 75 nm and equal to or less than 200 nm, and even more preferably equal to or greater than 100 nm and equal to or less than 150 nm.

Accordingly, storage stability of the aqueous ink jet composition is further improved. In addition, a recorded portion formed by using the aqueous ink jet composition can be more effectively sublimated, and application to sublimation printing can be more suitably achieved.

In the present specification, the average particle diameter refers to an average particle diameter on a volume basis unless otherwise specified. The average particle diameter can be obtained, for example, by measurement using Microtrac UPA (manufactured by Nikkiso CO., LTD.).

Commercially available products of C.I. Disperse Yellow 54 include, for example, Resolin Yellow 4GL (manufactured by Lanxess), Foron Yellow SE3GL (manufactured by Clariant), Kayaset Yellow A-G (manufactured by Nippon Kayaku Co., Ltd.), and the like.

### Water

The aqueous ink jet composition comprises water.

The content of water in the aqueous ink jet composition is not particularly limited. The content of water is preferably equal to or greater than 30% by mass and equal to or less than 85% by mass, more preferably equal to or greater than 35% by mass and equal to or less than 80% by mass, and even more preferably equal to or greater than 40% by mass and equal to or less than 75% by mass, with respect to the total mass of the ink composition.

Accordingly, the viscosity of the aqueous ink jet composition can be more reliably adjusted to a suitable value, and discharge stability according to an ink jet method can be further improved.

### Solvent other than water

The aqueous ink jet composition may contain a solvent other than water.

Accordingly, the viscosity of the aqueous ink jet composition can be suitably adjusted, and a moisture retaining property of the aqueous ink jet composition can be increased. As a result, liquid droplet discharge by an ink jet method can be performed in a more stable manner.

Suitable solvents other than water which may be included in the aqueous ink jet composition include, for example, glycerin, propylene glycol, 2-pyrrolidone, and the like.

When the ink composition contains these solvents, a slow evaporation rate is achieved due to an excellent moisture retaining capability, which makes it possible to perform liquid droplet discharge in a more stable manner.

The content of the solvent other than water which is contained in the aqueous ink jet composition is preferably equal to or greater than 0% by mass and equal to or less than 45% by mass, more preferably equal to or greater than 10% by mass and equal to or less than 43% by mass, and even more preferably equal to or greater than 15% by mass and equal to or less than 40% by mass with respect to the total mass of the ink composition.

Accordingly, effects obtained by containing the solvent other than water as described above are exerted in a more remarkable manner.

### Surfactant

The aqueous ink jet composition may comprise a surfactant.

Accordingly, it is possible to achieve more suitable wettability of the aqueous ink jet composition with respect to a recording medium (base material), which is advantageous for obtaining better image quality.

The surfactant contained in the aqueous ink jet composition may be, for example, an anionic surfactant, a cationic surfactant or a nonionic surfactant.

More specifically, the surfactant contained in the aqueous ink jet composition may be, for example, an acetylene-based surfactant, a silicone-based surfactant or a fluorine-based surfactant.

When the aqueous ink jet composition contains an acetylene-based surfactant, dynamic surface tension of the aqueous ink jet composition can be suitably decreased, and quick orientation can be made with respect to meniscus. As a result, discharge stability according to an ink jet method can be further improved.

When the aqueous ink jet composition contains an acetylene-based surfactant, the content of the acetylene-based surfactant in the aqueous ink jet composition is preferably equal to or greater than 5.0 parts by mass and equal to or less than 75 parts by mass, more preferably equal to or greater than 6.0 parts by mass and equal to or less than 60 parts by mass, and even more preferably equal to or greater than 7.0 parts by mass and equal to or less than 40 parts by mass, with respect to 100 parts by mass of C.I. Disperse Yellow 54.

Accordingly, effects obtained by included the acetylene-based surfactant as described above are more marked.

Suitable commercially available acetylene-based surfactants include Olfine E1004, Olfine E1010, Olfine E1020, Olfine PD-001, Olfine PD-002W, Olfine PD-004, Olfine PD-005, Olfine EXP4001, Olfine EXP4200, Olfine EXP4123, Olfine EXP4300, Olfine WE-001, Olfine WE-003 (all of which are manufactured by Nissin Chemical Industry Co., Ltd.), and the like.

### Other components

The aqueous ink jet composition may contain a component (another component) other than the components as described above.

Examples of other components include a coloring agent other than C.I. Disperse Yellow 54, a dispersing agent other than the styrene maleic acid-based dispersing agent as described above, a penetrating agent such as triethylene glycol monomethyl ether, triethylene glycol monobutyl ether, diethylene glycol monomethyl ether, 1,2-hexanediol, 1,2-pentanediol, 1,2-butanediol, and 3-methyl-1,5-pentanediol, a pH adjusting agent, a chelating agent such as ethylenediamine tetraacetate (EDTA), an antiseptic or antifungal agent, an antirust agent, and the like. The antiseptic or antifungal agent may be, for example, a compound having an isothiazoline ring structure in the molecule.

The content (in a case where plural types of components are contained as the other component, the content is a sum of contents thereof) of the other components is preferably equal to or less than 6% by mass, and more preferably equal to or less than 4% by mass with respect to the total mass of the ink jet composition.

In particular, in a case where the aqueous ink jet composition of the invention comprises a dispersing agent (another dispersing agent) other than the styrene maleic acid-based dispersing agent as described above, the content of the dispersing agent (the other dispersing agent) is preferably equal to or less than 5% by mass, and more preferably equal to or less than 3% by mass with respect to the total mass of the ink jet composition.

The surface tension of the aqueous ink jet composition at 20°C is preferably equal to or greater than 20 mN/m and equal to or less than 50 mN/m, more preferably equal to or greater than 21 mN/m and equal to or less than 40 mN/m, and even more preferably equal to or greater than 23 mN/m and equal to or less than 30 mN/m.

Accordingly, clogging in a nozzle of a discharge apparatus is less likely to occur and discharge stability of the aqueous ink jet composition is further improved. In addition, even in a case where clogging in the nozzle occurs, recoverability achieved by capping the nozzle capped (nozzle capping) can be further improved.

As the surface tension, a value measured by the Wilhelmy method can be adopted. For measurement of the surface tension, a surface tension meter (for example, CBVP-7, manufactured by Kyowa Interface Science Co., Ltd., and the like) can be used.

The viscosity of the aqueous ink jet composition at 20°C is preferably equal to or greater than 2 mPa·s and equal to or less than 30 mPa·s, more preferably equal to or greater than 3 mPa·s and equal to or less than 20 mPa·s, and even more preferably equal to or greater than 4 mPa·s and equal to or less than 10 mPa·s.

Accordingly, discharge stability of the aqueous ink jet composition is further improved.

Measurement of the viscosity can be performed at 20°C using a viscoelasticity tester (for example, MCR-300, manufactured by Physica) by raising Shear Rate from 10 s⁻¹ to 1,000 s⁻¹ and reading a viscosity at the time of Shear Rate 200.

The aqueous ink jet composition of the invention is usually connected to an ink jet recording apparatus in a container such as a cartridge, a bag or a tank. In other words, the recording apparatus according to the invention includes a container (an ink cartridge or the like) for holding the aqueous ink jet composition of the invention.

### Recording method

The aqueous ink jet composition of the invention is suitable for use in a direct printing method, a thermal transfer printing method (for example, sublimation printing), and the like, and is particularly suitable for use with a thermal transfer printing method because C.I. Disperse Yellow 54 has sublimability.

The recording method using the aqueous ink jet composition of the invention may be, for example, thermal transfer printing method (sublimation printing) as will be described below.

A recording method according to the present invention has:
an ink adhering step of adhering an aqueous ink jet composition to an intermediate transfer medium by an ink jet method; and
a transfer step of heating the intermediate transfer medium to which the aqueous ink jet composition has been adhered, to transfer to a recording medium, C.I. Disperse Yellow 54 which is contained in the aqueous ink jet composition as a sublimable dye.

### Ink adhering step

In the ink adhering step, the aqueous ink jet composition is adhered to the intermediate transfer medium by an ink jet method. Discharge of the aqueous ink jet composition by an ink jet method can be carried out using a known ink jet recording apparatus. Suitable discharge methods include a piezo method, a method of discharging an ink by foams (bubbles) generated by heating the ink, or the. Of these, the piezo method is preferable as it inhibits deterioration of the aqueous ink jet composition.

In the ink adhering step, the aqueous ink jet composition according to the invention may be used in combination with an ink other than the aqueous ink jet composition according to the invention.

### Intermediate transfer medium

The intermediate transfer medium may be, for example, paper such as plain paper or a recording medium provided with an ink receiving layer (referred to as ink jet special paper, coated paper, or the like). Paper provided with an ink receiving layer formed of inorganic fine particles such as silica is a preferable intermediate transfer medium, since, when this is used, bleeding can be suppressed by a process of drying the aqueous ink jet composition which has been adhered to the intermediate transfer medium. In addition, in a subsequent transfer step, sublimation of C.I. Disperse Yellow 54 tends to progress more smoothly.

### Transfer step

In the transfer step, the intermediate transfer medium to which the aqueous ink jet composition has been adhered is heated to transfer to a recording medium C.I. Disperse Yellow 54 as a constituent component of the aqueous ink jet composition. Accordingly, recorded matter is obtained.

The heating temperature in the transfer step is preferably equal to or higher than 160°C and equal to or lower than 220°C, and more preferably equal to or higher than 170°C and equal to or lower than 200°C.

Accordingly, energy required for transfer can be further decreased, and productivity of the recorded matter can be further improved. In addition, color development of the obtained recorded matter can be further improved.

The heating time in the transfer step varies depending on heating temperature. The heating time is preferably equal to or longer than 30 seconds and equal to or shorter than 90 seconds, and more preferably equal to or longer than 45 seconds and equal to or shorter than 80 seconds.

Accordingly, energy required for transfer can be further decreased, and productivity of the recorded matter can be further improved. In addition, color development of the obtained recorded matter can be further improved.

The transfer step may be carried out by heating the surface of the intermediate transfer medium, to which the aqueous ink jet composition has been adhered, where the intermediate transfer medium either faces the recording medium and is spaced from it ata selected distance, or where the intermediate transfer medium in close contact with the surface of the recording medium. Preferably, the transfer step is carried out by heating the surface of the intermediate transfer medium to which the aqueous ink jet composition has been adhered while the intermediate transfer medium is in close contact with the surface of the recording medium.

Accordingly, energy required for transfer can be further decreased, and productivity of the recorded matter can be further improved. In addition, color development of the obtained recorded matter can be further improved.

### Recording medium

There is no particular limitation as to the type of recording medium used and suitable recording media include, for example, cloth (hydrophobic fiber cloth or the like), a resin (plastic) film, paper, glass, metal and ceramics. In addition, an article having a three-dimensional shape such as a sheet shape, a spherical shape or a rectangular parallelepiped shape may be used as the recording medium.

When the recording medium is cloth, the fibers constituting the cloth may be for example, polyester fibers, nylon fibers, triacetate fibers, diacetate fibers, polyamide fibers, a blended product obtained by using two or more types of these fibers, and the like are mentioned. In addition, blended products of the above with recycled fibers such as rayon or natural fibers such as cotton, silk, and wool may be used.

When the recording medium is a resin (plastic) film, the resin film may be, for example, a polyester film, a polyurethane film, a polycarbonate film, a polyphenylene sulfide film, a polyimide film or a polyamideimide film.

The resin (plastic) film may be a stacked body in which a plurality of layers are stacked or or may be composed of a gradient material in which the composition of the material changes in a gradient manner.

Suitable features of the invention have been described as above. However, the invention is not limited thereto.

For example, although the aqueous ink jet composition of the invention is intended for discharge by an ink jet method, it may be used in recording methods which differ from that described above.

For example, the aqueous ink jet composition of the invention may be used in a method having other steps (pre-treatment step, intermediate treatment step, and post-treatment step) in addition to the above-described steps.

A pre-treatment step may comprise, for example, a step of applying a coat layer to the recording medium.

An example of the intermediate treatment step is a step of initially heating the recording medium.

In addition, the post-treatment step may be, for example, a step of washing the recording medium.

### Ink adhering step

In an alternative method, the aqueous ink jet composition of the invention can also be used in sublimation transfer that does not use an intermediate transfer medium. An example of this is a method comprising:
a step of adhering the aqueous ink jet composition by an ink jet method to an ink receiving layer (a film product or the like), wherein the ink receiving layer is peelable and provided on the surface of a recording medium;
a step of directly heating the recording medium provided with the ink receiving layer to which the aqueous ink jet composition has been adhered so as to perform sublimation and diffusion dyeing of the dye in the ink jet composition from the ink receiving layer to the surface of the recording medium beneath the ink receiving layer; and
a step of peeling the ink receiving layer from the recording medium, to obtain a recorded matter.

### Examples

Next, specific examples of the invention will be described.

### [1] Preparation of stock solution (aqueous ink jet composition) for producing ink jet ink

### Example A1

In this example, the styrene maleic acid-based dispersing agent of Formula (1) is a compound in which:
one of R¹ and R² is -H, and the other is -CH₂CH(CH₃)₂; and
the ratio of y:x is 1:1; and
wherein the weight average molecular weight Mw is 13,000),.

First, C.I. Disperse Yellow 54 as a disperse dye, a styrene maleic acid-based dispersing agent of Formula (1) and pure water were mixed in the proportions shown in Table 2 and the mixture was stirred with High Shear Mixer (manufactured by Silverson Machines, Inc.) at 3,000 rpm to produce a slurry. wherein Thereafter, the slurry and glass beads having a diameter of 0.5 mm were stirred and dispersed in a bead mill (LMZ015, Ashizawa Finetech Ltd.) under water cooling, to produce a stock solution for producing an aqueous ink jet ink composition.

The average particle diameter of C.I. Disperse Yellow 54 in the stock solution for producing an ink jet ink was 150 nm.

### Examples A2 to A21

Stock solutions for producing ink jet inks as aqueous ink jet compositions were produced in the same manner as in Example A1, except that chemical structures of the styrene maleic acid-based dispersing agents and blending proportions of the respective components were as shown in Tables 1 and 2.

### Comparative Examples A1 to A9

Stock solutions for producing ink jet inks as aqueous ink jet compositions were produced in the same manner as in Example A1, except that types of the disperse dyes, types of the dispersing agents, and blending proportions of the respective components were as shown in Tables 1 and 2.

Table 1 shows the R¹ and R² groups, the ratio of y:x and the molecular weight for each of dispersing agents SM1 to SM11 and H1 to H5 used for preparing the aqueous ink jet compositions (stock solutions for producing ink jet inks) of the Examples A1 to A21 and Comparative Examples A1 to A9. The compositions of the aqueous ink jet compositions (stock solutions for producing ink jet inks) of these Examples and Comparative Examples are shown in Table 2. In the tables:
C.I. Disperse Yellow 54 is indicated as "DY54";
C.I. Disperse Yellow 33 is indicated as "DY33";
C.I. Disperse Yellow 42 is indicated as "DY42";
"H6" in Table 1 refers to J-67 (manufactured by BASF SE), used as a dispersing agent other than the styrene maleic acid-based dispersing agent; and
"H7" in Table 1 refers to X310 (manufactured by SEIKO PMC CORPORATION), used as a dispersing agent other than the styrene maleic acid-based dispersing agent.
In addition, each of the stock solutions of Examples A1 to A21 had a viscosity which is a value within a range of equal to or greater than 2.0 mPa·s and equal to or less than 30 mPa·s, and surface tension which is a value within a range of equal to or greater than 25 mN/m and equal to or less than 50 mN/m. The viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. The surface tension, measurement was performed by the Wilhelmy method at 20°C using a surface tension meter (CBVP-7, manufactured by Kyowa Interface Science Co., Ltd.).

**Table 1**

| Abbreviation for dispersing agent | Combination of R¹ and R² | Ratio of y:x | MW |
|---|---|---|---|
| SM1 | -H, -CH₂CH(CH₃)₂ | 1 | 13,000 |
| SM2 | -H, -(CH₂CH₂O)₃CH₂CH₃ | 1 | 13,000 |
| SM3 | -H, -(CH₂CH₂O)H | 1 | 13,000 |
| SM4 | -H, -(CH₂CH₂O)₃H | 1 | 13,000 |
| SM5 | -H, -(CH₂CH₂O)₅H | 1 | 13,000 |
| SM6 | -H, -(CH₂CH₂O)₃CH₃ | 1 | 13,000 |
| SM7 | -H, -(CH₂)₃CH₃ | 1 | 13,000 |
| SM8 | -H, (CH₂CH₂O)₂CH₂CH₃ | 1 | 13,000 |
| SM9 | -H, CH₂CH(CH₃)₂ | 1 | 6,000 |
| SM10 | -H, CH₂CH(CH₃)₂ | 1 | 21,000 |
| SM11 | -H, CH₂CH(CH₃)₂ | 0.2 | 13,000 |
| H1 | -H, -H | 1 | 13,000 |
| H2 | -Na, -Na | 1 | 13,000 |
| H3 | -C₂H₅, -C₂H₅ | 1 | 13,000 |
| H4 | -H, CH₂CH(CH₃)₂ | 0.1 | 13,000 |
| H5 | -H, CH₂CH(CH₃)₂ | 1.1 | 13,000 |
| H6 | J-67 (BASF SE) | | 12,500 |
| H7 | X310 (SEIKO PMC CORPORATION) | | 14,000 |

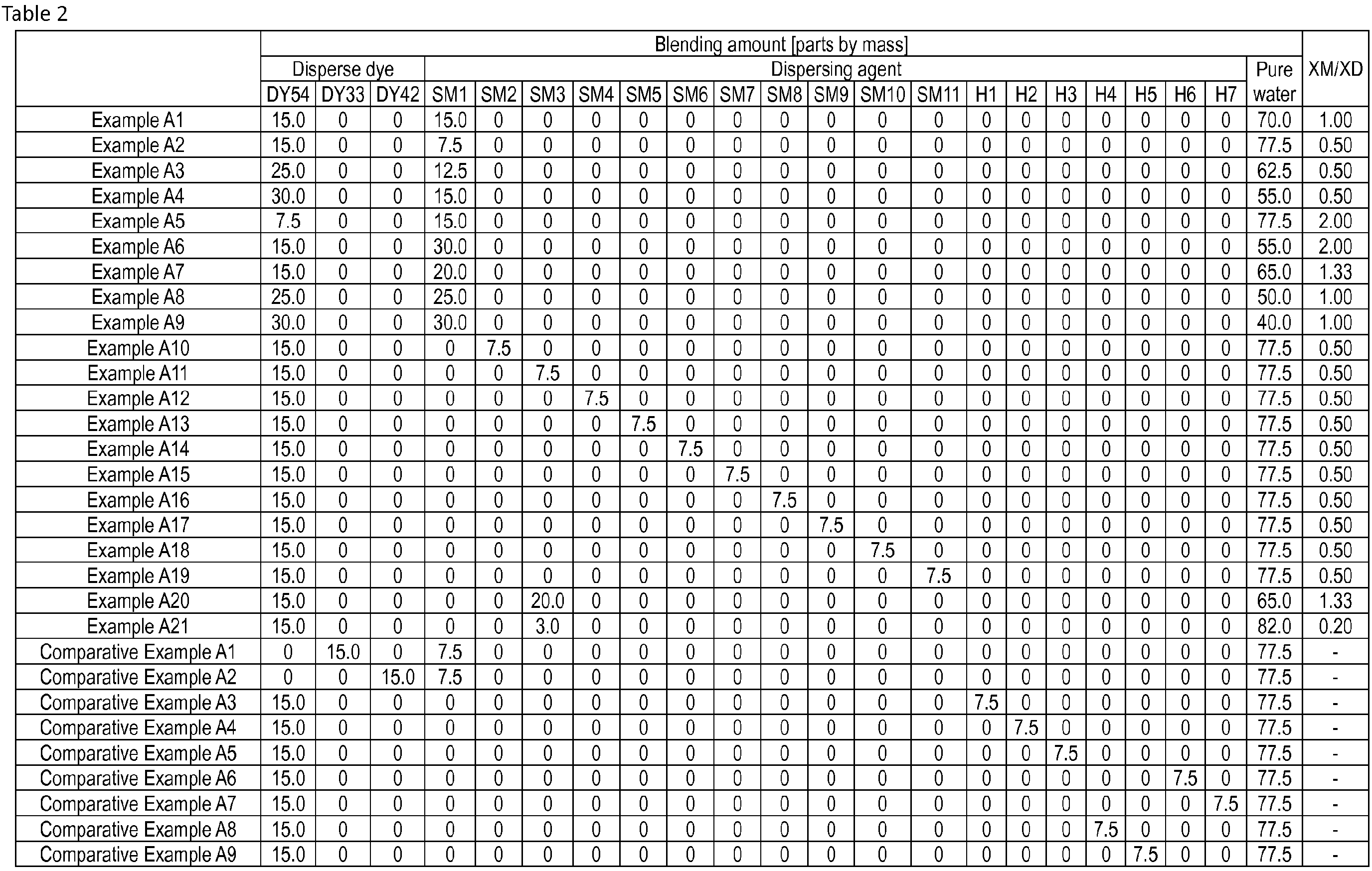

### [2] Evaluation on stock solution for producing ink jet ink

### [2-1] Storage stability (change in particle diameter)

For each of the aqueous ink jet compositions (stock solutions for producing ink jet inks) of Examples A1 to A21 and Comparative Examples A1 to A9, the average particle diameter of the disperse dye immediately after production and the average particle diameter of the disperse dye after storage (i.e. after being placed in a container and left to stand for one week in an environment of 60°C) were obtained. From these values, the variation rate of the average particle diameter of the disperse dye after storage with respect to the average particle diameter of the disperse dye immediately after production was obtained. The evaluation was performed according to the following criteria. For measurement of the average particle diameter, Microtrac UPA (manufactured by Nikkiso CO., LTD.) was used. A larger variation rate of the average particle diameter indicates lower storage stability and the following grading system was used.
A: Variation rate of average particle diameter is less than 2%.
B: Variation rate of average particle diameter is equal to or greater than 2% and less than 5%.
C: Variation rate of average particle diameter is equal to or greater than 5% and less than 10%.
D: Variation rate of average particle diameter is equal to or greater than 10% and less than 15%.
E: Variation rate of average particle diameter is equal to or greater than 15%.

### [2-2] Storage stability (change in viscosity)

For each of the aqueous ink jet compositions (stock solutions for producing ink jet inks) of Examples A1 to A21 and Comparative Examples A1 to A9, a viscosity immediately after production and a viscosity after storage (i.e. after being placed in a container and left to stand for one week in an environment of 60°C) were obtained. From these values, a variation rate of the viscosity after storage with respect to the viscosity immediately after production was obtained. Evaluation was performed according to the following criteria. As a viscosity value, a value obtained using a viscoelasticity tester MCR-300 (manufactured by Physica) by raising Shear Rate from 10 s⁻¹ to 1,000 s⁻¹ at 20°C and reading a viscosity at the time of Shear Rate 200 was adopted. A larger variation rate of the viscosity indicates lower storage stability and the following grading system was used.
A: Variation rate of viscosity is less than 2%.
B: Variation rate of viscosity is equal to or greater than 2% and less than 5%.
C: Variation rate of viscosity is equal to or greater than 5% and less than 10%.
D: Variation rate of viscosity is equal to or greater than 10% and less than 15%.
E: Variation rate of viscosity is equal to or greater than 15%.

### [2-3] Extent of weak flocculation

For each of the aqueous ink jet compositions (stock solutions for producing ink jet inks) of Examples A1 to A21 and Comparative Examples A1 to A9, immediately after production and after storage (i.e. after being placed in a predetermined container and left to stand for one week in an environment of 60°C), the number of particles having a particle diameter of equal to or greater than 0.5 µm and equal to or less than 40.0 µm was measured, at a 100-fold dilution with pure water, using a particle diameter and particle size distribution measuring device (FPIA-3000S, manufactured by Sysmex Corporation) in HPF measurement mode and standard photographing unit. From these values, a variation rate of the number of particles having a particle diameter of equal to or greater than 0.5 µm and equal to or less than 10.0 µm after storage compared with immediately after production C was obtained, and evaluation was performed according to the following criteria. A larger variation rate indicates more formation of weakly-flocculated bodies and the following grading system was used.
A: Variation rate is less than 5%.
B: Variation rate is equal to or greater than 5% and less than 10%.
C: Variation rate is equal to or greater than 10% and less than 30%.
D: Variation rate is equal to or greater than 30% and less than 50%.
E: Variation rate is equal to or greater than 50%.

These results are summarized in Table 3.

**Table 3**

| | Storage stability | | Extent of weak flocculation |
|---|---|---|---|
| | Change in particle diameter | Change in viscosity | |
| Example A1 | A | A | A |
| Example A2 | A | A | A |
| Example A3 | C | C | C |
| Example A4 | D | D | D |
| Example A5 | B | B | C |
| Example A6 | C | C | C |
| Example A7 | C | C | C |
| Example A8 | C | C | C |
| Example A9 | D | D | D |
| Example A10 | B | B | A |
| Example A11 | C | C | C |
| Example A12 | C | C | C |
| Example A13 | B | B | C |
| Example A14 | B | B | B |
| Example A15 | B | B | B |
| Example A16 | B | B | B |
| Example A17 | C | C | C |
| Example A18 | C | C | C |
| Example A19 | C | C | C |
| Example A20 | C | C | C |
| Example A21 | C | C | C |
| Comparative Example A1 | C | E | B |
| Comparative Example A2 | C | E | B |
| Comparative Example A3 | E | E | E |
| Comparative Example A4 | E | E | E |
| Comparative Example A5 | E | E | E |
| Comparative Example A6 | E | E | E |
| Comparative Example A7 | E | E | E |
| Comparative Example A8 | E | E | E |
| Comparative Example A9 | E | E | E |

As is apparent from Table 3, excellent results were obtained in the invention. On the contrary, satisfactory results were not obtained in the Comparative Examples.

### [3] Preparation of ink jet ink (aqueous ink jet composition)

### Example B1

The stock solution of Example A1, glycerin, 2-pyrrolidone, propylene glycol, Olfine EXP4300 (manufactured by Nissin Chemical Industry Co., Ltd.) as an acetylene-based surfactant, and pure water were mixed in the proportions shown in Table 4 and the mixture was stirred with High Shear Mixer (manufactured by Silverson Machines, Inc.) at 3,000 rpm to produce an ink jet ink as an aqueous ink jet composition.

An average particle diameter of C.I. Disperse Yellow 54 in the ink jet ink was 150 nm.

### Examples B2 to B23

Ink jet inks as aqueous ink jet compositions were produced in the same manner as in Example B1, except that the stock solutions and the blending proportions of the respective components were as shown in Tables 4 and 5.

### Comparative Examples B1 to B9

Ink jet inks as aqueous ink jet compositions were produced in the same manner as in Example B1, except that the stock solutions and the blending proportions of the respective components were as shown in Table 5.

Conditions for the aqueous ink jet compositions (ink jet inks) of the Examples B2 to B23 and Comparative Examples B1 to B9 are summarized in Tables 4 and 5. In the tables:
glycerin is indicated as "Gly";
2-pyrrolidone is indicated as "2-Py";
propylene glycol is indicated as "PG";
BYK 348 (manufactured by BYK Chemie Japan) as a silicone-based surfactant is indicated as "BYK 348"; and
Olfine EXP4300 (manufactured by Nissin Chemical Industry Co., Ltd.) as an acetylene-based surfactant is indicated as "EXP 4300".
In addition, each of the ink jet inks of Examples B1 to B23 had a viscosity which is a value within a range of equal to or greater than 2.0 mPa·s and equal to or less than 5.0 mPa·s, and surface tension which is a value within a range of equal to or greater than 20 mN/m and equal to or less than 35 mN/m. Viscosity measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. Surface tension measurement was performed by the Wilhelmy method at 20°C using a surface tension meter (CBVP-7, manufactured by Kyowa Interface Science Co., Ltd.).

**Table 4**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B1 | Example A1 | 20 | 10 | 5 | 5 | 0 | 1 | 59 |
| Example B2 | Example A2 | 20 | 10 | 5 | 5 | 0 | 1 | 59 |
| Example B3 | Example A10 | 20 | 10 | 5 | 5 | 0 | 1 | 59 |
| Example B4 | Example A11 | 20 | 10 | 5 | 5 | 0 | 1 | 59 |
| Example B5 | Example A12 | 20 | 10 | 5 | 5 | 0 | 1 | 59 |
| Example B6 | Example A13 | 20 | 10 | 5 | 5 | 0 | 1 | 59 |
| Example B7 | Example A14 | 20 | 10 | 5 | 5 | 0 | 1 | 59 |
| Example B8 | Example A5 | 0.66 | 15 | 5 | 5 | 0 | 1 | 73.34 |
| Example B9 | Example A5 | 1.33 | 15 | 5 | 5 | 0 | 1 | 72.67 |
| Example B10 | Example A15 | 20 | 10 | 5 | 5 | 0 | 1 | 59 |
| Example B11 | Example A16 | 20 | 10 | 5 | 5 | 0 | 1 | 59 |
| Example B12 | Example A17 | 20 | 10 | 5 | 5 | 0 | 1 | 59 |
| Example B13 | Example A18 | 20 | 10 | 5 | 5 | 0 | 1 | 59 |
| Example B14 | Example A20 | 20 | 10 | 5 | 5 | 0 | 1 | 59 |
| Example B15 | Example A21 | 20 | 10 | 5 | 5 | 0 | 1 | 59 |
| Example B16 | Example A1 | 0.33 | 15 | 5 | 5 | 0 | 1 | 73.67 |
| Example B17 | Example A1 | 0.66 | 15 | 5 | 5 | 0 | 1 | 73.34 |

**Table 5**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B18 | Example A2 | 0.66 | 15 | 5 | 5 | 0 | 1 | 73.34 |
| Example B19 | Example A2 | 1.33 | 15 | 5 | 5 | 0 | 1 | 72.67 |
| Example B20 | Example A2 | 66 | 10 | 5 | 5 | 0 | 1 | 13 |
| Example B21 | Example A1 | 1.33 | 15 | 5 | 5 | 0 | 1 | 72.67 |
| Example B22 | Example A20 | 20 | 5 | 5 | 5 | 0 | 1 | 64 |
| Example B23 | Example A2 | 20 | 10 | 5 | 5 | 1 | 0 | 59 |
| Comparative Example B1 | Comparative Example A1 | 20 | 10 | 5 | 5 | 0 | 1 | 59 |
| Comparative Example B2 | Comparative Example A2 | 20 | 10 | 5 | 5 | 0 | 1 | 59 |
| Comparative Example B3 | Comparative Example A3 | 20 | 10 | 5 | 5 | 0 | 1 | 59 |
| Comparative Example B4 | Comparative Example A4 | 20 | 10 | 5 | 5 | 0 | 1 | 59 |
| Comparative Example B5 | Comparative Example A5 | 20 | 10 | 5 | 5 | 0 | 1 | 59 |
| Comparative Example B6 | Comparative Example A6 | 20 | 10 | 5 | 5 | 0 | 1 | 59 |
| Comparative Example B7 | Comparative Example A7 | 20 | 10 | 5 | 5 | 0 | 1 | 59 |
| Comparative Example B8 | Comparative Example A8 | 20 | 10 | 5 | 5 | 0 | 1 | 59 |
| Comparative Example B9 | Comparative Example A9 | 20 | 10 | 5 | 5 | 0 | 1 | 59 |

### [4] Evaluation on ink jet ink

### [4-1] Storage stability (change in particle diameter)

For each of the aqueous ink jet compositions (ink jet inks) of Examples B1 to B23 and Comparative Examples B1 to B9, the average particle diameter of the disperse dye immediately after production and the average particle diameter of the disperse dye after storage (i.e. after being placed in an ink-holding container and left to stand for one week in an environment of 60°C) were obtained. From these values, a variation rate of the average particle diameter of the disperse dye after storage with respect to the average particle diameter of the disperse dye immediately after production was obtained. Evaluation was performed according to the following criteria. For measurement of the average particle diameter, Microtrac UPA (manufactured by Nikkiso Co., Ltd.) was used. A larger variation rate of the average particle diameter indicates lower storage stability and a larger adverse effect on discharge stability and the following grading system was used.
A: Variation rate of average particle diameter is less than 2%.
B: Variation rate of average particle diameter is equal to or greater than 2% and less than 5%.
C: Variation rate of average particle diameter is equal to or greater than 5% and less than 10%.
D: Variation rate of average particle diameter is equal to or greater than 10% and less than 15%.
E: Variation rate of average particle diameter is equal to or greater than 15%.

### [4-2] Storage stability (change in viscosity)

For each of the aqueous ink jet compositions (ink jet inks) of Examples B1 to B23 and Comparative Examples B1 to B9, the viscosity immediately after production and the viscosity after storage (i.e. after being placed in an ink-holding container and left to stand for one week in an environment of 60°C) were obtained. From these values, the variation rate of the viscosity after storage with respect to the viscosity immediately after production was obtained, and evaluation was performed according to the following criteria. The viscosity value was the value obtained using a viscoelasticity tester MCR-300 (manufactured by Physica) by raising Shear Rate from 10 s⁻¹ to 1,000 s⁻¹ at 20°C and reading a viscosity at the time of Shear Rate 200. A larger variation rate in the viscosity indicates lower storage stability and a larger adverse effect on discharge stability and the following grading system was used.
A: Variation rate of viscosity is less than 2%.
B: Variation rate of viscosity is equal to or greater than 2% and less than 5%.
C: Variation rate of viscosity is equal to or greater than 5% and less than 10%.
D: Variation rate of viscosity is equal to or greater than 10% and less than 15%.
E: Variation rate of viscosity is equal to or greater than 15%.

### [4-3] Extent of weak flocculation

For each of the aqueous ink jet compositions (ink jet inks) of the Examples B1 to B23 and Comparative Examples B1 to B9, immediately after production and after storage (i.e. after being placed in a predetermined ink-holding container and left to stand for one week in an environment of 60°C), the number of particles having a particle diameter of equal to or greater than 0.5 µm and equal to or less than 40.0 µm was measured, at a 100-fold dilution with pure water, using a particle diameter and particle size distribution measuring device (FPIA-3000S, manufactured by Sysmex Corporation) in HPF measurement mode and standard photographing unit. From these values, the variation rate of the number of particles having a particle diameter of equal to or greater than 0.5 µm and equal to or less than 40.0 µm after storage compared with immediately after production was obtained, and evaluation was performed according to the following criteria. A larger variation rate indicates more progression of formation of weakly-flocculated bodies and the following grading system was used.
A: Variation rate is less than 5%.
B: Variation rate is equal to or greater than 5% and less than 10%.
C: Variation rate is equal to or greater than 10% and less than 30%.
D: Variation rate is equal to or greater than 30% and less than 50%.
E: Variation rate is equal to or greater than 50%.

### [4-4] Evaluation on liquid passing (flocculated matters on filter)

An ink cartridge for an ink jet printer (PX-H6000, manufactured by Seiko Epson Corporation) was filled with each of the aqueous ink jet compositions (ink jet inks) of the respective Examples B1 to B23 and Comparative Examples B1 to B9. Then, the ink cartridge was mounted on an ink jet printer (PX-H6000, manufactured by Seiko Epson Corporation) to fill the ink jet printer.

Solid printing was performed on an A4-sized recording medium (plain paper) at 300 sheets/day, and the ink jet printer was allowed to pause for a time when printing was not performed. Replacement (refreshing) of an ink in heads and in ink paths for supplying an ink from an ink cartridge to the head with a new ink by sucking an ink in the head from a nozzle was carried out once a week. After 30 days, the coating rate of a filter member in the head by flocculated material was calculated. A larger coating rate indicates generation of more flocculated material that has an adverse effect on droplet discharge and the following grading system was used.
A: Coating rate of filter member is less than 2%.
B: Coating rate of filter member is equal to or greater than 2% and less than 5%.
C: Coating rate of filter member is equal to or greater than 5% and less than 10%.
D: Coating rate of filter member is equal to or greater than 10% and less than 15%.
E: Coating rate of filter member is equal to or greater than 15%.

### [4-5] Discharge stability by ink jet method

A predetermined ink-holding container was filled with each of the aqueous ink jet compositions (ink jet inks) of the Examples B1 to B23 and Comparative Examples B1 to B9 and was left to stand for 5 days in an environment of 60°C.

Thereafter, the holding container was mounted on a recording apparatus PX-H 6000 (manufactured by Seiko Epson Corporation), and the ink jet ink was discharged so that a solid pattern was adhered to TRANSJET Classic (manufactured by Cham Paper), which is an intermediate transfer medium, at a recording resolution of 1440 × 720 dpi. An operating environment of the recording apparatus (printer) was set at 40°C and 20 RH%.

The number of times of nozzle omission when recording 30 solid patterns on the intermediate transfer medium was examined, and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

### [4-6] Color developing property (OD value)

The side of the thirtieth intermediate transfer medium to which the ink jet ink had been adhered in [4-5] was brought into close contact with cloth (polyester 100%, Amina, manufactured by Toray Industries, Inc.) which is a white recording medium. In this state, sublimation transfer was carried out by heating using a heat press machine (TP-608M, manufactured by Taiyo Seiki Co., Ltd.) at a temperature of 180°C for 60 seconds, so that recorded matter was obtained.

For each recorded matter obtained, evaluation of color development was performed. For each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

These results are summarized in Tables 6 and 7.

**Table 6**

| | Storage stability | | Extent of weak flocculation | Evaluation on liquid passing | Discharge stability | Color developing property |
|---|---|---|---|---|---|---|
| | Change in particle diameter | Change in viscosity | | | | |
| Example B1 | A | A | A | A | A | A |
| Example B2 | A | A | A | A | A | A |
| Example B3 | B | B | A | A | A | A |
| Example B4 | C | C | C | C | A | A |
| Example B5 | C | C | C | C | A | A |
| Example B6 | B | B | C | C | A | A |
| Example B7 | B | B | B | B | A | A |
| Example B8 | C | C | C | C | C | E |
| Example B9 | C | C | C | C | C | E |
| Example B10 | B | B | B | B | A | A |
| Example B11 | B | B | B | B | A | A |
| Example B12 | C | C | C | C | B | A |
| Example B13 | C | C | C | C | D | A |
| Example B14 | C | C | C | C | B | A |
| Example B15 | C | C | C | C | A | A |
| Example B16 | C | C | C | C | C | E |
| Example B17 | C | C | C | C | C | E |

**Table 7**

| | Storage stability | | Extent of weak flocculation | Evaluation on liquid passing | Discharge stability | Color developing property |
|---|---|---|---|---|---|---|
| | Change in particle diameter | Change in viscosity | | | | |
| Example B18 | C | C | C | C | C | E |
| Example B19 | C | C | C | C | C | E |
| Example B20 | C | C | C | C | D | A |
| Example B21 | C | C | C | C | C | E |
| Example B22 | C | C | C | C | A | A |
| Example B23 | B | B | B | B | A | A |
| Comparative Example B1 | C | E | B | B | C | E |
| Comparative Example B2 | C | E | B | B | C | E |
| Comparative Example B3 | E | E | E | E | E | A |
| Comparative Example B4 | E | E | E | E | E | A |
| Comparative Example B5 | E | E | E | E | E | B |
| Comparative Example B6 | E | E | E | E | E | A |
| Comparative Example B7 | E | E | E | E | E | A |
| Comparative Example B8 | E | E | E | E | E | A |
| Comparative Example B9 | E | E | E | E | E | A |

As is apparent from Tables 6 and 7, excellent results were obtained using the ink jet inks of the invention. On the contrary, satisfactory results were not obtained for the Comparative Examples.

Hereinafter, a second suitable embodiment of the invention will be described in detail.

### Aqueous ink jet composition

Among various disperse dyes, C.I. Disperse Yellow 54 has advantageous features, such as excellent color development, while having various disadvantages. For example, when C.I. Disperse Yellow 54 is used as a constituent component of aqueous ink jet compositions in the art, the aqueous ink jet compositions have poor storage stability, which causes a significant problem of clogging of head filters and/or nozzles during discharge by an ink jet method after long-term storage of the aqueous ink jet compositions.

Having made extensive studies of these inks, the present inventor found that the problem appears to be due to weak flocculation of components containing C.I. Disperse Yellow 54.

Therefore, the present inventor has conducted further studies aimed at suppressing generation of weakly-flocculated bodies due to weak flocculation while taking advantage of the excellent characteristics of C.I. Disperse Yellow 54. As a result, the present inventor has reached the invention.

In a further aspect of the invention, there is provided an aqueous ink jet composition comprising:
C.I. Disperse Yellow 54;
a substance A, which is at least one of a compound represented by Formula (2-1), a compound represented by Formula (2-2), an ethylene oxide adduct of tristyrylphenol or a derivative of the ethylene oxide adduct of tristyrylphenol; and
an anionic dispersing agent; 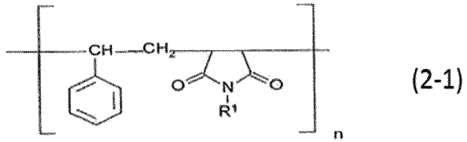
   R¹ is a hydrocarbon group having 1-6 carbon atoms, or
   -(CH₂)ₘ-NR⁸R⁹
      m is an integer of from 1 to 6; and
      R⁸ and R⁹ are each independently a hydrogen atom or a hydrocarbon group 1-6 carbon atoms; and
   n is an integer of equal to or greater than 1; 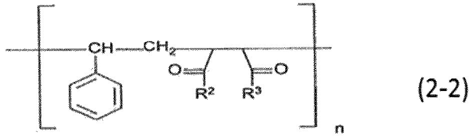 wherein:
      one of R² and R³ is -OH, the other of R² and R³ is -NR⁴R⁵
         R⁴ and R⁵ are each independently a hydrogen atom or a hydrocarbon group having 1-6 carbon atoms; and
      n is an integer of equal to or greater than 1.

An aqueous ink jet composition comprising these components has beneficial effects obtained by the inclusion of C.I. Disperse Yellow 54, for example it has excellent color developing properties in a low-temperature process due to the relatively small molecular weight of the disperse dye, but does not cause significant generation of weakly-flocculated bodies on long-term storage. Therefore there is reduced clogging in a head filter or a nozzle during discharge by an ink jet method even after long-term storage.

On the other hand, satisfactory results cannot be obtained for ink compositions falling outside the scope of the invention.

For example, when the above-mentioned substance A is not used, dispersion stability of C.I. Disperse Yellow 54 in the aqueous ink jet composition cannot be ensured, so that weakly-flocculated bodies are easily generated during long-term storage of the aqueous ink jet composition, or the like.

When the anionic dispersing agent is not used or when another dispersing agent (for example, a nonionic dispersing agent, a cationic dispersing agent) is used in place of the anionic dispersing agent, dispersion stability of C.I. Disperse Yellow 54 in the aqueous ink jet composition cannot be ensured, so that weakly-flocculated bodies are easily generated during long-term storage of the aqueous ink jet composition.

In the present specification a "hydrocarbon group having from 1-6 carbon atoms" refers to a straight or branched alkyl group having 1 to 6 carbon atoms, for example methyl, ethyl, n-propyl, isopropyl, sec-butyl, t-butyl or n-hexyl; or a straight or branched alkenyl group having form 2-6 carbon atoms, for example, ethenyl, propen-1-yl, 3-methyl buten-1-yl and hexen-2-yl; or a straight or branched alkynyl group having form 2-6 carbon atoms, for example, ethynyl, propyn-1-yl, 3-methyl butyn-1-yl and hexyn-2-yl. The term "hydrocarbon group having from 1-4 carbon atoms" is as defined above except that it refers to an alkyl group having from 1 to 4 carbon atoms or an alkenyl or alkynyl group having from 2 to 4 carbon atoms. Other similar terms can be construed similarly.

### Substance A

The aqueous ink jet composition of the invention contains a substance A which is at least one of a compound represented by Formula (2-1), a compound represented by Formula (2-2), an ethylene oxide adduct of tristyrylphenol, and the derivative of the ethylene oxide adduct of tristyrylphenol.

Use of the substance A in combination with C.I. Disperse Yellow 54 and the anionic dispersing agent leads to excellent dispersion stability of C.I. Disperse Yellow 54 in the aqueous ink jet composition and exellent storage stability of the aqueous ink jet composition. Also, there is no significant generation of weakly-flocculated bodies after long-term storage and therefore clogging in a head filter or a nozzle during discharge by an ink jet method, which are due to long-term storage, can be effectively prevented. As a result, the aqueous ink jet composition can be stably disharged for a long period of time and high quality recorded matter obtained by an ink jet method can be consistently produced over a long period. In addition, the substance A is a component which causes no significant adverse effects on the quality of recorded matter or adverse effects in sublimation printing.

Substance A of the aqueous ink jet composition of the invention may comprise one type of compound or plural types of compounds. More specifically, the substance A may be, for example, a mixture of a compound represented by Formula (2-1) and a compound represented by Formula (2-2).

The content of substance A in the aqueous ink jet composition is preferably equal to or greater than 0.13% by mass and equal to or less than 6.0% by mass, more preferably equal to or greater than 0.20% by mass and equal to or less than 4.0% by mass, and even more preferably equal to or greater than 0.50% by mass and equal to or less than 3.0% by mass with respect to the total mass of the aqueous ink jet composition.

Accordingly, storage stability of the aqueous ink jet composition is further improved, and generation of weakly-flocculated bodies during long-term storage or the like is more effectively prevented.

When the aqueous ink jet composition is an ink to be discharged by an ink jet method, the content of substance A in the ink is preferably equal to or greater than 0.13% by mass and equal to or less than 1.0% by mass, more preferably equal to or greater than 0.20% by mass to equal to or less than 0.80% by mass, and even more preferably equal to or greater than 0.50% by mass and equal to or less than 0.50% by mass with respect to the total mass of the ink.

When the aqueous ink jet composition is a stock solution used for preparing an ink to be discharged by an ink jet method, the content of substance A in the stock solution is preferably equal to or greater than 0.5% by mass and equal to or less than 6.0% by mass, more preferably equal to or greater than 1.0% by mass and equal to or less than 4.0% by mass, and even more preferably equal to or greater than 1.3% by mass and equal to or less than 3.0% by mass with respect to the total mass of the stock solution.

When the substance A contained in the aqueous ink jet composition comprises more than one type of compound, the content of substance A refers to the total content of all of these compounds.

### Anionic dispersing agent

The aqueous ink jet composition of the invention comprises an anionic dispersing agent.

The anionic dispersing agent is not particularly limited as long as it can be ionized to form an anion, and is preferably at least one of:
a compound represented by Formula (2-3);
a sodium salt of a naphthalene sulfonic acid formalin condensate; and
lignin sulfonic acid; 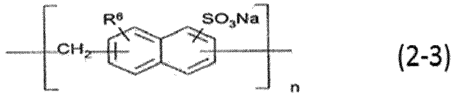
   wherein R⁶ is a hydrocarbon group having 1-4 carbon atoms; and
   n is an integer of equal to or greater than 1.

Accordingly, hydrophobicity of the dispersing agent is improved, and adsorption of the dispersing agent onto C.I. Disperse Yellow 54 is promoted, so that long-term stability of the aqueous ink jet composition is further improved.

R⁶ in Formula (2-3) is a hydrocarbon group having 1-4 carbon atoms. R⁶ is preferably a hydrocarbon group having one or 2 carbon atoms and especially a methyl group or an ethyl group.

Accordingly, it is possible to make more suitable balance between hydrophobicity and hydrophilicity of the anionic dispersing agent, and it is possible to achieve further excellent dispersion stability of C.I. Disperse Yellow 54 in the aqueous ink jet composition.

The weight average molecular weight Mw of the anionic dispersing agent is preferably equal to or greater than 1,000 and equal to or less than 20,000, more preferably equal to or greater than 2,000 and equal to or less than 10,000, and even more preferably equal to or greater than 3,000 and equal to or less than 5,000.

Accordingly, storage stability of the aqueous ink jet composition is further improved, and generation of weakly-flocculated bodies during long-term storage or the like is more effectively prevented.

The aqueous ink jet composition may comprise a single anionic dispersing agentor may contain two or more types thereof.

The content of the anionic dispersing agent in the aqueous ink jet composition is preferably equal to or greater than 0.13% by mass and equal to or less than 25% by mass, more preferably equal to or greater than 0.2% by mass and equal to or less than 15% by mass, and even more preferably equal to or greater than 0.3% by mass and equal to or less than 10% by mass with respect to the total mass of the aqueous ink jet composition.

Accordingly, storage stability of the aqueous ink jet composition is further improved, and generation of weakly-flocculated bodies during long-term storage or the like is more effectively prevented.

When the aqueous ink jet composition is an ink to be discharged by an ink jet method, the content of the anionic dispersing agent in the ink is preferably equal to or greater than 0.13% by mass and equal to or less than 5.0% by mass, more preferably equal to or greater than 0.2% by mass and equal to or less than 4.0% by mass, and even more preferably equal to or greater than 0.3% by mass and equal to or less than 3.0% by mass with respect to the total mass of the ink.

When the aqueous ink jet composition is a stock solution used for preparing an ink to be discharged by an ink jet method, the content of the anionic dispersing agent in the stock solution is preferably equal to or greater than 5.0% by mass and equal to or less than 25% by mass, more preferably equal to or greater than 8.0% by mass and equal to or less than 18% by mass, and even more preferably equal to or greater than 10% by mass and equal to or less than 15% by mass with respect to the total mass of the stock solution.

When the anionic dispersing agent of the aqueous ink jet composition comprises more than one type of of compound, the content of the anionic dispersing agent refers to the total content of all of these compounds.

### C.I. Disperse Yellow 54

The aqueous ink jet composition contains C.I. Disperse Yellow 54 as a disperse dye.

The volume average particle diameter of C.I. Disperse Yellow 54 in the aqueous ink jet composition is preferably as set out above for the previous embodiment of the invention.

Examples of commercially available products of C.I. Disperse Yellow 54 are as set out above for the previous embodiment.

The content of C.I. Disperse Yellow 54 in the aqueous ink jet composition is preferably equal to or greater than 0.25% by mass and equal to or less than 25% by mass, more preferably equal to or greater than 0.5% by mass and equal to or less than 20% by mass, and even more preferably equal to or greater than 2.0% by mass and equal to or less than 15% by mass.

Accordingly, it is possible to obtain a higher color density in a recorded portion formed by using the aqueous ink jet composition, while further improving storage stability of the aqueous ink jet composition and more effectively preventing generation of weakly-flocculated bodies during long-term storage or the like.

When the aqueous ink jet composition is an ink to be discharged by an ink jet method, the content of C.I. Disperse Yellow 54 in the ink is preferably equal to or greater than 0.25% by mass and equal to or less than 10% by mass, more preferably equal to or greater than 0.5% by mass and equal to or less than 8.0% by mass, and even more preferably equal to or greater than 2.0% by mass and equal to or less than 5.0% by mass with respect to the total mass of the ink.

When the aqueous ink jet composition is a stock solution used for preparing an ink to be discharged by an ink jet method, the content of C.I. Disperse Yellow 54 in the stock solution is preferably equal to or greater than 5.0% by mass and equal to or less than 25% by mass, more preferably equal to or greater than 8.0% by mass and equal to or less than 20% by mass, and even more preferably equal to or greater than 10% by mass and equal to or less than 15% by mass, with respect to the total mass of the stock solution.

In the aqueous ink jet composition, when the content of C.I. Disperse Yellow 54 is set as XD [% by mass] and the content of the substance A is set as XA [% by mass], it is preferable that a relationship of 0.03 ≤ XA/XD ≤ 1.0 be satisfied, it is more preferable that a relationship of 0.04 ≤ XA/XD ≤ 0.8 be satisfied, and it is even more preferable that a relationship of 0.05 ≤ XA/XD ≤ 0.7 be satisfied.

Accordingly, storage stability of the aqueous ink jet composition is further improved, and generation of weakly-flocculated bodies during long-term storage or the like is more effectively prevented.

In the aqueous ink jet composition, when the content of C.I. Disperse Yellow 54 is set as XD [% by mass] and the content of the anionic dispersing agent is set as XB [% by mass], it is preferable that a relationship of 0.3 ≤ XB/XD ≤ 1.0 be satisfied, it is more preferable that a relationship 0.4 ≤ XB/XD ≤ 0.9 be satisfied, and it is even more preferable that a relationship of 0.5 ≤ XB/XD ≤ 0.8 be satisfied.

Accordingly, storage stability of the aqueous ink jet composition is further improved, and generation of weakly-flocculated bodies during long-term storage or the like is more effectively prevented.

In the aqueous ink jet composition, when the content of the substance A is set as XA [% by mass] and the content of the anionic dispersing agent is set as XB [% by mass], it is preferable that a relationship of 0.03 ≤ XA/XB ≤ 1.2 be satisfied, it is more preferable that a relationship of 0.1 ≤ XA/XB ≤ 1.0 be satisfied, and it is more preferable that a relationship of 0.2 ≤ XA/XB ≤ 0.5 be satisfied.

Accordingly, storage stability of the aqueous ink jet composition is further improved, and generation of weakly-flocculated bodies during long-term storage or the like is more effectively prevented.

### Water

The aqueous ink jet composition contains water.

The content of water in the aqueous ink jet composition is not particularly limited. The content of water is preferably equal to or greater than 30% by mass and equal to or less than 85% by mass, more preferably equal to or greater than 35% by mass and equal to or less than 80% by mass, and even more preferably equal to or greater than 40% by mass and equal to or less than 75% by mass.

Accordingly, a viscosity of the aqueous ink jet composition can be more reliably adjusted to a suitable value, and discharge stability according to an ink jet method can be further improved.

### Solvent other than water

The aqueous ink jet composition may contain a solvent other than water.

This permits the viscosity of the aqueous ink jet composition to be suitably adjusted, and the moisture retention properties of the aqueous ink jet composition to be increased. As a result, liquid droplet discharge by an ink jet method can be performed in a more stable manner.

Suitable solvents other than water are as described above for the first embodiment and may be, for example, glycerin, propylene glycol, 2-pyrrolidone, and the like.

When the ink composition contains these solvents, a slow evaporation rate is achieved due to an excellent moisture retaining capability, which makes it possible to perform liquid droplet discharge in a more stable manner.

The content of the solvent other than water which is contained in the aqueous ink jet composition is as described above for the first embodiment.

Accordingly, effects obtained by containing the solvent other than water as described above are exerted in a more remarkable manner.

### Surfactant

The aqueous ink jet composition may contain a surfactant.

Accordingly, it is possible to achieve more suitable wettability of the aqueous ink jet composition with respect to a recording medium (base material), which is advantageous for obtaining better image quality.

The surfactant contained in the aqueous ink jet composition may be, for example, various surfactants such as an anionic surfactant, a cationic surfactant or a nonionic surfactant.

More specifically, as the surfactant contained in the aqueous ink jet composition, for example, an acetylene-based surfactant, a silicone-based surfactant or a fluorine-based surfactant.

When the aqueous ink jet composition contains a silicone-based surfactant, it is possible to achieve more suitable wettability of the aqueous ink jet composition with respect to a recording medium (base material), and it is possible to form an image (recorded portion) with further excellent gradation properties.

When the aqueous ink jet composition contains the silicone-based surfactant, the content of the silicone-based surfactant in the aqueous ink jet composition is preferably equal to or greater than 5.0 parts by mass and equal to or less than 150 parts by mass, more preferably equal to or greater than 7.0 parts by mass and equal to or less than 140 parts by mass, and even more preferably equal to or greater than 10 parts by mass and equal to or less than 70 parts by mass, with respect to 100 parts by mass of C.I. Disperse Yellow 54.

Accordingly, effects obtained by containing the silicone-based surfactant as described above are exerted in a more remarkable manner.

Commercially available silicone-based surfactants include, for example, BYK-306, BYK-307, BYK-333, BYK-337, BYK-341, BYK-345, BYK-346, BYK-347, BYK-348, BYK-349, BYK-378 (all trade names, manufactured by BYK Chemie Japan), KF-351A, KF-352A, KF-353, KF-354L, KF-355A, KF-615A, KF-945, KF-640, KF-642, KF-643, KF-6020, X-22-4515, KF-6011, KF-6012, KF-6015, KF-6017 (all trade names, manufactured by Shin-Etsu Chemical Co., Ltd.).

### Other components

The aqueous ink jet composition may contain a component (another component) other than the components as described above.

As the other component, for example, a coloring agent other than C.I. Disperse Yellow 54, a dispersing agent other than Substance A described above, a penetrating agent such as triethylene glycol monomethyl ether, triethylene glycol monobutyl ether, diethylene glycol monomethyl ether, 1,2-hexanediol, 1,2-pentanediol, 1,2-butanediol, and 3-methyl-1,5-pentanediol, a pH adjusting agent, a chelating agent such as ethylenediamine tetraacetate (EDTA), an antiseptic or antifungal agent, an antirust agent, and the like are mentioned. As the antiseptic or antifungal agent, for example, a compound having an isothiazoline ring structure in a molecule can be suitably used.

A content (in a case where plural types of components are contained as the other component, the content is a sum of contents thereof) of the other component is preferably equal to or less than 6% by mass, and more preferably equal to or less than 4% by mass.

In particular, in a case where the aqueous ink jet composition of the invention contains a dispersing agent (another dispersing agent) other than the above-mentioned dispersing agents, a content of the dispersing agent (the other dispersing agent) is preferably equal to or less than 5% by mass, and more preferably equal to or less than 3% by mass.

Preferred values for the surface tension and the viscosity of the aqueous ink jet composition at 20°C are suitably the same as for the first embodiment and may be measured by the same methods.

The aqueous ink jet composition of the invention is usually applied to a recording apparatus in a container such as a cartridge, a bag or a tank. In other words, the recording apparatus according to the invention includes a container (an ink cartridge or the like) for holding the aqueous ink jet composition of the invention.

### Recording method

The aqueous ink jet composition of the invention can be applied, for example, to a direct printing method, a thermal transfer printing method (for example, sublimation printing), and the like, and is particularly suitable for use with a thermal transfer printing method because C.I. Disperse Yellow 54 has sublimability.
A suitable recording method is substantially as described above for the first embodiment and, in particular, details of the Ink adhering step, the Intermediate transfer medium, the Transfer step and the Recording medium are as described above for the first embodiment.

In addition, as described above for the previous embodiment, the aqueous ink jet composition may be applied to a method having other further steps (pre-treatment step, intermediate treatment step, and post-treatment step) in addition to the above-described steps.

For example a pre-treatment step of applying a coat layer to the recording medium, an intermediate treatment step of initially heating the recording medium and a post-treatment step of washing the recording medium.

In addition, the aqueous ink jet composition of the invention can also be suitably applied to sublimation transfer that does not use an intermediate transfer medium as described above for the first embodiment.

### Examples

Next, specific examples of the invention will be described.

### [1] Preparation of stock solution (aqueous ink jet composition) for producing ink jet ink

### Example A2-1

First, C.I. Disperse Yellow 54 as a disperse dye, an ethylene oxide adduct of tristyrylphenol (a substance of Formula (2-4) in which R⁷ is H and the average value of n is 60 (EO60)) as a substance A, a methylnaphthalene sulfonic acid formalin condensate Na (a substance of Formula (2-3) in which R⁶ is -CH₃) as an anionic dispersing agent, and pure water were mixed in the proportions shown in Table 3, and the mixture was stirred with High Shear Mixer (manufactured by Silverson Machines, Inc.) at 3,000 rpm to produce a slurry. Thereafter, the slurry and glass beads having a diameter of 0.5 mm were stirred and dispersed in a bead mill (LMZ015, Ashizawa Finetech Ltd.) under water cooling, so that an aqueous ink jet composition which is a stock solution for producing an ink jet ink as was produced.

The average particle diameter of C.I. Disperse Yellow 54 in the stock solution for producing an ink jet ink was 150 nm.

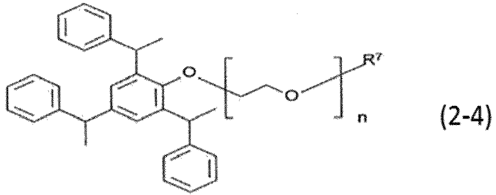

### Examples A2-2 to A2-21

Stock solutions for producing ink jet inks as aqueous ink jet compositions were produced in the same manner as in Example A2-1, except that types of the substance A's and the anionic dispersing agents and blending proportions of the respective components were as shown in Tables 2-1, 2-2, and 2-3.

### Comparative Examples A2-1 to A2-5

Stock solutions for producing ink jet inks as aqueous ink jet compositions were produced in the same manner as in Example A2-1, except that types of the disperse dyes, the substance A's, and the anionic dispersing agents, and blending proportions of the respective components were as shown in Tables 2-1, 2-2, and 2-3.

Table 2-1 shows the general formula and the nature of the substituents in that general formula for each of the substance A's (A-1 to A-5) used for preparing the aqueous ink jet compositions (stock solutions for producing ink jet inks) of Examples A2-1 to A2-21 and Comparative Examples A2-1 to A2-5. Table 2-2 shows the general formula or substance name, the substituents in the general formula and the molecular weight for each of anionic dispersing agents B-1 to B-6 used in Examples A2-1 to A2-21 and Comparative Examples A2-1 to A2-5. Table 2-3 shows the compositions of the aqueous ink jet compositions (stock solutions for producing ink jet inks) of Examples A2-1 to A2-21 and Comparative Examples A2-1 to A2-5. In the tables:
C.I. Disperse Yellow 54 is indicated as "DY54",
C.I. Disperse Yellow 33 is indicated as "DY33",
C.I. Disperse Yellow 42 is indicated as "DY42",
"A1"' isa polycarboxylic acid-based activator (CARRYBON L-400, manufactured by Sanyo Chemical Industries, Ltd.), and
"B1"' is a polyoxyethylene sorbitan fatty acid ester (Sorbon T-40, manufactured by Toho Chemical Industry Co., Ltd.) used as a dispersing agent (a nonionic dispersing agent) other than the anionic dispersing agent. A3, which is the substance A used in Example A2-3, comprises a compound represented by Formula (2-5). In addition, each of the stock solutions for producing ink jet inks of Examples A2-1 to A2-21 had a viscosity which is a value within a range of equal to or greater than 2.0 mPa·s and equal to or less than 30 mPa·s, and surface tension which is a value within a range of equal to or greater than 25 mN/m and equal to or less than 50 mN/m. For the viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 20°C using a surface tension meter (CBVP-7, manufactured by Kyowa Interface Science Co., Ltd.).

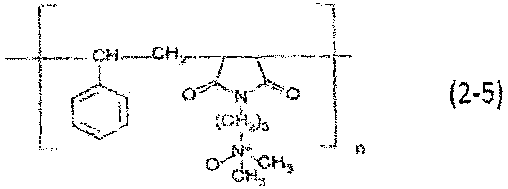

**Table 2-1**

| Abbreviation for substance A | Chemical formula | Condition in formula |
|---|---|---|
| A1 | Formula (2-4) | R⁷ = H (average value of n is 60) |
| A2 | Formula (2-4) | R⁷ = SO₃H |
| A3 | Formula (2-1) (Formula (2-5)) | R¹ = (CH₂)₃N⁺(CH₃)₂O⁻ |
| A4 | Formula (2-2) | One of R ² and R³ is -OH, and the other is -N(CH₂)₃N(CH₃)₂O- |
| A5 | Formula (2-4) | R⁷ = H (average value of n is 20) |

**Table 2-2**

| Abbreviation for anionic dispersing agent | Chemical formula or substance name | Condition in formula | Mw |
|---|---|---|---|
| B1 | Formula (2-3) | R⁶ = CH₃ | 5,000 |
| B2 | Formula (2-3) | R⁶ = CH₂CH₃ | 5,000 |
| B3 | Formula (2-3) | R⁶ = CH₂CH₂CH₃ | 5,000 |
| B4 | Formula (2-3) | R⁶ = CH₂CH₂CH₂CH₃ | 5,000 |
| B5 | Sodium salt of naphthalene sulfonic acid formalin condensate | - | 5,000 |
| B6 | Lignin sulfonic acid | - | 5,000 |

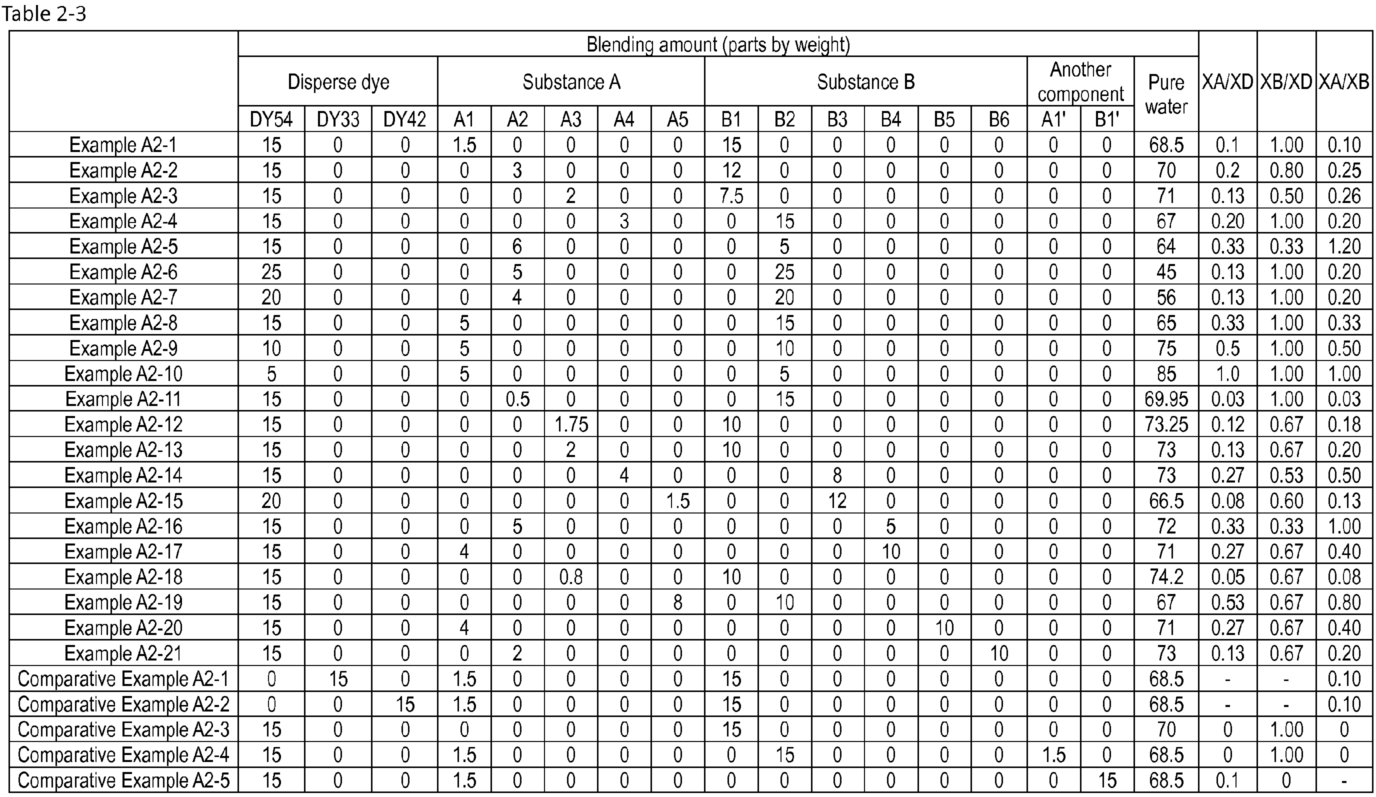

### [2] Evaluation on stock solution for producing ink jet ink

### [2-1] Storage stability (change in particle diameter)

The change in particle diameter of the aqueous ink jet compositions (stock solutions for producing ink jet inks) of Examples A2-1 to A2-21 and Comparative Examples A2-1 to A2-5 was measured using the method described for the first embodiment. The evaluation criteria were as follows:
A: Variation rate of average particle diameter is less than 2%.
B: Variation rate of average particle diameter is equal to or greater than 2% and less than 5%.
C: Variation rate of average particle diameter is equal to or greater than 5% and less than 10%.
D: Variation rate of average particle diameter is equal to or greater than 10% and less than 15%.
E: Variation rate of average particle diameter is equal to or greater than 15%.

### [2-2] Storage stability (change in viscosity)

The change in viscosity for each of Examples A2-1 to A2-21 and Comparative Examples A2-1 to A2-5 was measured using the method set out for the first embodiment. The evaluation criteria were as follows:
A: Variation rate of viscosity is less than 2%.
B: Variation rate of viscosity is equal to or greater than 2% and less than 5%.
C: Variation rate of viscosity is equal to or greater than 5% and less than 10%.
D: Variation rate of viscosity is equal to or greater than 10% and less than 15%.
E: Variation rate of viscosity is equal to or greater than 15%.

### [2-3] Extent of weak flocculation

The extent of weak flocculation of each of the aqueous ink jet compositions (stock solutions for producing ink jet inks) of Examples A2-1 to A2-21 and Comparative Examples A2-1 to A2-5 was measured using the method set out for the first embodiment. The evaluation criteria were as follows:
A: Variation rate is less than 5%.
B: Variation rate is equal to or greater than 5% and less than 10%.
C: Variation rate is equal to or greater than 10% and less than 30%.
D: Variation rate is equal to or greater than 30% and less than 50%.
E: Variation rate is equal to or greater than 50%.

These results are summarized in Table 2-4.

**Table 2-4**

| | Storage stability | | Extent of weak flocculation |
|---|---|---|---|
| | Change in particle diameter | Change in viscosity | |
| Example A2-1 | A | A | A |
| Example A2-2 | A | A | A |
| Example A2-3 | A | A | A |
| Example A2-4 | B | B | B |
| Example A2-5 | D | D | D |
| Example A2-6 | D | D | D |
| Example A2-7 | B | B | B |
| Example A2-8 | A | A | A |
| Example A2-9 | D | D | D |
| Example A2-10 | B | B | A |
| Example A2-11 | C | C | C |
| Example A2-12 | A | A | A |
| Example A2-13 | A | A | A |
| Example A2-14 | B | B | B |
| Example A2-15 | B | B | B |
| Example A2-16 | B | B | B |
| Example A2-17 | C | C | C |
| Example A2-18 | D | D | D |
| Example A2-19 | D | D | D |
| Example A2-20 | D | D | D |
| Example A2-21 | B | B | B |
| Comparative Example A2-1 | E | E | D |
| Comparative Example A2-2 | E | E | E |
| Comparative Example A2-3 | E | E | E |
| Comparative Example A2-4 | E | E | E |
| Comparative Example A2-5 | E | E | E |

As is apparent from Table 2-4, excellent results were obtained using the compositions of the invention. On the contrary, satisfactory results were not obtained in the Comparative Examples.

### [3] Preparation of ink jet ink (aqueous ink jet composition)

### Example B2-1

The stock solution for producing an ink jet ink prepared in Example A2-1, glycerin, 2-pyrrolidone, propylene glycol, BYK 348 (manufactured by BYK Chemie Japan) as a silicone-based surfactant, and pure water were mixed in the proportions shown in Table 2-5, and the mixture was stirred with High Shear Mixer (manufactured by Silverson Machines, Inc.) at 3,000 rpm to produce an ink jet ink as an aqueous ink jet composition.

An average particle diameter of C.I. Disperse Yellow 54 in the ink jet ink was 150 nm.

### Examples B2-2 to B2-19

Ink jet inks as aqueous ink jet compositions were produced in the same manner as in Example B2-1, except that the stock solutions for producing ink jet inks were as shown in Table 2-5 and blending proportions of the respective components were as shown in Table 2-5. Comparative Examples B2-1 to B2-5

Ink jet inks as aqueous ink jet compositions were produced in the same manner as in Example B2-1, except that the stock solutions for producing ink jet inks were as shown in Table 2-5 and blending proportions of the respective components were as shown in Table 2-5.

Conditions for the aqueous ink jet compositions (ink jet inks) of the respective Examples and Comparative Examples are summarized in Table 2-5. In the tables:
glycerin is indicated as "Gly",
2-pyrrolidone is indicated as "2-Py",
propylene glycol is indicated as "PG",
BYK 348 (manufactured by BYK Chemie Japan) as a silicone-based surfactant is indicated as "BYK 348", and
Olfine EXP4300 (manufactured by Nissin Chemical Industry Co., Ltd.) as an acetylene-based surfactant is indicated as "EXP 4300".
In addition, each of the ink jet inks of Examples B1 to B19 had a viscosity which is a value within a range of equal to or greater than 2.0 mPa·s and equal to or less than 5.0 mPa·s, and surface tension which is a value within a range of equal to or greater than 20 mN/m and equal to or less than 35 mN/m. Viscosity measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. Surface tension measurement was performed by the Wilhelmy method at 20°C using a surface tension meter (CBVP-7, manufactured by Kyowa Interface Science Co., Ltd.).

**Table 2-5**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B2-1 | Example A2-1 | 20.0 | 10.00 | 5.00 | 5.00 | 1.00 | 0 | 59.0 |
| Example B2-2 | Example A2-1 | 5.0 | 20.00 | 5.00 | 5.00 | 1.00 | 0 | 64.0 |
| Example B2-3 | Example A2-2 | 20.0 | 10.00 | 5.00 | 5.00 | 1.00 | 0 | 59.0 |
| Example B2-4 | Example A2-3 | 20.0 | 10.00 | 5.00 | 5.00 | 1.00 | 0 | 59.0 |
| Example B2-5 | Example A2-4 | 20.0 | 10.00 | 5.00 | 5.00 | 0 | 1.00 | 59.0 |
| Example B2-6 | Example A2-7 | 20.0 | 10.00 | 5.00 | 5.00 | 1.00 | 0 | 59.0 |
| Example B2-7 | Example A2-8 | 2.5 | 20.00 | 5.00 | 5.00 | 0 | 1.00 | 66.5 |
| Example B2-8 | Example A2-9 | 2.5 | 20.00 | 5.00 | 5.00 | 0 | 1.00 | 66.5 |
| Example B2-9 | Example A2-10 | 2.5 | 20.00 | 5.00 | 5.00 | 0 | 1.00 | 66.5 |
| Example B2-10 | Example A2-12 | 20.0 | 10.00 | 5.00 | 5.00 | 1.00 | 0 | 59.0 |
| Example B2-11 | Example A2-13 | 20.0 | 10.00 | 5.00 | 5.00 | 1.00 | 0 | 59.0 |
| Example B2-12 | Example A2-14 | 20.0 | 10.00 | 5.00 | 5.00 | 0 | 1.00 | 59.0 |
| Example B2-13 | Example A2-15 | 2.5 | 20.00 | 5.00 | 5.00 | 1.00 | 0 | 66.5 |
| Example B2-14 | Example A2-16 | 20.0 | 10.00 | 5.00 | 5.00 | 1.00 | 0 | 59.0 |
| Example B2-15 | Example A2-17 | 20.0 | 10.00 | 5.00 | 5.00 | 1.00 | 0 | 59.0 |
| Example B2-16 | Example A2-18 | 20.0 | 10.00 | 5.00 | 5.00 | 1.00 | 0 | 59.0 |
| Example B2-17 | Example A2-19 | 20.0 | 10.00 | 5.00 | 5.00 | 0 | 1.00 | 59.0 |
| Example B2-18 | Example A2-20 | 20.0 | 10.00 | 5.00 | 5.00 | 1.00 | 0 | 59.0 |
| Example B2-19 | Example A2-21 | 20.0 | 10.00 | 5.00 | 5.00 | 0 | 1.00 | 59.0 |
| Comparative Example B2-1 | Comparative Example A2-1 | 20.0 | 10.00 | 5.00 | 5.00 | 1.00 | 0 | 59.0 |
| Comparative Example B2-2 | Comparative Example A2-2 | 20.0 | 10.00 | 5.00 | 5.00 | 1.00 | 0 | 59.0 |
| Comparative Example B2-3 | Comparative Example A2-3 | 20.0 | 10.00 | 5.00 | 5.00 | 1.00 | 0 | 59.0 |
| Comparative Example B2-4 | Comparative Example A2-4 | 5.0 | 20.00 | 5.00 | 5.00 | 1.00 | 0 | 64.0 |
| Comparative Example B2-5 | Comparative Example A2-5 | 20.0 | 10.00 | 5.00 | 5.00 | 1.00 | 0 | 59.0 |

### [4] Evaluation on ink jet ink

### [4-1] Storage stability (change in particle diameter)

For each of the aqueous ink jet compositions (inkjet inks) of Examples B2-1 to B2-19 and Comparative Examples B2-1 to B2-5, an average particle diameter of the disperse dye immediately after production and an average particle diameter of the disperse dye after storage (i.e. after being placed in an ink-holding container and left to stand for one week in an environment of 60°C) were obtained using the method set out for the first embodiment. Evaluation was performed according to the following criteria
A: Variation rate of average particle diameter is less than 2%.
B: Variation rate of average particle diameter is equal to or greater than 2% and less than 5%.
C: Variation rate of average particle diameter is equal to or greater than 5% and less than 10%.
D: Variation rate of average particle diameter is equal to or greater than 10% and less than 15%.
E: Variation rate of average particle diameter is equal to or greater than 15%.

### [4-2] Storage stability (change in viscosity)

For each of the aqueous ink jet compositions (ink jet inks) of Examples B2-1 to B2-19 and Comparative Examples B2-1 to B2-5, the viscosity immediately after production and the viscosity after storage (i.e. after being placed in an ink-holding container and left to stand for one week in an environment of 60°C) were obtainedusing the method set out for the first embodiment. Evaluation was performed according to the following criteria
A: Variation rate of viscosity is less than 2%.
B: Variation rate of viscosity is equal to or greater than 2% and less than 5%.
C: Variation rate of viscosity is equal to or greater than 5% and less than 10%.
D: Variation rate of viscosity is equal to or greater than 10% and less than 15%.
E: Variation rate of viscosity is equal to or greater than 15%.

### [4-3] Extent of weak flocculation

For each of the aqueous ink jet compositions (ink jet inks) of Examples B2-1 to B2-19 and Comparative Examples B2-1 to B2-5, the extent of weak flocculation was measured using the method set out for the first embodiment. Evaluation was performed according to the following criteria
A: Variation rate is less than 5%.
B: Variation rate is equal to or greater than 5% and less than 10%.
C: Variation rate is equal to or greater than 10% and less than 30%.
D: Variation rate is equal to or greater than 30% and less than 50%.
E: Variation rate is equal to or greater than 50%.

### [4-4] Evaluation on liquid passing (flocculated matters on filter)

An ink cartridge for an ink jet printer (PX-H6000, manufactured by Seiko Epson Corporation) was filled with each of the aqueous ink jet compositions (ink jet inks) of the respective Examples and Comparative Examples. Then, the ink cartridge was mounted on an ink jet printer (PX-H6000, manufactured by Seiko Epson Corporation) to fill the ink jet printer.

Thereafter, solid printing was performed on an A4-sized recording medium (plain paper) at 300 sheets/day, and the ink jet printer was allowed to pause for a time when printing was not performed. In addition, replacing (refreshing) an ink existing in a head and an ink path for supplying an ink from an ink cartridge to the head with a new ink by sucking an ink in the head from a nozzle was carried out once a week. After 30 days, a coating rate of a filter member in the head by flocculated matters was calculated. It can be said that a larger coating rate indicates generation of more flocculated matters that have an adverse effect on droplet discharge.
A: Coating rate of filter member is less than 2%.
B: Coating rate of filter member is equal to or greater than 2% and less than 5%.
C: Coating rate of filter member is equal to or greater than 5% and less than 10%.
D: Coating rate of filter member is equal to or greater than 10% and less than 15%.
E: Coating rate of filter member is equal to or greater than 15%.

### [4-5] Discharge stability by ink jet method

An ink-holding container was filled with each of the aqueous ink jet compositions (ink jet inks) of the respective Examples B2-1 to B2-19 and Comparative Examples B2-1 to B2-5 and was left to stand for 5 days in an environment of 60°C.

Thereafter, the holding container was mounted on a recording apparatus PX-H 6000 (manufactured by Seiko Epson Corporation), and the ink jet ink was discharged so that a solid pattern was adhered on TRANSJET Classic (manufactured by Cham Paper), which is an intermediate transfer medium, at a recording resolution of 1440 × 720 dpi. An operating environment of the recording apparatus (printer) was set at 40°C and 20 RH%.

The number of times of nozzle omission when recording 30 solid patterns on the intermediate transfer medium was examined, and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

### [4-6] Color developing property (OD value)

The adhesion side of the thirtieth intermediate transfer medium to which the ink jet ink had been adhered in [4-5] was brought into close contact with cloth (polyester 100%, Amina, manufactured by Toray Industries, Inc.) which is a white recording medium. In this state, sublimation transfer was carried out by heating using a heat press machine (TP-608M, manufactured by Taiyo Seiki Co., Ltd.) at a condition of 180°C and 60 seconds, so that each recorded matter was obtained.

For each recorded matter obtained, evaluation of color development was performed. For each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

These results are summarized in Table 2-6.

**Table 2-6**

| | Storage stability | | Extent of weak flocculation | Evaluation on liquid passing | Discharge stability | Color developing property |
|---|---|---|---|---|---|---|
| | Change in particle diameter | Change in viscosity | | | | |
| Example B2-1 | A | A | A | A | A | A |
| Example B2-2 | B | C | B | B | C | E |
| Example B2-3 | A | A | A | A | A | A |
| Example B2-4 | A | B | A | A | B | A |
| Example B2-5 | B | B | B | B | B | A |
| Example B2-6 | B | B | B | B | B | A |
| Example B2-7 | C | C | C | C | B | E |
| Example B2-8 | D | D | D | D | D | E |
| Example B2-9 | D | D | D | D | D | E |
| Example B2-10 | A | A | A | A | A | A |
| Example B2-11 | A | A | A | A | A | A |
| Example B2-12 | B | B | B | B | B | A |
| Example B2-13 | C | B | C | C | B | E |
| Example B2-14 | B | B | B | B | B | A |
| Example B2-15 | C | C | C | C | B | A |
| Example B2-16 | D | D | D | D | D | A |
| Example B2-17 | D | D | D | D | D | A |
| Example B2-18 | D | D | D | D | D | A |
| Example B2-19 | D | D | D | D | D | A |
| Comparative Example B2-1 | D | C | D | D | B | E |
| Comparative Example B2-2 | D | D | D | D | B | E |
| Comparative Example B2-3 | E | E | E | E | C | A |
| Comparative Example B2-4 | E | E | E | E | D | E |
| Comparative Example B2-5 | E | E | E | E | C | A |

As is apparent from Table 2-6, excellent results were obtained using the compositions of the invention. On the contrary, satisfactory results were not obtained in the Comparative Examples.

Hereinafter, a third suitable embodiment of the invention will be described in detail.

### Aqueous ink jet composition

Among various disperse dyes, C.I. Disperse Red 60 has advantageous features such as an excellent color development but also has various problems. Thus, when C.I. Disperse Red 60 is used as a constituent component of an aqueous ink jet composition in the related art, the aqueous ink jet composition does not have sufficient storage stability, which causes significant generation of foreign material leading to clogging of head filters and/or nozzles during discharge by an ink jet method after long-term storage of the ink composition.

Therefore, the present inventor has conducted extensive studies aimed at providing an aqueous ink jet composition capable of effectively preventing occurrence of the problems as mentioned above while making full use of the features of C.I. Disperse Red 60.

As a result, the present inventor has reached the invention.

In a further aspect of the invention there is provided an aqueous ink jet composition comprising C.I. Disperse Red 60 and a styrene maleic acid-based dispersing agent represented by Formula (1) as defined above for the first aspect.

An aqueous ink jet composition comprising these components has beneficial effects obtained by the inclusion of C.I. Disperse Red 60, for example it has excellent color development in a low-temperature process due to the relatively small molecular weight of the disperse dye, but does not cause significant generation of foreign material (in particular, crystalline foreign material at a gas-liquid interface) and consequent clogging in head filters and/or a nozzle during discharge by an ink jet method, even after long-term storage.

When the styrene maleic acid-based dispersing agent is not used, or when another dispersing agent is used in place of the styrene maleic acid-based dispersing agent (for example, a dispersing agent other than a styrene maleic acid-based dispersing agent, a dispersing agent which is a styrene maleic acid-based dispersing agent but is other than the styrene maleic acid-based dispersing agent represented by the above formula, or the like), the above-mentioned excellent effects cannot be obtained.

For example, when the dispersing agent is a compound similar to the compounds of Formula (1) except that the ratio of y:x is less than 0.2:1, the maleic acid chain is small relative to a styrene chain, , so that dispersion stability of C.I. Disperse Red 60 in the aqueous ink jet composition cannot be ensured and foreign material is easily generated during long-term storage of the aqueous ink jet composition.

Also, when the dispersing agent is a compound similar to the compounds of Formula (1) except that the ratio of y:x is greater than 1.0:1, the styrene chain is small relative to the maleic acid chain, so that adsorptivity of the dispersing agent onto C.I. Disperse Red 60 is poor, and desorption of the dispersing agent easily occurs. Thus, foreign material is easily generated during long-term storage of the aqueous ink jet composition.

In this embodiment, as with the previous embodiments, an "aqueous ink jet composition" includes not only an ink for discharge in an ink jet method but also a stock solution used for preparing the ink.

### Styrene maleic acid-based dispersing agent

The aqueous ink jet composition of the invention contains a styrene maleic acid-based dispersing agent represented by Formula (1).

Use of the styrene maleic acid-based dispersing agent in combination with C.I. Disperse Red 60 leads to excellent dispersion stability of C.I. Disperse Red 60 in the aqueous ink jet composition and excellent storage stability of the aqueous ink jet composition. Also, there is no significant generation of foreign material after long-term storage and therefore clogging in a head filter or a nozzle during discharge by an ink jet method, which are due to long-term storage, can be effectively prevented. As a result, the aqueous ink jet composition can be stably discharged for a long period of time and high quality recorded matter obtained by an ink jet method can be consistently produced over a long period. In addition, the styrene maleic acid-based dispersing agent is a component which causes no significant adverse effects on quality of the recorded matter or adverse effects in sublimation printing.

As described above, the styrene maleic acid-based dispersing agent may have a counterion constituting a salt. As the counterion, for example, a divalent or higher ion such as an alkaline earth metal ion may be used. The counterion is preferably a monovalent ion.

Examples of monovalent ions are as described above for the aqueous ink jet composition of the first aspect.

As set out above, either or both of R¹ and R² may be -(CH₂CH₂O)ₙR³, where n is an integer of equal to or greater than 1. Preferred values for n are as set out above for the first aspect.

With these values for n, storage stability of the aqueous ink jet composition is further improved, and generation of foreign matters during long-term storage or the like is more effectively prevented.

Preferred values for R¹ and R² are as described above for the first aspect. Thus, is preferable that one be -CH₂CH(CH₃)₂ and the other be -H.

Accordingly, dispersion stability of C.I. Disperse Red 60 in the aqueous ink jet composition and storage stability of the aqueous ink jet composition can be further improved, and significant generation of foreign material and occurrence of clogging in a head filter or a nozzle during discharge by an ink jet method, which are due to long-term storage, can be more effectively prevented. As a result, it is possible to more stably perform discharge of the aqueous ink jet composition for a long period of time, and high quality recorded matter obtained by an ink jet method can be consistently produced over a long period.

In addition, as described above, it is sufficient that a proportion between x and y satisfies a relationship such that when x is 1, y is equal to or greater than 0.2 and equal to or less than 1.0. It is preferable that when x is 1, a value of y be equal to or greater than 0.3:1 and equal to or less than 1.0:1, and more preferably equal to or greater than 0.4:1 and equal to or less than 1.0:1.

This leads to improved dispersion stability of C.I. Disperse Red 60, since the ratio of hydrophilic groups to hydrophobic groups is made more suitable, and long-term stability of the aqueous ink jet composition is further improved.

The weight average molecular weight Mw of the styrene maleic acid-based dispersing agent is not particularly limited. Preferred values for the weight average molecular weight Mw are as set out above for the aqueous ink jet composition of the first aspect.

Accordingly, storage stability of the aqueous ink jet composition is further improved, and generation of foreign material during long-term storage or the like is more effectively prevented.

The aqueous ink jet composition may contain two or more compounds represented by General Formula (1).

The content of the styrene maleic acid-based dispersing agent represented by Formula (1) in the aqueous ink jet composition is preferably equal to or greater than 0.1% by mass and equal to or less than 30% by mass, more preferably equal to or greater than 1.0% by mass and equal to or less than 25% by mass, and even more preferably equal to or greater than 2.0% by mass and equal to or less than 20% by mass.

Accordingly, storage stability of the aqueous ink jet composition is further improved, and generation of foreign matters during long-term storage or the like is more effectively prevented.

In particular, When the aqueous ink jet composition is an ink itself to be discharged by an ink jet method, the content of the styrene maleic acid-based dispersing agent represented by Formula (1) in the ink is preferably equal to or greater than 0.1% by mass and equal to or less than 10% by mass, more preferably equal to or greater than 1.0% by mass and equal to or less than 9.0% by mass, and even more preferably equal to or greater than 2.0% by mass and equal to or less than 8.0% by mass.

When the aqueous ink jet composition is a stock solution used for preparing an ink to be discharged by an ink jet method, the content of the styrene maleic acid-based dispersing agent represented by Formula (1) in the stock solution is preferably equal to or greater than 1.0% by mass and equal to or less than 30% by mass, more preferably equal to or greater than 2.0% by mass and equal to or less than 25% by mass, and even more preferably equal to or greater than 5.0% by mass and equal to or less than 20% by mass.

When the aqueous ink jet composition contains two or more compounds represented by General Formula (1), the "content", refers to the total content of all compounds of General Formula (1).

### C.I. Disperse Red 60

The aqueous ink jet composition contains C.I. Disperse Red 60 as a disperse dye.

The content of C.I. Disperse Red 60 in the aqueous ink jet composition is preferably equal to or greater than 0.1% by mass and equal to or less than 30% by mass, more preferably equal to or greater than 2.0% by mass and equal to or less than 25% by mass, and even more preferably equal to or greater than 5.0% by mass and equal to or less than 20% by mass.

Accordingly, it is possible to obtain a higher color density in a recorded portion formed using the aqueous ink jet composition, while further improving storage stability of the aqueous ink jet composition and more effectively preventing generation of foreign matters during long-term storage or the like.

When the content of C.I. Disperse Red 60 in the aqueous ink jet composition is set as XD [% by mass] and a content of the styrene maleic acid-based dispersing agent is set as XM [% by mass], it is preferable that a relationship of 0.04 ≤ XM/XD ≤ 25 be satisfied, it is more preferable that a relationship of 0.1 ≤ XM/XD ≤ 5.0 be satisfied, and it is even more preferable that a relationship of 0.35 ≤ XM/XD ≤ 1.3 be satisfied.

Accordingly, storage stability of the aqueous ink jet composition is further improved, and generation of foreign matters during long-term storage or the like is more effectively prevented.

The average particle diameter of C.I. Disperse Red 60 in the aqueous ink jet composition is preferably equal to or greater than 50 nm and equal to or less than 300 nm, more preferably equal to or greater than 75 nm and equal to or less than 250 nm or less, and even more preferably equal to or greater than 100 nm and equal to or less than 200 nm.

Accordingly, storage stability of the aqueous ink jet composition is further improved, and generation of foreign material during long-term storage or the like is more effectively prevented. In addition, a recorded portion formed by using the aqueous ink jet composition can be more effectively sublimated, and application to sublimation printing can be more suitably achieved.

In the present specification, the average particle diameter refers to an average particle diameter on a volume basis unless otherwise specified. The average particle diameter can be obtained, for example, by measurement using Microtrac UPA (manufactured by Nikkiso CO., LTD.).

Commercially available products of C.I. Disperse Red 60 include, for example, Plast Red 8375 (manufactured by Arimoto Chemical Co., Ltd.).

### Water

The aqueous ink jet composition contains water.

The content of water in the aqueous ink jet composition is not particularly limited and preferred values for the % by mass of water are as set out for the aqueous ink jet composition of the first aspect.

Water content in these ranges ensures that thea viscosity of the aqueous ink jet composition can be more reliably adjusted to a suitable value, and discharge stability according to an ink jet method can be further improved.

### Solvent other than water

The aqueous ink jet composition may contain a solvent other than water.

Accordingly, a viscosity of the aqueous ink jet composition can be suitably adjusted, and a moisture retaining property of the aqueous ink jet composition can be increased. As a result, liquid droplet discharge by an ink jet method can be performed in a more stable manner.
The solvents other than water and preferred amounts thereof are as set out for the aqueous ink jet composition of the first aspect. Surfactant

The aqueous ink jet composition may contain a surfactant.

Accordingly, it is possible to achieve more suitable wettability of the aqueous ink jet composition with respect to a recording medium (base material), which is advantageous for obtaining better image quality.

The surfactant contained in the aqueous ink jet composition may be, for example, an anionic surfactant, a cationic surfactant or a nonionic surfactant.

More specifically, the surfactant contained in the aqueous ink jet composition may be, for example, an acetylene-based surfactant, a silicone-based surfactant or a fluorine-based surfactant.

When the aqueous ink jet composition contains the acetylene-based surfactant, dynamic surface tension of the aqueous ink jet composition can be suitably decreased, and quick orientation can be made with respect to meniscus. As a result, discharge stability according to an ink jet method can be further improved.

When the aqueous ink jet composition contains the acetylene-based surfactant, the content of the acetylene-based surfactant in the aqueous ink jet composition is preferably equal to or greater than 5.0 parts by mass and equal to or less than 75 parts by mass, more preferably equal to or greater than 6.0 parts by mass and equal to or less than 50 parts by mass, and even more preferably equal to or greater than 7.0 parts by mass and equal to or less than 30 parts by mass, with respect to 100 parts by mass of C.I. Disperse Red 60.

Accordingly, effects obtained by containing the acetylene-based surfactant as described above are exerted in a more remarkable manner.

Suitable commercially available acetylene-based surfactants are as set out above for the first aspect.

### Other components

The aqueous ink jet composition may contain a component (another component) other than the components as described above.

Examples of other components include a coloring agent other than C.I. Disperse Red 60, a dispersing agent other than the styrene maleic acid-based dispersing agent as described above, a penetrating agent such as triethylene glycol monomethyl ether, triethylene glycol monobutyl ether, diethylene glycol monomethyl ether, 1,2-hexanediol, 1,2-pentanediol, 1,2-butanediol, and 3-methyl-1,5-pentanediol, a pH adjusting agent, a chelating agent such as ethylenediamine tetraacetate (EDTA), an antiseptic or antifungal agent, an antirust agent, and the like. The antiseptic or antifungal agent may be, for example, a compound having an isothiazoline ring structure in the molecule.

The content (in a case where plural types of components are contained as the other component, the content is a sum of contents thereof) of the other components is preferably equal to or less than 6% by mass, and more preferably equal to or less than 4% by mass with respect to the total mass of the ink jet composition.

In particular, in a case where the aqueous ink jet composition of the invention contains a dispersing agent (another dispersing agent) other than the styrene maleic acid-based dispersing agent as described above, the content of the dispersing agent (the other dispersing agent) is preferably equal to or less than 5% by mass, and more preferably equal to or less than 3% by mass with respect to the total mass of the ink jet composition.

Preferred values and measurement methods for the surface tension and viscosity of the ink jet ink composition are as set out above for the first aspect.

The aqueous ink jet composition of the invention is usually applied to a recording apparatus by an ink jet method in a container such as a cartridge, a bag or a tank. In other words, the recording apparatus according to the invention includes a container (an ink cartridge or the like) for holding the aqueous ink jet composition of the invention.

It is sufficient that the aqueous ink jet composition of the invention is an ink to be discharged by an ink jet method or a stock solution used for preparing the ink. A specific configuration of an apparatus for carrying out liquid droplet discharge is not limited. It is preferable that the aqueous ink jet composition of the invention be a composition (including a stock solution) which is applied to an open-to-atmosphere type recording apparatus (more specifically, for example, an ink jet recording apparatus which includes an ink-holding container provided with an ink pour that allows refill of an ink and a recording head having a nozzle hole for discharging the ink).

In such a recording apparatus, in a case where an ink containing C.I. Disperse Red 60 is applied thereto, problems have previously occurred in that generation of foreign material (in particular, crystalline foreign material) at the gas-liquid interface is particularly likely to occur due to contact of the ink with the atmosphere. However, according to the invention, even when applied to such a recording apparatus, it is possible to effectively prevent occurrence of this problem. Thus, when the ink jet composition of the present embodiment is used in combination with an open-to-atmosphere type recording apparatus, the effects of the invention are particularly remarkable.

### Recording method

The aqueous ink jet composition of the invention can be applied, for example, to a direct printing method, a thermal transfer printing method (for example, sublimation printing), and the like, and is particularly suitable for use with thermal transfer printing method because that C.I. Disperse Red 60 has sublimability.

A suitable recording method is substantially as described above for the first embodiment and, in particular, details of the Ink adhering step, the Intermediate transfer medium, the Transfer step and the Recording medium are as described above for the first embodiment except that the disperse dye is C.I. Disperse Red 60 rather than C.I. Disperse Yellow 54.

In addition, as described above for the previous embodiments, the aqueous ink jet composition may be applied to a method having other further steps (pre-treatment step, intermediate treatment step, and post-treatment step) in addition to the above-described steps.

For example a pre-treatment step of applying a coat layer to the recording medium, an intermediate treatment step of initially heating the recording medium and a post-treatment step of washing the recording medium.

In addition, the aqueous ink jet composition of the invention can also be suitably applied to sublimation transfer that does not use an intermediate transfer medium as described above for the previous embodiments.

### Examples

Next, specific examples of the invention will be described.

### [1] Preparation of stock solution (aqueous ink jet composition) for producing ink jet ink

### Example A3-1

First, C.I. Disperse Red 60 as a disperse dye, a styrene maleic acid-based dispersing agent represented by Formula (1) (which is a compound of Formula (1) wherein one of R¹ and R² is -H, and the other is -CH₂CH(CH₃)₂, and when the ratio of y:x is 1:1, and having a weight average molecular weight Mw of 13,000), and pure water were mixed in a proportion shown in Table 3-2, and the mixture was stirred with High Shear Mixer (manufactured by Silverson Machines, Inc.) at 3,000 rpm to produce a slurry. Thereafter, the slurry and glass beads having a diameter of 0.5 mm were stirred and dispersed in a bead mill (LMZ015, Ashizawa Finetech Ltd.) under water cooling, so that a stock solution for producing an ink jet ink as an aqueous ink jet composition was produced.

The average particle diameter of C.I. Disperse Red 60 in the stock solution for producing an ink jet ink was 150 nm.

### Examples A3-2 to A3-21

Aqueous inkjet compositions comprising stock solutions for producing ink jet inks were produced in the same manner as in Example A3-1, except that chemical structures of the styrene maleic acid-based dispersing agents and blending proportions of the respective components were as shown in Tables 3-1 and 3-2.

### Comparative Examples A3-1 to A3-9

Stock solutions for producing ink jet inks as aqueous ink jet compositions were produced in the same manner as in Example A3-1, except that types of the disperse dyes, types of the dispersing agents, and blending proportions of the respective components were as shown in Tables 3-1 and 3-2.

Table 1 shows the R¹ and R² groups, the ratio of y:x and the molecular weight for each of dispersing agents SM1 to SM11 and H1 to H5 used for preparing the aqueous ink jet compositions (stock solutions for producing ink jet inks) of the Examples A3-1 to A3-21 and Comparative Examples A3-1 to A3-9. The compositions of the aqueous inkjet compositions (stock solutions for producing ink jet inks) of these Examples and Comparative Examples are shown in Table 3-2. In the tables:
C.I. Disperse Red 60 is indicated as "DR60",
C.I. Disperse Red 153 is indicated as "DR153",
C.I. Disperse Red 167 is indicated as "DR167", "H6" in Table 3-1 referst to J-67 (manufactured by BASF SE) as a dispersing agent other than the styrene maleic acid-based dispersing agent, and
"H7" in Table 3-1 refers to X310 (manufactured by SEIKO PMC CORPORATION) as a dispersing agent other than the styrene maleic acid-based dispersing agent.
In addition, each of the stock solutions for producing ink jet inks of Examples A3-1 to A3-21 had a viscosity which is a value within a range of equal to or greater than 2.0 mPa·s and equal to or less than 30 mPa·s, and surface tension which is a value within a range of equal to or greater than 25 mN/m and equal to or less than 50 mN/m. For the viscosity, measurement was performed at 25°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 25°C using a surface tension meter (CBVP-7, manufactured by Kyowa Interface Science Co., Ltd.).

**Table 3-1**

| Abbreviation for dispersing agent | Combination of R¹ and R² | Value of y when x = 1 | Mw |
|---|---|---|---|
| SM1 | -H, -CH₂CH(CH₃)₂ | 1 | 13,000 |
| SM2 | -H, -(CH₂CH₂O)₃CH₂CH₃ | 1 | 13,000 |
| SM3 | -H, -(CH₂CH₂O)H | 1 | 13,000 |
| SM4 | -H, -(CH₂CH₂O)₃H | 1 | 13,000 |
| SM5 | -H, -(CH₂CH₂O)₅H | 1 | 13,000 |
| SM6 | -H, -(CH₂CH₂O)₃CH₃ | 1 | 13,000 |
| SM7 | -H, -(CH₂)₃CH₃ | 1 | 13,000 |
| SM8 | -H, (CH₂CH₂O)₂CH₂CH₃ | 1 | 13,000 |
| SM9 | -H, CH₂CH(CH₃)₂ | 1 | 6,000 |
| SM10 | -H, CH₂CH(CH₃)₂ | 1 | 21,000 |
| SM11 | -H, CH₂CH(CH₃)₂ | 0.2 | 13,000 |
| H1 | -H, -H | 1 | 13,000 |
| H2 | -Na, -Na | 1 | 13,000 |
| H3 | -C₂H₅, -C₂H₅ | 1 | 13,000 |
| H4 | -H, CH₂CH(CH₃)₂ | 0.1 | 13,000 |
| H5 | -H, CH₂CH(CH₃)₂ | 1.1 | 13,000 |
| H6 | J-67 (BASF SE) | | 12,500 |
| H7 | X310(SEIKO PMC CORPORATION) | | 14,000 |

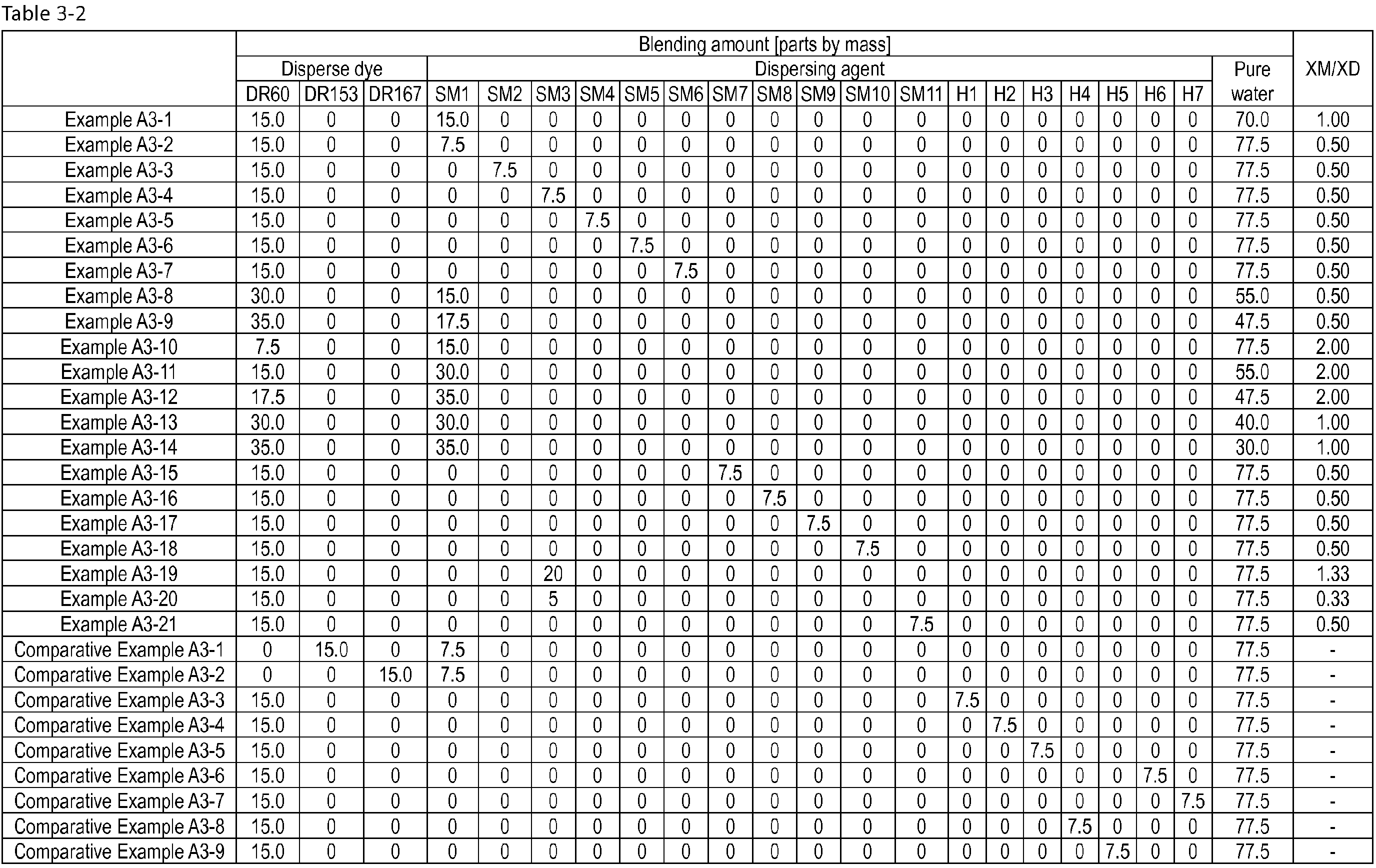

### [2] Evaluation on stock solution for producing ink jet ink

### [2-1] Storage stability (change in particle diameter)

The change in particle diameter for each of the aqueous ink jet compositions (stock solutions) of Examples A3-1 to A3-21 and Comparative Examples A3-1 to A3-9 was measured immediately after production and after being placed in a container and left to stand for one week in an environment of 60°C. The test was as set ouf for the first embodiment.

The following evaluation criteria were used:
A: Variation rate of average particle diameter is less than 3%.
B: Variation rate of average particle diameter is equal to or greater than 3% and less than 5%.
C: Variation rate of average particle diameter is equal to or greater than 5% and less than 7%.
D: Variation rate of average particle diameter is equal to or greater than 7% and less than 10%.
E: Variation rate of average particle diameter is equal to or greater than 10%.

### [2-2] Generation status of foreign matter

Each of the aqueous ink jet compositions (stock solutions for producing ink jet inks) of Examples A3-1 to A3-21 and Comparative Examples A3-1 to A3-9 was placed in a glass bottle of 10 mL volume, and left to stand for 5 days in an environment of 60°C, in a state where a gas-liquid interface is present. Thereafter, the aqueous ink jet composition (stock solution for producing an ink jet ink) was filtered through a metal mesh filter (aperture of 10 µm), and the number of solids remaining on the metal mesh filter per 1 mm square was counted. Evaluation was performed according to the following criteria.
A: Number of solids per 1 mm square is less than 5.
B: Number of solids per 1 mm square is equal to or greater than 5 and less than 20.
C: Number of solids per 1 mm square is equal to or greater than 20 and less than 30.
D: Number of solids per 1 mm square is equal to or greater than 30 and less than 50.
E: Number of solids per 1 mm square is equal to or greater than 50.

These results are summarized in Table 3-3.

**Table 3-3**

| | Storage stability | Generation status of foreign matters |
|---|---|---|
| Example A3-1 | A | A |
| Example A3-2 | A | A |
| Example A3-3 | B | A |
| Example A3-4 | C | C |
| Example A3-5 | C | C |
| Example A3-6 | B | C |
| Example A3-7 | B | B |
| Example A3-8 | C | C |
| Example A3-9 | D | D |
| Example A3-10 | B | D |
| Example A3-11 | C | C |
| Example A3-12 | D | D |
| Example A3-13 | C | D |
| Example A3-14 | D | D |
| Example A3-15 | B | B |
| Example A3-16 | B | B |
| Example A3-17 | C | C |
| Example A3-18 | C | C |
| Example A3-19 | C | C |
| Example A3-20 | C | C |
| Example A3-21 | D | D |
| Comparative Example A3-1 | E | B |
| Comparative Example A3-2 | E | B |
| Comparative Example A3-3 | E | E |
| Comparative Example A3-4 | E | E |
| Comparative Example A3-5 | E | E |
| Comparative Example A3-6 | E | E |
| Comparative Example A3-7 | E | E |
| Comparative Example A3-8 | E | E |
| Comparative Example A3-9 | E | E |

As is apparent from Table 3-3, excellent results were obtained in the ink jet compositions of the invention. On the contrary, satisfactory results were not obtained in the Comparative Examples.

### [3] Preparation of ink jet ink (aqueous ink jet composition)

### Example B3-1

The stock solution for producing an ink jet ink prepared in Example A3-1, glycerin, 2-pyrrolidone, propylene glycol, Olfine EXP4300 (manufactured by Nissin Chemical Industry Co., Ltd.) as an acetylene-based surfactant, and pure water were mixed in the proportions shown in Table 3-4, and the mixture was stirred with High Shear Mixer (manufactured by Silverson Machines, Inc.) at 3,000 rpm to produce an ink jet ink as an aqueous ink jet composition.

the average particle diameter of C.I. Disperse Red 60 in the ink jet ink was 150 nm.

### Examples B3-2 to B3-25

Ink jet inks as aqueous ink jet compositions were produced in the same manner as in Example B3-1, except that the stock solutions for producing the ink jet inks and the blending proportions of the respective components were as shown in Tables 3-4 and 3-5. Comparative Examples B3-1 to B3-9

Ink jet inks as aqueous ink jet compositions were produced in the same manner as in Example B3-1, except that the stock solutions for producing ink jet inks and blending proportions of the respective components were as shown in Table 3-5.

Conditions for the aqueous ink jet compositions (ink jet inks) of the respective Examples and Comparative Examples are summarized in Tables 3-4 and 3-5. In the tables:
glycerin is indicated as "Gly",
2-pyrrolidone is indicated as "2-Py",
propylene glycol is indicated as "PG",
BYK 348 (manufactured by BYK Chemie Japan) as a silicone-based surfactant is indicated as "BYK 348", and
Olfine EXP4300 (manufactured by Nissin Chemical Industry Co., Ltd.) as an acetylene-based surfactant is indicated as "EXP 4300".
In addition, each of the ink jet inks of Examples B1 to B25 had a viscosity which is a value within a range of equal to or greater than 2.0 mPa·s and equal to or less than 10.0 mPa·s, and surface tension which is a value within a range of equal to or greater than 20 mN/m and equal to or less than 35 mN/m. For the viscosity, measurement was performed at 25°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 25°C using a surface tension meter (CBVP-7, manufactured by Kyowa Interface Science Co., Ltd.).

**Table 3-4**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B3-1 | Example A3-1 | 50 | 10 | 5 | 5 | 0 | 1 | 29 |
| Example B3-2 | Example A3-2 | 50 | 10 | 5 | 5 | 0 | 1 | 29 |
| Example B3-3 | Example A3-3 | 50 | 10 | 5 | 5 | 0 | 1 | 29 |
| Example B3-4 | Example A3-4 | 50 | 10 | 5 | 5 | 0 | 1 | 29 |
| Example B3-5 | Example A3-5 | 50 | 10 | 5 | 5 | 0 | 1 | 29 |
| Example B3-6 | Example A3-6 | 50 | 10 | 5 | 5 | 0 | 1 | 29 |
| Example B3-7 | Example A3-7 | 50 | 10 | 5 | 5 | 0 | 1 | 29 |
| Example B3-8 | Example A3-10 | 0.66 | 15 | 5 | 5 | 0 | 1 | 73.34 |
| Example B3-9 | Example A3-10 | 1.33 | 15 | 5 | 5 | 0 | 1 | 72.67 |
| Example B3-10 | Example A3-15 | 50 | 10 | 5 | 5 | 0 | 1 | 29 |
| Example B3-11 | Example A3-16 | 50 | 10 | 5 | 5 | 0 | 1 | 29 |
| Example B3-12 | Example A3-17 | 50 | 10 | 5 | 5 | 0 | 1 | 29 |
| Example B3-13 | Example A3-18 | 50 | 10 | 5 | 5 | 0 | 1 | 29 |
| Example B3-14 | Example A3-19 | 50 | 10 | 5 | 5 | 0 | 1 | 29 |
| Example B3-15 | Example A3-20 | 50 | 10 | 5 | 5 | 0 | 1 | 29 |
| Example B3-16 | Example A3-1 | 0.33 | 15 | 5 | 5 | 0 | 1 | 73.67 |
| Example B3-17 | Example A3-1 | 0.66 | 15 | 5 | 5 | 0 | 1 | 73.34 |
| Example B3-18 | Example A3-2 | 0.66 | 15 | 5 | 5 | 0 | 1 | 73.34 |

**Table 3-5**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B3-19 | Example A3-2 | 1.33 | 15 | 5 | 5 | 0 | 1 | 72.67 |
| Example B3-20 | Example A3-2 | 0.66 | 15 | 5 | 5 | 0 | 1 | 73.34 |
| Example B3-21 | Example A3-2 | 66 | 10 | 5 | 5 | 0 | 1 | 13 |
| Example B3-22 | Example A3-2 | 1.23 | 15 | 5 | 5 | 0 | 1 | 72.77 |
| Example B3-23 | Example A3-19 | 50 | 5 | 5 | 5 | 0 | 1 | 34 |
| Example B3-24 | Example A3-2 | 50 | 10 | 5 | 5 | 1 | 0 | 29 |
| Example B3-25 | Example A3-21 | 50 | 10 | 5 | 5 | 0 | 1 | 29 |
| Comparative Example B3-1 | Comparative Example A3-1 | 50 | 10 | 5 | 5 | 0 | 1 | 29 |
| Comparative Example B3-2 | Comparative Example A3-2 | 50 | 10 | 5 | 5 | 0 | 1 | 29 |
| Comparative Example B3-3 | Comparative Example A3-3 | 50 | 10 | 5 | 5 | 0 | 1 | 29 |
| Comparative Example B3-4 | Comparative Example A3-4 | 50 | 10 | 5 | 5 | 0 | 1 | 29 |
| Comparative Example B3-5 | Comparative Example A3-5 | 50 | 10 | 5 | 5 | 0 | 1 | 29 |
| Comparative Example B3-6 | Comparative Example A3-6 | 50 | 10 | 5 | 5 | 0 | 1 | 29 |
| Comparative Example B3-7 | Comparative Example A3-7 | 50 | 10 | 5 | 5 | 0 | 1 | 29 |
| Comparative Example B3-8 | Comparative Example A3-8 | 50 | 10 | 5 | 5 | 0 | 1 | 29 |
| Comparative Example B3-9 | Comparative Example A3-9 | 50 | 10 | 5 | 5 | 0 | 1 | 29 |

### [4] Evaluation on ink jet ink

### [4-1] Storage stability (change in particle diameter)

The aqueous ink compositions of Examples B3-1 to B3-25 and Comparative Examples B3-1 to B3-9 were tested for change of particle diameter on storage. The test was carried out as set out for the first aspect of the invention and the evaluation criteria were as follows:
A: Variation rate of average particle diameter is less than 3%.
B: Variation rate of average particle diameter is equal to or greater than 3% and less than 5%.
C: Variation rate of average particle diameter is equal to or greater than 5% and less than 7%.
D: Variation rate of average particle diameter is equal to or greater than 7% and less than 10%.
E: Variation rate of average particle diameter is equal to or greater than 10%.

### [4-2] Generation status of foreign material

Each of the aqueous ink jet compositions (stock solutions for producing ink jet inks) of the Examples B3-1 to B3-25 and Comparative Examples B3-1 to B3-9 was placed in a glass bottle of 10 mL in volume, and left to stand for 5 days in an environment of 60°C, in a state where a gas-liquid interface is present. Thereafter, the aqueous ink jet composition (stock solution for producing an ink jet ink) was filtered through a metal mesh filter (aperture of 10 µm), and the number of solids remaining on the metal mesh filter per 1 mm square was counted. Evaluation was performed according to the following criteria.
A: Number of solids per 1 mm square is less than 5.
B: Number of solids per 1 mm square is equal to or greater than 5 and less than 20.
C: Number of solids per 1 mm square is equal to or greater than 20 and less than 30.
D: Number of solids per 1 mm square is equal to or greater than 30 and less than 50.
E: Number of solids per 1 mm square is equal to or greater than 50.

### [4-3] Discharge stability by ink jet method

A predetermined ink-holding container was filled with each of the aqueous ink jet compositions (ink jet inks) Examples B3-1 to B3-25 and Comparative Examples B3-1 to B3-9 and was left to stand for 5 days in an environment of 60°C. The discharge stability was measured using the same test applied to the inks of the first embodiment and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

An ink-holding container (the above-described ink-holding container) which is for printer PX-H 6000 manufactured by Seiko Epson Corporation is provided with an ink pour that allows refill of an aqueous ink jet composition, and is open to the atmosphere when mounted on a recording apparatus in a usable state.

### [4-4] Color developing property (OD value)

The side of the thirtieth intermediate transfer medium to which the ink jet ink had been adhered in [4-3] was brought into close contact with cloth (polyester 100%, Amina, manufactured by Toray Industries, Inc.) which is a white recording medium. In this state, sublimation transfer was carried out by performing heating using a heat press machine (TP-608M, manufactured by Taiyo Seiki Co., Ltd.) at a condition of 180°C and 60 seconds, so that each recorded matter was obtained.

For each recorded matter obtained, evaluation on color developing property was performed. Specifically, for each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

The results for Examples B3-1 to B3-25 and Comparative Examples B3-1 to B3-9 are summarized in Tables 3-6 and 3-7.

**Table 3-6**

| | Storage stability | Generation status of foreign matters | Discharge stability | Color developing property |
|---|---|---|---|---|
| Example B3-1 | A | A | A | A |
| Example B3-2 | A | A | A | A |
| Example B3-3 | B | A | A | A |
| Example B3-4 | C | C | A | A |
| Example B3-5 | C | C | A | A |
| Example B3-6 | B | C | A | A |
| Example B3-7 | B | B | A | A |
| Example B3-8 | D | D | C | E |
| Example B3-9 | D | C | C | E |
| Example B3-10 | B | B | A | A |
| Example B3-11 | B | B | A | A |
| Example B3-12 | C | C | B | A |
| Example B3-13 | C | C | D | A |
| Example B3-14 | C | C | A | A |
| Example B3-15 | C | C | A | A |
| Example B3-16 | D | D | C | E |
| Example B3-17 | D | D | C | E |
| Example B3-18 | D | D | C | E |

**Table 3-7**

| | Storage stability | Generation status of foreign matters | Discharge stability | Color developing property |
|---|---|---|---|---|
| Example B3-19 | C | D | C | E |
| Example B3-20 | C | C | C | E |
| Example B3-21 | C | C | D | A |
| Example B3-22 | C | C | C | E |
| Example B3-23 | C | C | A | A |
| Example B3-24 | B | B | A | A |
| Example B3-25 | D | D | A | A |
| Comparative Example B3-1 | E | B | A | E |
| Comparative Example B3-2 | E | B | A | E |
| Comparative Example B3-3 | E | E | A | A |
| Comparative Example B3-4 | E | E | A | A |
| Comparative Example B3-5 | E | E | A | A |
| Comparative Example B3-6 | E | E | E | A |
| Comparative Example B3-7 | E | E | E | A |
| Comparative Example B3-8 | E | E | E | A |
| Comparative Example B3-9 | E | E | E | A |

As is apparent from Tables 3-6 and 3-7, excellent results were obtained with the compositions of the invention. On the contrary, satisfactory results were not obtained in the Comparative Examples.

Hereinafter, a fourth suitable embodiment of the invention will be described in detail.

### Aqueous ink jet composition

Among various disperse dyes, C.I. Disperse Red 60 has advantageous features such as an excellent color development but also has certain problems. When C.I. Disperse Red 60 has been used as a constituent component of an aqueous ink jet composition in the related art, the aqueous ink jet composition does not have sufficient storage stability, which causes significant generation of foreign material leading to clogging of head filters and/or nozzles during discharge by an ink jet method after long-term storage of the ink composition.

Therefore, the present inventor has conducted extensive studies aimed at providing an aqueous ink jet composition capable of effectively preventing occurrence of the problems as mentioned above while making full use of the features of C.I. Disperse Red 60.

As a result, the present inventor has reached the invention.

In a fourth aspect of the invention there is provided an aqueous ink jet composition comprising:
C.I. Disperse Red 60,
a substance A which is at least one of a compound represented by Formula (2-1) as defined above, a compound represented by Formula (2-2)as defined above, an ethylene oxide adduct of tristyrylphenol, and a derivative of the ethylene oxide adduct of tristyrylphenol, and
an anionic dispersing agent.

With such a composition, it is possible to provide an aqueous ink jet composition which has the advantageous effects obtained by the inclusion of the disperse dye C.I. Disperse Red 60, for example excellent color development in a low-temperature process due to its relatively low molecular weight, while not causing significant generation of foreign matter (in particular, crystalline foreign matters at a gas-liquid interface) or clogging in a head filter or a nozzle during discharge by an ink jet method, even after long-term storage.

On the other hand, when the above conditions are not satisfied, satisfactory results cannot be obtained.

For example, in a case where the above-mentioned substance A is not used, dispersion stability of C.I. Disperse Red 60 in the aqueous ink jet composition cannot be ensured, so that foreign matter is easily generated during long-term storage of the aqueous ink jet composition.

In addition, when the anionic dispersing agent is not used or when another dispersing agent (for example, a nonionic dispersing agent, a cationic dispersing agent, or the like) is used in place of the anionic dispersing agent, dispersion stability of C.I. Disperse Red 60 in the aqueous ink jet composition cannot be ensured, so that foreign matter is easily generated during long-term storage of the aqueous ink jet composition.

As with previous embodiments, an "aqueous ink jet composition" includes not only an ink for discharge in an ink jet method but also a stock solution used for preparing the ink.

### Substance A

The aqueous ink jet composition of the invention contains a substance A which is at least one type of compound selected from the group consisting of a compound represented by Formula (2-1), a compound represented by Formula (2-2), an ethylene oxide adduct of tristyrylphenol, and the derivative of the ethylene oxide adduct of tristyrylphenol.

By using the substance A in combination with C.I. Disperse Red 60 and the anionic dispersing agent, the dispersion stability of C.I. Disperse Red 60 in the aqueous ink jet composition and storage stability of the aqueous ink jet composition can be improved, and significant generation of foreign matters and occurrence of clogging in a head filter or a nozzle during discharge by an ink jet method, which are due to long-term storage, can be effectively prevented. As a result, the aqueous ink jet composition can be stably discharged for a long period of time and high quality recorded matter obtained by an ink jet method can be consistently produced over a long period. In addition, the substance A is a component which causes no significant adverse effects on the quality of recorded matter or in sublimation printing.

For the substance A, the aqueous ink jet composition of the invention may contain one type of compound or may contain plural types of compounds. More specifically, the substance A may be, for example, a mixture of the compound represented by Formula (2-1) and the compound represented by Formula (2-2).

A content of the substance A in the aqueous ink jet composition is preferably equal to or greater than 0.05% by mass and equal to or less than 8.0% by mass, more preferably equal to or greater than 0.07% by mass and equal to or less than 6.0% by mass, and even more preferably equal to or greater than 0.08% by mass and equal to or less than 5.0% by mass.

Accordingly, storage stability of the aqueous ink jet composition is further improved, and generation of foreign matter during long-term storage or the like is more effectively prevented.

When the aqueous ink jet composition is an ink to be discharged by an ink jet method, the content of substance A in the ink is preferably equal to or greater than 0.05% by mass and equal to or less than 4.5% by mass, more preferably equal to or greater than 0.07% by mass and equal to or less than 3.0% by mass, and even more preferably equal to or greater than 0.08% by mass and equal to or less than 2.0% by mass.

When the aqueous ink jet composition is a stock solution used for preparing an ink to be discharged by an ink jet method, the content of substance A in the stock solution is preferably equal to or greater than 0.5% by mass and equal to or less than 8.0% by mass, more preferably equal to or greater than 0.75% by mass and equal to or less than 6.0% by mass, and even more preferably equal to or greater than 1.0% by mass and equal to or less than 5.0% by mass.

When the substance A contained in the aqueous ink jet composition comprises more than one type of compound, the content of substance A refers to the total content of all of these compounds.

### Anionic dispersing agent

The aqueous ink jet composition of the invention contains an anionic dispersing agent.

The anionic dispersing agent is not particularly limited as long as it can be ionized to form an anion, and it is preferably at least one of:
a compound represented by Formula (2-3) as defined above,
a sodium salt of a naphthalene sulfonic acid formalin condensate, and
lignin sulfonic acid.

Accordingly, hydrophobicity of the dispersing agent is improved, and adsorption of the dispersing agent onto C.I. Disperse Red 60 is promoted, so that long-term stability of the aqueous ink jet composition is further improved.

R⁶ in Formula (2-3) is a hydrocarbon group having 1-4 carbon atoms. R⁶ is preferably a hydrocarbon group having one or 2 carbon atoms and especially a methyl group or an ethyl group.

Accordingly, it is possible to make more suitable balance between hydrophobicity and hydrophilicity of the anionic dispersing agent, and it is possible to achieve further excellent dispersion stability of C.I. Disperse Red 60 in the aqueous ink jet composition.

The weight average molecular weight Mw of the anionic dispersing agent is preferably equal to or greater than 1,000 and equal to or less than 20,000, more preferably equal to or greater than 2,000 and equal to or less than 10,000, and even more preferably equal to or greater than 3,000 and equal to or less than 5,000.

Accordingly, storage stability of the aqueous ink jet composition is further improved, and generation of foreign matters during long-term storage or the like is more effectively prevented.

The aqueous ink jet composition may comprise a single anionic dispersing agentor may contain two or more types thereof.

The content of the anionic dispersing agent in the aqueous ink jet composition is preferably equal to or greater than 0.1% by mass and equal to or less than 30% by mass, more preferably equal to or greater than 0.2% by mass and equal to or less than 25% by mass, and even more preferably equal to or greater than 0.3% by mass and equal to or less than 20% by mass with respect to the total mass of the aqueous ink jet composition.

Accordingly, storage stability of the aqueous ink jet composition is further improved, and generation of foreign matter during long-term storage is more effectively prevented.

When the aqueous ink jet composition is an ink to be discharged by an ink jet method, the content of the anionic dispersing agent in the ink is preferably equal to or greater than 0.1% by mass and equal to or less than 20% by mass, more preferably equal to or greater than 0.2% by mass and equal to or less than 15% by mass, and even more preferably equal to or greater than 0.3% by mass and equal to or less than 10% by mass.

When the aqueous ink jet composition is a stock solution used for preparing an ink to be discharged by an ink jet method, the content of the anionic dispersing agent in the stock solution is preferably equal to or greater than 5.0% by mass and equal to or less than 30% by mass, more preferably equal to or greater than 8.0% by mass and equal to or less than 25% by mass, and even more preferably equal to or greater than 12% by mass and equal to or less than 20% by mass.

When the anionic dispersing agent of the aqueous ink jet composition comprises more than one type of compound, the content of the anionic dispersing agent refers to the total content of all of these compounds.

### C.I. Disperse Red 60

The aqueous ink jet composition contains C.I. Disperse Red 60 as a disperse dye.

The average particle diameter of C.I. Disperse Red 60, the content of C.I. Disperse Red 60 and commercially available products of C.I. Disperse Red 60 are as described above for the third embodiment.

When the content of C.I. Disperse Red 60 in the aqueous ink jet composition is set as XD [% by mass] and the content of substance A is set as XA [% by mass], it is preferable that a relationship of 0.002 ≤ XA/XD ≤ 1.5 be satisfied, it is more preferable that a relationship of 0.03 ≤ XA/XD ≤ 0.8 be satisfied, and it is even more preferable that a relationship of 0.05 ≤ XA/XD ≤ 0.5 be satisfied.

Accordingly, storage stability of the aqueous ink jet composition is further improved, and generation of foreign matters during long-term storage or the like is more effectively prevented.

When the content of C.I. Disperse Red 60 in the aqueous ink jet composition is set as XD [% by mass] and the content of the anionic dispersing agent is set as XB [% by mass], it is preferable that a relationship of 0.4 ≤ XB/XD ≤ 2.0 be satisfied, it is more preferable that a relationship of 0.5 ≤ XB/XD ≤ 1.5 be satisfied, and it is even more preferable that a relationship of 0.6 ≤ XB/XD ≤ 1.2 be satisfied.

Accordingly, storage stability of the aqueous ink jet composition is further improved, and generation of foreign matters during long-term storage or the like is more effectively prevented.

When the content of substance A in the aqueous ink jet composition is set as XA [% by mass] and the content of the anionic dispersing agent is set as XB [% by mass], it is preferable that a relationship of 0.002 ≤ XA/XB ≤ 1.5 be satisfied, it is more preferable that a relationship of 0.03 ≤ XA/XB ≤ 0.8 be satisfied, and it is more preferable that a relationship of 0.05 ≤ XA/XB ≤ 0.5 be satisfied.

Accordingly, storage stability of the aqueous ink jet composition is further improved, and generation of foreign matters during long-term storage or the like is more effectively prevented.

### Water

The aqueous ink jet composition contains water.

The content of water in the aqueous ink jet composition is not particularly limited and is suitably as set out above for the first embodiment of the invention.

### Solvent other than water

The aqueous ink jet composition may contain a solvent other than water.

Accordingly, a viscosity of the aqueous ink jet composition can be suitably adjusted, and a moisture retaining property of the aqueous ink jet composition can be increased. As a result, liquid droplet discharge by an ink jet method can be performed in a more stable manner.

Suitable solvents other than water and the content of these solvents in the aqueous ink jet composition are as set out above for the first embodiment, as are the advantages of including these solvents in the composition.

### Surfactant

The aqueous ink jet composition may contain a surfactant as described above for the previous embodiments.

When the aqueous ink jet composition contains a silicone-based surfactant, it is possible to achieve more suitable wettability of the aqueous ink jet composition with respect to a recording medium (base material), and it is possible to form an image (recorded portion) with further excellent gradation properties.

When the aqueous ink jet composition contains the silicone-based surfactant, the content of the silicone-based surfactant in the aqueous ink jet composition is preferably equal to or greater than 5.0 parts by mass and equal to or les+s than 150 parts by mass, more preferably equal to or greater than 7.0 parts by mass and equal to or less than 140 parts by mass, and even more preferably equal to or greater than 10 parts by mass and equal to or less than 70 parts by mass, with respect to 100 parts by mass of C.I. Disperse Red 60.

Accordingly, effects obtained by containing the silicone-based surfactant as described above are exerted in a more remarkable manner.

Commercially available silicone-based surfactants are as described above for the second embodiment of the invention.

### Other components

The aqueous ink jet composition may contain a component (another component) other than the components as described above.

As the other component, for example, a coloring agent other than C.I. Disperse Red 60, a dispersing agent other Substance A described above, a penetrating agent such as triethylene glycol monomethyl ether, triethylene glycol monobutyl ether, diethylene glycol monomethyl ether, 1,2-hexanediol, 1,2-pentanediol, 1,2-butanediol, and 3-methyl-1,5-pentanediol, a pH adjusting agent, a chelating agent such as ethylenediamine tetraacetate (EDTA), an antiseptic or antifungal agent, an antirust agent, and the like are mentioned. As the antiseptic or antifungal agent, for example, a compound having an isothiazoline ring structure in a molecule can be suitably used.

A content (in a case where plural types of components are contained as the other component, the content is a sum of contents thereof) of the other component is preferably equal to or less than 6% by mass, and more preferably equal to or less than 5% by mass.

In particular, in a case where the aqueous ink jet composition of the invention contains a dispersing agent (another dispersing agent) other than the above-mentioned dispersing agents, a content of the dispersing agent (the other dispersing agent) is preferably equal to or less than 5% by mass, and more preferably equal to or less than 3% by mass.

The surface tension of the aqueous ink jet composition at 25°C and the viscosity of the aqueous ink jet composition at 25°C are suitably as described above for the first embodiment and can be measured in the same ways.

The aqueous ink jet composition of the invention is usually applied to a recording apparatus by an ink jet method in a state of being held in a container such as a cartridge, a bag, or a tank. In other words, the recording apparatus according to the invention includes a container (an ink cartridge or the like) for holding the aqueous ink jet composition of the invention.

It is sufficient that the aqueous ink jet composition of the invention is an ink to be discharged by an ink jet method or a stock solution used for preparing the ink. A specific configuration of an apparatus for carrying out liquid droplet discharge is not limited. It is preferable that the aqueous ink jet composition of the invention be a composition (including a stock solution) which is applied to an open-to-atmosphere type recording apparatus (more specifically, for example, an ink jet recording apparatus which includes an ink-holding container provided with an ink pour that allows refill of an ink and a recording head having a nozzle hole for discharging the ink).

In such a recording apparatus, in a case where an ink containing C.I. Disperse Red 60 is applied thereto, there is a problem that generation of foreign matters (in particular, crystalline foreign matters) at the gas-liquid interface is particularly likely to occur due to contact of the ink with the atmosphere. However, according to the invention, even in a case of being applied to such a recording apparatus, it is possible to effectively prevent occurrence of such a problem. That is, in a case of being applied to an open-to-atmosphere type recording apparatus, effects of the invention are exerted in a more remarkable manner.

### Recording method

The aqueous ink jet composition of the invention is suitable for use in a direct printing method, a thermal transfer printing method (for example, sublimation printing), and the like, and is particularly suitable for use with a thermal transfer printing method because C.I. Disperse Red 60 has sublimability.

As a recording method using the aqueous ink jet composition of the invention, an example of the thermal transfer printing method (sublimation printing) will be described below.

A suitable recording method is substantially as described above for the first embodiment except that the pigment is C.I. Disperse Red 60 and, in particular, details of the Ink adhering step, the Intermediate transfer medium, the Transfer step and the Recording medium are as described above for the first embodiment.

In addition, as described above for the first embodiment, the aqueous ink jet composition may be applied to a method having other further steps (pre-treatment step, intermediate treatment step, and post-treatment step) in addition to the above-described steps.

For example a pre-treatment step of applying a coat layer to the recording medium, an intermediate treatment step of initially heating the recording medium and a post-treatment step of washing the recording medium.

In addition, the aqueous ink jet composition of the invention can also be suitably applied to sublimation transfer that does not use an intermediate transfer medium as described above for the first embodiment.

### Examples

Next, specific examples of the invention will be described.

### [1] Preparation of stock solution (aqueous ink jet composition) for producing ink jet ink

### Example A4-1

First, C.I. Disperse Red 60 as a disperse dye, an ethylene oxide adduct of tristyrylphenol (a substance of Formula (2-4) in which R⁷ is H) as a substance A, a methylnaphthalene sulfonic acid formalin condensate Na (a substance of Formula (2-3) in which R⁶ is -CH₃) as an anionic dispersing agent, and pure water were mixed in the proportions shown in Table 4-3, and the mixture was stirred with High Shear Mixer (manufactured by Silverson Machines, Inc.) at 3,000 rpm to produce a slurry. Thereafter, the slurry and glass beads having a diameter of 0.5 mm were stirred and dispersed in a bead mill (LMZ015, Ashizawa Finetech Ltd.) under water cooling, so that a stock solution for producing an ink jet ink as an aqueous ink jet composition was produced.

The average particle diameter of C.I. Disperse Red 60 in the stock solution for producing an ink jet ink was 150 nm.

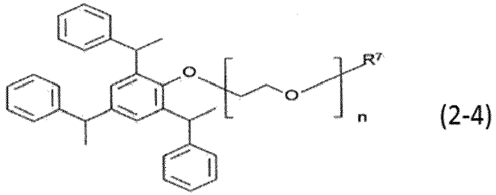

### Examples A4-2 to A4-21

Stock solutions for producing ink jet inks as aqueous ink jet compositions were produced in the same manner as in Example A4-1, except that types of the substance A's and the anionic dispersing agents, and the proportions of the respective components were as shown in Tables 4-1, 4-2, 4-3, and 4-4.

### Comparative Examples A4-1 to A4-6

Stock solutions for producing ink jet inks as aqueous ink jet compositions were produced in the same manner as in Example A4-1, except that types of the disperse dyes, the substance A's, and the anionic dispersing agents, and blending proportions of the respective components were as shown in Tables 4-1, 4-2, and 4-4.

Table 4-1 shows the general formula and the nature of the substituents in that general formula for each of the substance A's (A-1 to A-4) used for preparing the aqueous ink jet compositions (stock solutions for producing ink jet inks) of Examples A4-1 to A4-21 and Comparative Examples A4-1 to A4-6. Table 4-2 shows the general formula or substance name, the substituents in the general formula and the molecular weight for each of anionic dispersing agents B-1 to B-6 used in Examples Examples A4-1 to A4-21 and Comparative Examples A4-1 to A4-6. Tables 4-3 and 4-4 show the compositions of the aqueous ink jet compositions (stock solutions for producing ink jet inks) of Examples A4-1 to A4-21 and Comparative Examples A4-1 to A4-6and 4-4. In the tables:
C.I. Disperse Red 60 is indicated as "DR60",
C.I. Disperse Red 153 is indicated as "DR153",
C.I. Disperse Red 167 is indicated as "DR167",
"A1'" is a polycarboxylic acid-based activator (CARRYBON L-400, manufactured by Sanyo Chemical Industries, Ltd.) and
"B1"' is a polyoxyethylene sorbitan fatty acid ester (Sorbon T-40, manufactured by Toho Chemical Industry Co., Ltd.) used as a dispersing agent (a nonionic dispersing agent) other than the anionic dispersing agent.
A3 as the substance A used in Example A4-3 etc is represented by Formula (2-5). In addition, each of the stock solutions for producing ink jet inks of Examples A1 to A21 had a viscosity which is a value within a range of equal to or greater than 2.0 mPa·s and equal to or less than 30 mPa·s, and surface tension which is a value within a range of equal to or greater than 25 mN/m and equal to or less than 60 mN/m. For the viscosity, measurement was performed at 25°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 25°C using a surface tension meter (CBVP-7, manufactured by Kyowa Interface Science Co., Ltd.).

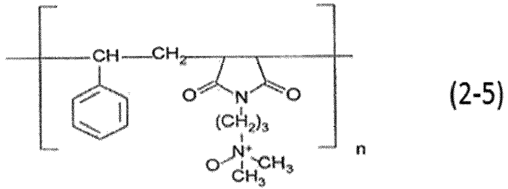

**Table 4-1**

| Abbreviation for substance A | Chemical formula | Condition in formula |
|---|---|---|
| A1 | Formula (4) | R⁷ = H |
| A2 | Formula (4) | R⁷ = SO₃H |
| A3 | Formula (1) (Formula (5)) | R¹ = (CH₂)₃N⁺(CH₃)₂O⁻ |
| A4 | Formula (2) | One of R ² and R³ is -OH, and the other is -N(CH₂)₃N(CH₃)₂O- |

**Table 4-2**

| Abbreviation for anionic dispersing agent | Chemical formula or substance name | Condition in formula | Mw |
|---|---|---|---|
| B1 | Formula (3) | R⁶ = CH₃ | 5,000 |
| B2 | Formula (3) | R⁶ = CH₂CH₃ | 5,000 |
| B3 | Formula (3) | R⁶ = CH₂CH₂CH₃ | 5,000 |
| B4 | Formula (3) | R⁶ = CH₂CH₂CH₂CH₃ | 5,000 |
| B5 | Sodium salt of naphthalene sulfonic acid formalin condensate | - | 5,000 |
| B6 | Lignin sulfonic acid | - | 5,000 |

**Table 4-3**

| | Blending amount [parts by mass] | | | | | | | | | | | | | | | | XA/XD | XB/XD | XA/XB |
|---|---|---|---|---|---|---|---|---|---|---|---|---|---|---|---|---|---|---|---|
| | Disperse dye | | | Substance A | | | | Anionic dispersing agent | | | | | | Another component | | Pure water | | | |
| | DR60 | DR153 | DR167 | A1 | A2 | A3 | A4 | B1 | B2 | B3 | B4 | B5 | B6 | A1' | B1' | | | | |
| Example A4-1 | 15 | 0 | 0 | 1.5 | 0 | 0 | 0 | 15 | 0 | 0 | 0 | 0 | 0 | 0 | 0 | 68.5 | 0.10 | 1.00 | 0.10 |
| Example A4-2 | 15 | 0 | 0 | 0 | 3 | 0 | 0 | 15 | 0 | 0 | 0 | 0 | 0 | 0 | 0 | 67 | 0.20 | 1.00 | 0.20 |
| Example A4-3 | 15 | 0 | 0 | 0 | 0 | 2 | 0 | 15 | 0 | 0 | 0 | 0 | 0 | 0 | 0 | 68 | 0.13 | 1.00 | 0.13 |
| Example A4-4 | 15 | 0 | 0 | 0 | 0 | 0 | 3 | 0 | 15 | 0 | 0 | 0 | 0 | 0 | 0 | 67 | 0.20 | 1.00 | 0.20 |
| Example A4-5 | 15 | 0 | 0 | 0 | 5 | 0 | 0 | 0 | 15 | 0 | 0 | 0 | 0 | 0 | 0 | 65 | 0.33 | 1.00 | 0.33 |
| Example A4-6 | 35 | 0 | 0 | 0 | 4.5 | 0 | 0 | 0 | 35 | 0 | 0 | 0 | 0 | 0 | 0 | 25.5 | 0.13 | 1.00 | 0.13 |
| Example A4-7 | 30 | 0 | 0 | 0 | 4 | 0 | 0 | 0 | 30 | 0 | 0 | 0 | 0 | 0 | 0 | 36 | 0.13 | 1.00 | 0.13 |
| Example A4-8 | 15 | 0 | 0 | 5 | 0 | 0 | 0 | 0 | 15 | 0 | 0 | 0 | 0 | 0 | 0 | 65 | 0.33 | 1.00 | 0.33 |
| Example A4-9 | 3.8 | 0 | 0 | 5 | 0 | 0 | 0 | 0 | 3.8 | 0 | 0 | 0 | 0 | 0 | 0 | 87.4 | 1.32 | 1.00 | 1.32 |
| Example A4-10 | 1.9 | 0 | 0 | 5 | 0 | 0 | 0 | 0 | 1.9 | 0 | 0 | 0 | 0 | 0 | 0 | 91.2 | 2.63 | 1.00 | 2.63 |
| Example A4-11 | 15 | 0 | 0 | 0 | 0.05 | 0 | 0 | 0 | 15 | 0 | 0 | 0 | 0 | 0 | 0 | 69.95 | 0 | 1.00 | 0 |
| Example A4-12 | 15 | 0 | 0 | 0 | 0 | 1.75 | 0 | 15 | 0 | 0 | 0 | 0 | 0 | 0 | 0 | 68.25 | 0.12 | 1.00 | 0.12 |
| Example A4-13 | 15 | 0 | 0 | 0 | 0 | 2 | 0 | 15 | 0 | 0 | 0 | 0 | 0 | 0 | 0 | 68 | 0.13 | 1.00 | 0.13 |
| Example A4-14 | 15 | 0 | 0 | 0 | 0 | 0 | 4 | 0 | 0 | 8 | 0 | 0 | 0 | 0 | 0 | 73 | 0.27 | 0.53 | 0.50 |
| Example A4-15 | 20 | 0 | 0 | 1.5 | 0 | 0 | 0 | 0 | 0 | 12 | 0 | 0 | 0 | 0 | 0 | 66.5 | 0.08 | 0.60 | 0.13 |
| Example A4-16 | 15 | 0 | 0 | 0 | 5 | 0 | 0 | 0 | 0 | 0 | 8 | 0 | 0 | 0 | 0 | 72 | 0.33 | 0.53 | 0.63 |
| Example A4-17 | 15 | 0 | 0 | 4 | 0 | 0 | 0 | 0 | 0 | 0 | 10 | 0 | 0 | 0 | 0 | 71 | 0.27 | 0.67 | 0.40 |

**Table 4-4**

| | Blending amount [parts by mass] | | | | | | | | | | | | | | | | XA/XD | XB/XD | XA/XB |
|---|---|---|---|---|---|---|---|---|---|---|---|---|---|---|---|---|---|---|---|
| | Disperse dye | | | Substance A | | | | Anionic dispersing agent | | | | | | Another component | | Pure water | | | |
| | DR60 | DR153 | DR167 | A1 | A2 | A3 | A4 | B1 | B2 | B3 | B4 | B5 | B6 | A1' | B1' | | | | |
| Example A4-18 | 15 | 0 | 0 | 0 | 0 | 0.8 | 0 | 10 | 0 | 0 | 0 | 0 | 0 | 0 | 0 | 74.2 | 0.05 | 0.67 | 0.08 |
| Example A4-19 | 15 | 0 | 0 | 8 | 0 | 0 | 0 | 0 | 10 | 0 | 0 | 0 | 0 | 0 | 0 | 67 | 0.53 | 0.67 | 0.80 |
| Example A4-20 | 15 | 0 | 0 | 4 | 0 | 0 | 0 | 0 | 0 | 0 | 0 | 10 | 0 | 0 | 0 | 71 | 0.27 | 0.67 | 0.40 |
| Example A4-21 | 15 | 0 | 0 | 0 | 2 | 0 | 0 | 0 | 0 | 0 | 0 | 0 | 10 | 0 | 0 | 73 | 0.13 | 0.67 | 0.20 |
| Comparative Example A4-1 | 0 | 15 | 0 | 1.5 | 0 | 0 | 0 | 15 | 0 | 0 | 0 | 0 | 0 | 0 | 0 | 68.5 | 0.10 | 1.00 | 0.10 |
| Comparative Example A4-2 | 0 | 0 | 15 | 1.5 | 0 | 0 | 0 | 15 | 0 | 0 | 0 | 0 | 0 | 0 | 0 | 68.5 | 0.10 | 1.00 | 0.10 |
| Comparative Example A4-3 | 15 | 0 | 0 | 0 | 0 | 0 | 0 | 15 | 0 | 0 | 0 | 0 | 0 | 0 | 0 | 70 | 0 | 1.00 | 0.00 |
| Comparative Example A4-4 | 15 | 0 | 0 | 0 | 0 | 0 | 0 | 0 | 15 | 0 | 0 | 0 | 0 | 1.5 | 0 | 68.5 | 0 | 1.00 | 0.00 |
| Comparative Example A4-5 | 15 | 0 | 0 | 1.5 | 0 | 0 | 0 | 0 | 0 | 0 | 0 | 0 | 0 | 0 | 15 | 68.5 | 0.10 | 0 | - |
| Comparative Example A4-6 | 15 | 0 | 0 | 1.5 | 0 | 0 | 0 | 0 | 0 | 0 | 0 | 0 | 0 | 0 | 0 | 83.5 | 0.10 | 0 | - |

### [2] Evaluation on stock solution for producing ink jet ink

### [2-1] Storage stability (change in particle diameter)

For each of the aqueous ink jet compositions (stock solutions for producing ink jet inks) of Examples A4-1 to A4-21 and Comparative Examples A4-1 to A4-6, an average particle diameter of the disperse dye immediately after production and an average particle diameter of the disperse dye after being placed in a predetermined container and left to stand for one week in an environment of 60°C were obtained using the method described above for the first embodiment. The evaluation criteria were as follows:
A: Variation rate of average particle diameter is less than 3%.
B: Variation rate of average particle diameter is equal to or greater than 3% and less than 5%.
C: Variation rate of average particle diameter is equal to or greater than 5% and less than 7%.
D: Variation rate of average particle diameter is equal to or greater than 7% and less than 10%.
E: Variation rate of average particle diameter is equal to or greater than 10%.

### [2-2] Generation status of foreign matter

Generation of foretin matter was measured for each of the aqueous ink jet compositions (stock solutions for producing ink jet inks) of Examples A4-1 to A4-21 and Comparative Examples A4-1 to A4-6 using the method set out above for the third embodiment. Evaluation was performed according to the following criteria.
A: Number of solids per 1 mm square is less than 5.
B: Number of solids per 1 mm square is equal to or greater than 5 and less than 20.
C: Number of solids per 1 mm square is equal to or greater than 20 and less than 30.
D: Number of solids per 1 mm square is equal to or greater than 30 and less than 50.
E: Number of solids per 1 mm square is equal to or greater than 50.

These results are summarized in Table 4-5.

**Table 4-5**

| | Storage stability | Generation status of foreign matters |
|---|---|---|
| Example A4-1 | A | A |
| Example A4-2 | A | A |
| Example A4-3 | A | A |
| Example A4-4 | B | B |
| Example A4-5 | B | D |
| Example A4-6 | B | D |
| Example A4-7 | B | B |
| Example A4-8 | A | A |
| Example A4-9 | C | B |
| Example A4-10 | D | B |
| Example A4-11 | B | B |
| Example A4-12 | A | A |
| Example A4-13 | A | A |
| Example A4-14 | B | B |
| Example A4-15 | B | B |
| Example A4-16 | B | B |
| Example A4-17 | B | B |
| Example A4-18 | B | B |
| Example A4-19 | C | C |
| Example A4-20 | C | C |
| Example A4-21 | B | C |
| Comparative Example A4-1 | E | D |
| Comparative Example A4-2 | E | E |
| Comparative Example A4-3 | E | E |
| Comparative Example A4-4 | E | E |
| Comparative Example A4-5 | E | E |
| Comparative Example A4-6 | E | E |

As is apparent from Table 4-5, excellent results were obtained in the invention. On the contrary, satisfactory results were not obtained in the Comparative Examples.

### [3] Preparation of ink jet ink (aqueous ink jet composition)

### Example B4-1

The stock solution for producing an ink jet ink prepared in Example A4-1, glycerin, 2-pyrrolidone, propylene glycol, BYK 348 (manufactured by BYK Chemie Japan) as a silicone-based surfactant, and pure water were mixed at a proportion as shown in Table 6, and the mixture was stirred with High Shear Mixer (manufactured by Silverson Machines, Inc.) at 3,000 rpm to produce an ink jet ink as an aqueous ink jet composition.

An average particle diameter of C.I. Disperse Red 60 in the ink jet ink was 150 nm. Examples B4-2 to B4-19

Ink jet inks as aqueous ink jet compositions were produced in the same manner as in Example B1, except that types of the stock solutions for producing ink jet inks were as shown in Tables 4-6 and 4-7, and blending proportions of the respective components were as shown in Tables 4-6 and 4-7.

### Comparative Examples B4-1 to B4-6

Ink jet inks as aqueous ink jet compositions were produced in the same manner as in Example B4-1, except that types of the stock solutions for producing ink jet inks were as shown in Table 7 and blending proportions of the respective components were as shown in Table 4-7.

Conditions for the aqueous ink jet compositions (ink jet inks) of the respective Examples and Comparative Examples are summarized in Tables 4-6 and 4-7. In the tables, glycerin is indicated as "Gly", 2-pyrrolidone is indicated as "2-Py", propylene glycol is indicated as "PG", BYK 348 (manufactured by BYK Chemie Japan) as a silicone-based surfactant is indicated as "BYK 348", and Olfine EXP4300 (manufactured by Nissin Chemical Industry Co., Ltd.) as an acetylene-based surfactant is indicated as "EXP 4300". In addition, each of the ink jet inks of Examples B1 to B19 had a viscosity which is a value within a range of equal to or greater than 2.0 mPa·s and equal to or less than 10 mPa·s, and surface tension which is a value within a range of equal to or greater than 25 mN/m and equal to or less than 35 mN/m. For the viscosity, measurement was performed at 25°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 25°C using a surface tension meter (CBVP-7, manufactured by Kyowa Interface Science Co., Ltd.).

**Table 4-6**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B4-1 | Example A4-1 | 50.0 | 10.0 | 5.0 | 5.0 | 1.0 | 0 | 29 |
| Example B4-2 | Example A4-1 | 5.0 | 20.0 | 5.0 | 5.0 | 1.0 | 0 | 64 |
| Example B4-3 | Example A4-2 | 50.0 | 10.0 | 5.0 | 5.0 | 1.0 | 0 | 29 |
| Example B4-4 | Example A4-3 | 50.0 | 10.0 | 5.0 | 5.0 | 1.0 | 0 | 29 |
| Example B4-5 | Example A4-4 | 50.0 | 10.0 | 5.0 | 5.0 | 0 | 1.0 | 29 |
| Example B4-6 | Example A4-7 | 50.0 | 10.0 | 5.0 | 5.0 | 1.0 | 0 | 29 |
| Example B4-7 | Example A4-8 | 2.5 | 20.0 | 5.0 | 5.0 | 0 | 1.0 | 66.5 |
| Example B4-8 | Example A4-9 | 2.5 | 20.0 | 5.0 | 5.0 | 0 | 1.0 | 66.5 |
| Example B4-9 | Example A4-10 | 2.5 | 20.0 | 5.0 | 5.0 | 0 | 1.0 | 66.5 |
| Example B4-10 | Example A4-12 | 50.0 | 10.0 | 5.0 | 5.0 | 1.0 | 0 | 29 |
| Example B4-11 | Example A4-13 | 50.0 | 10.0 | 5.0 | 5.0 | 1.0 | 0 | 29 |
| Example B4-12 | Example A4-14 | 50.0 | 10.0 | 5.0 | 5.0 | 0 | 1.0 | 29 |
| Example B4-13 | Example A4-15 | 2.5 | 20.0 | 5.0 | 5.0 | 1.0 | 0 | 66.5 |
| Example B4-14 | Example A4-16 | 50.0 | 10.0 | 5.0 | 5.0 | 1.0 | 0 | 29 |
| Example B4-15 | Example A4-17 | 50.0 | 10.0 | 5.0 | 5.0 | 1.0 | 0 | 29 |

**Table 4-7**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B4-16 | Example A4-18 | 50.0 | 10.0 | 5.0 | 5.0 | 1.0 | 0 | 29 |
| Example B4-17 | Example A4-19 | 50.0 | 10.0 | 5.0 | 5.0 | 0 | 1.0 | 29 |
| Example B4-18 | Example A4-20 | 50.0 | 10.0 | 5.0 | 5.0 | 1.0 | 0 | 29 |
| Example B4-19 | Example A4-21 | 50.0 | 10.0 | 5.0 | 5.0 | 0 | 1.0 | 29 |
| Comparative Example B4-1 | Comparative Example A4-1 | 50.0 | 10.0 | 5.0 | 5.0 | 1.0 | 0 | 29 |
| Comparative Example B4-2 | Comparative Example A4-2 | 50.0 | 10.0 | 5.0 | 5.0 | 1.0 | 0 | 29 |
| Comparative Example B4-3 | Comparative Example A4-3 | 50.0 | 10.0 | 5.0 | 5.0 | 1.0 | 0 | 29 |
| Comparative Example B4-4 | Comparative Example A4-4 | 5.0 | 10.0 | 5.0 | 5.0 | 1.0 | 0 | 74 |
| Comparative Example B4-5 | Comparative Example A4-5 | 50.0 | 10.0 | 5.0 | 5.0 | 1.0 | 0 | 29 |
| Comparative Example B4-6 | Comparative Example A4-6 | 50.0 | 10.0 | 5.0 | 5.0 | 1.0 | 0 | 29 |

### [4] Evaluation on ink jet ink

### [4-1] Storage stability (change in particle diameter)

This was measured as set out above for the first embodiment and evaluation criteria are as follows:
A: Variation rate of average particle diameter is less than 3%.
B: Variation rate of average particle diameter is equal to or greater than 3% and less than 5%.
C: Variation rate of average particle diameter is equal to or greater than 5% and less than 7%.
D: Variation rate of average particle diameter is equal to or greater than 7% and less than 10%.
E: Variation rate of average particle diameter is equal to or greater than 10%.

### [4-2] Generation status of foreign matter

This was measured as set out above for the third embodiment. Evaluation was performed according to the following criteria.
A: Number of solids per 1 mm square is less than 5.
B: Number of solids per 1 mm square is equal to or greater than 5 and less than 20.
C: Number of solids per 1 mm square is equal to or greater than 20 and less than 30.
D: Number of solids per 1 mm square is equal to or greater than 30 and less than 50.
E: Number of solids per 1 mm square is equal to or greater than 50.

### [4-3] Discharge stability by ink jet method

This was measured as set out above for the third embodiment and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

An ink-holding container (the above-described ink-holding container) which is PX-H 6000 manufactured by Seiko Epson Corporation is provided with an ink pour that allows refill of an aqueous ink jet composition, and is open to the atmosphere in a case of being mounted on a recording apparatus in a usable state.

### [4-4] Clogging recoverability

A predetermined ink-holding container was filled with each of the aqueous ink jet compositions (ink jet inks) of the respective Examples and Comparative Examples, and the holding container was mounted on a recording apparatus PX-H 6000 (manufactured by Seiko Epson Corporation).

After confirming that discharge normally occurs in all nozzles, the power of the recording apparatus was turned off in a normal state, and was left to stand for 2 months under an environment of 40°C.

Thereafter, the number of times taken to reach normal discharge by a suction-induced recovery operation was obtained, and evaluation was performed according to the following criteria.
A: Clean discharge occurs immediately after the power is turned on.
B: Normalization is achieved with 1 to 2 recovery operations.
C: Normalization is achieved with 3 to 4 recovery operations.
D: Normalization is achieved with 5 to 6 recovery operations.
E: Recovery is not made with 6 recovery operations.

### [4-5] Color developing property (OD value)

An adhesion side of the aqueous ink jet composition on the thirtieth intermediate transfer medium to which the ink jet ink had been adhered in [4-3] was brought into close contact with cloth (polyester 100%, Amina, manufactured by Toray Industries, Inc.) which is a white recording medium. In this state, sublimation transfer was carried out by performing heating using a heat press machine (TP-608M, manufactured by Taiyo Seiki Co., Ltd.) at a condition of 180°C and 60 seconds, so that each recorded matter was obtained.

For each recorded matter obtained, evaluation on color developing property was performed. Specifically, for each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

These results are summarized in Table 4-8.

**Table 4-8**

| | Storage stability | Generation status of foreign matters | Discharge stability | Clogging recoverability | Color developing property |
|---|---|---|---|---|---|
| Example B4-1 | A | A | A | A | A |
| Example B4-2 | A | A | B | A | E |
| Example B4-3 | A | A | A | A | A |
| Example B4-4 | A | A | A | A | A |
| Example B4-5 | B | B | A | A | A |
| Example B4-6 | B | B | A | C | A |
| Example B4-7 | A | A | A | A | E |
| Example B4-8 | C | B | C | A | E |
| Example B4-9 | D | B | C | A | E |
| Example B4-10 | A | A | A | A | A |
| Example B4-11 | A | A | A | A | A |
| Example B4-12 | B | B | A | A | A |
| Example B4-13 | B | A | C | B | E |
| Example B4-14 | B | B | B | A | A |
| Example B4-15 | B | B | B | A | A |
| Example B4-16 | B | B | A | A | A |
| Example B4-17 | C | C | A | A | A |
| Example B4-18 | C | C | D | D | A |
| Example B4-19 | B | C | D | D | A |
| Comparative Example B4-1 | E | D | A | B | E |
| Comparative Example B4-2 | E | E | A | B | E |
| Comparative Example B4-3 | E | E | A | B | A |
| Comparative Example B4-4 | E | E | C | E | A |
| Comparative Example B4-5 | E | E | A | E | A |
| Comparative Example B4-6 | E | E | E | E | A |

As is apparent from Table 4-8, excellent results were obtained in the invention. On the contrary, satisfactory results were not obtained in the Comparative Examples.

Hereinafter, a fifth suitable embodiment of the invention will be described in detail.

### Aqueous ink jet composition

Of the various disperse dyes, C.I. Disperse Blue 359 has advangageous features such as an excellent color development but also has various problems. Thus, when C.I. Disperse Blue 359 is used as a constituent component of an aqueous ink jet composition in the related art, the aqueous ink jet composition does not have sufficient storage stability, which causes a problem clogging in nozzles of a liquid droplet discharge head during discharge by an ink jet method after long-term storage.

Therefore, the present inventor has conducted extensive studies aimed at providing an aqueous ink jet composition capable of effectively preventing occurrence of the above problems while making full use of the excellent features of C.I. Disperse Blue 359.

As a result, the present inventor has reached the invention.

In a fifth aspect of the invention there is provided an aqueous ink jet composition comprising:
C.I. Disperse Blue 359 and a styrene maleic acid-based dispersing agent represented by Formula (1) as defined above.

With such a constitution, it is possible to provide an aqueous ink jet composition which has effects obtained by containing C.I. Disperse Blue 359 that is a disperse dye having features such as excellent color development in a low-temperature process due to its relatively low molecular weight, while minimising clogging in a nozzle of a liquid droplet discharge head during discharge by an ink jet method. In particular, even when the aqueous ink jet composition is stored under harsh environments (for example, under a high-temperature environment, under a low-temperature environment, under an environment with a large temperature change, and the like), stored for a long time, and when mass printing is carried out (hereinafter these storage conditions and use conditions may be collectively simply referred to as "during or after long-term storage or the like", excellent discharge stability can be maintained. In addition, even when clogging occurs in a nozzle, the clogging can be suitably eliminated by capping the nozzle (nozzle capping) or by a suction-induced recovery operation, and excellent discharge stability can be easily recovered.

On the contrary, when the styrene maleic acid-based dispersing agent is not used, or when another dispersing agent (for example, a dispersing agent other than a styrene maleic acid-based dispersing agent, a dispersing agent which is a styrene maleic acid-based dispersing agent but is other than the styrene maleic acid-based dispersing agent represented by the above formula, or the like) is used in place of the styrene maleic acid-based dispersing agent, the above-mentioned excellent effects cannot be obtained.

For example, when using a compound similar to that of Formula (1) except that the ratio of y:x is less than 0.2:1, the maleic acid chain is small relative to a styrene chain, so that dispersion stability of C.I. Disperse Blue 359 in the aqueous ink jet composition cannot be ensured and discharge stability according to an ink jet method is decreased during long-term storage of the aqueous ink jet composition. In addition, once clogging occurs in a nozzle, it becomes difficult to achieve recovery.

In addition, when using a compound similar to that of Formula (1) except that the ratio of y:x is greater than 1.0:1, the styrene chain is small relative to the maleic acid chain and the adsorptivity of the dispersing agent onto C.I. Disperse Blue 359 is poor, and desorption of the dispersing agent easily occurs. Thus, discharge stability according to an ink jet method is decreased during long-term storage of the aqueous ink jet composition, or the like. In addition, once clogging occurs in a nozzle, it becomes difficult to achieve recovery.
As with previous embodiments, an "aqueous ink jet composition" includes not only an ink for discharge in an ink jet method but also a stock solution used for preparing the ink.
Styrene maleic acid-based dispersing agent

The aqueous ink jet composition of the invention contains a styrene maleic acid-based dispersing agent represented by Formula (1) as defined above.

When the styrene maleic acid-based dispersing agent is used in combination with C.I. Disperse Blue 359, the dispersion stability of C.I. Disperse Blue 359 in the aqueous ink jet composition and storage stability of the aqueous ink jet composition are both excellent, and occurrence of clogging in a nozzle of a liquid droplet discharge head during discharge by an ink jet method can be effectively prevented even after long-term storage, or the like. As a result, it is possible to more stably perform discharge of the aqueous ink jet composition for a long period of time, and high quality recorded matter obtained by an ink jet method can be consistently produced over a long period. In addition, the styrene maleic acid-based dispersing agent is a component which causes no significant adverse effects on the quality of recorded matter or in sublimation printing.

As described above, the styrene maleic acid-based dispersing agent may have a counterion such that it constitutes a salt. Suitable counter ions are as described above for the first embodiment.

Preferred values for n are as set out for the first embodiment.

Accordingly, storage stability of the aqueous ink jet composition is further improved, and occurrence of clogging in a nozzle of a liquid droplet discharge head during discharge by an ink jet method is effectively prevented even during and after long-term storage, or the like.

Preferred values for R¹ and R² are as set out above for the first embodiment. Accordingly, dispersion stability of C.I. Disperse Blue 359 in the aqueous ink jet composition and storage stability of the aqueous ink jet composition can be further improved, and occurrence of clogging in a nozzle of a liquid droplet discharge head during discharge by an ink jet method can be more effectively prevented even during or after long-term storage or the like. As a result, it is possible to more stably perform discharge of the aqueous ink jet composition for a long period of time, and high quality recorded matter obtained by an ink jet method can be consistently produced over a long period.

In this embodiment, it is preferable that the ratio of y:x is equal to or greater than 0.3:1 and equal to or less than 1.0;1, more preferably equal to or greater than 0.4:1 and equal to or less than 1.0:1.

This leads to improved dispersion stability of C.I. Disperse Blue 359, as the ratio of hydrophilic groups to hydrophobic groups is made more suitable, and long-term stability of the aqueous ink jet composition is further improved.

The weight average molecular weight Mw of the styrene maleic acid-based dispersing agent is not particularly limited and preferred values are as set out above for the first embodiment.

Accordingly, storage stability of the aqueous ink jet composition is further improved, and occurrence of clogging in a nozzle of a liquid droplet discharge head during discharge by an ink jet method is effectively prevented even during or after long-term storage, or the like.

The aqueous ink jet composition may contain a single compound or two or more compounds represented by General Formula (1).

The content of the styrene maleic acid-based dispersing agent represented by Formula (1) in the aqueous ink jet composition is preferably equal to or greater than 0.1% by mass and equal to or less than 25% by mass, more preferably equal to or greater than 0.5% by mass and equal to or less than 20% by mass, and even more preferably equal to or greater than 1.0% by mass and equal to or less than 15% by mass.

Accordingly, storage stability of the aqueous ink jet composition is further improved, and occurrence of clogging in a nozzle of a liquid droplet discharge head during discharge by an ink jet method is effectively prevented even in a case of being stored for a long time, or the like.

In particular, in a case where the aqueous ink jet composition is an ink to be discharged by an ink jet method, the content of the styrene maleic acid-based dispersing agent represented by Formula (1) in the ink is preferably equal to or greater than 0.1% by mass and equal to or less than 10% by mass, more preferably equal to or greater than 1.0% by mass and equal to or less than 9.0% by mass, and even more preferably equal to or greater than 2.0% by mass and equal to or less than 8.0% by mass.

In addition, in a case where the aqueous ink jet composition is a stock solution used for preparing an ink to be discharged by an ink jet method, the content of the styrene maleic acid-based dispersing agent represented by Formula (1) in the stock solution is preferably equal to or greater than 1.0% by mass and equal to or less than 30% by mass, more preferably equal to or greater than 2.0% by mass and equal to or less than 25% by mass, and even more preferably equal to or greater than 5.0% by mass and equal to or less than 20% by mass.

When the aqueous ink jet composition contains two or more compounds represented by General Formula (1), the "content", refers to the total content of all compounds of General Formula (1).

### C.I. Disperse Blue 359

The aqueous ink jet composition contains C.I. Disperse Blue 359 as a disperse dye.

The content of C.I. Disperse Blue 359 in the aqueous ink jet composition is preferably equal to or greater than 0.1% by mass and equal to or less than 25% by mass, more preferably equal to or greater than 1.0% by mass and equal to or less than 20% by mass, and even more preferably equal to or greater than 2.0% by mass and equal to or less than 15% by mass.

Accordingly, it is possible to obtain a higher color density in a recorded portion formed by using the aqueous ink jet composition, while further improving storage stability of the aqueous ink jet composition and more effectively preventing occurrence of clogging in a nozzle of a liquid droplet discharge head during discharge by an ink jet method even during or after long-term storage, or the like.

In addition, in the aqueous ink jet composition, when the content of C.I. Disperse Blue 359 is set as XD [% by mass] and the content of the styrene maleic acid-based dispersing agent is set as XM [% by mass], it is preferable that a relationship of 0.04 ≤ XM/XD ≤ 25 be satisfied, it is more preferable that a relationship of 0.1 ≤ XM/XD ≤ 5.0 be satisfied, and it is even more preferable that a relationship of 0.35 ≤ XM/XD ≤ 1.3 be satisfied.

Accordingly, storage stability of the aqueous ink jet composition is further improved, and occurrence of clogging in a nozzle of a liquid droplet discharge head during discharge by an ink jet method is effectively prevented even during or after long-term storage, or the like.

The average particle diameter of C.I. Disperse Blue 359 in the aqueous ink jet composition is preferably equal to or greater than 50 nm and equal to or less than 300 nm, more preferably equal to or greater than 75 nm and equal to or less than 250 nm or less, and even more preferably equal to or greater than 100 nm and equal to or less than 200 nm.

Accordingly, storage stability of the aqueous ink jet composition is further improved. In addition, a recorded portion formed by using the aqueous ink jet composition can be more effectively sublimated, and so the composition is more suitable for sublimation printing.

As noted above, the average particle diameter refers to an average particle diameter on a volume basis unless otherwise specified. The average particle diameter can be obtained, for example, by measurement using Microtrac UPA (manufactured by Nikkiso CO., LTD.).

### Water

The aqueous ink jet composition contains water.

The content of water in the aqueous ink jet composition is not particularly limited and preferred values for the % by mass of water are as set out for the aqueous ink jet composition of the first embodiment.

Accordingly, a viscosity of the aqueous ink jet composition can be more reliably adjusted to a suitable value, and discharge stability according to an ink jet method can be further improved.

### Solvent other than water

The aqueous ink jet composition may contain a solvent other than water.

Accordingly, the viscosity of the aqueous ink jet composition can be suitably adjusted, and the moisture retaining properties of the aqueous ink jet composition can be increased. As a result, liquid droplet discharge by an ink jet method can be performed in a more stable manner.

Suitable solvents other than water include, for example, glycerin, propylene glycol, 2-pyrrolidone, and the like.

The inclusion of these solvents leads to a slow evaporation rate due to an excellent moisture retaining capability, which makes it possible to perform liquid droplet discharge in a more stable manner.

The content of the solvent other than water which is contained in the aqueous ink jet composition is preferably equal to or greater than 0% by mass and equal to or less than 45% by mass, more preferably equal to or greater than 10% by mass and equal to or less than 43% by mass, and even more preferably equal to or greater than 15% by mass and equal to or less than 40% by mass.

Accordingly, effects obtained by containing the solvent other than water as described above are exerted in a more remarkable manner.

### Surfactant

The aqueous ink jet composition may contain a surfactant.

Accordingly, it is possible to achieve more suitable wettability of the aqueous ink jet composition with respect to a recording medium (base material), which is advantageous for obtaining better image quality.

Suitable surfactants are as described above for the first embodiment.

When the aqueous ink jet composition contains the acetylene-based surfactant, dynamic surface tension of the aqueous ink jet composition can be suitably decreased, and quick orientation can be made with respect to meniscus. As a result, discharge stability according to an ink jet method can be further improved.

When the aqueous ink jet composition contains the acetylene-based surfactant, the content of the acetylene-based surfactant in the aqueous ink jet composition is preferably equal to or greater than 5.0 parts by mass and equal to or less than 75 parts by mass, more preferably equal to or greater than 6.0 parts by mass and equal to or less than 60 parts by mass, and even more preferably equal to or greater than 7.0 parts by mass and equal to or less than 40 parts by mass, with respect to 100 parts by mass of C.I. Disperse Blue 359.

Accordingly, effects obtained by containing the acetylene-based surfactant as described above are more marked.

Examples of commercially available acetylene-based surfactants are as set out above for the first embodiment.

The aqueous ink jet composition may contain a component (another component) other than the components as described above.

As the other component, for example, a coloring agent other than C.I. Disperse Blue 359, a dispersing agent other than the styrene maleic acid-based dispersing agent as described above and a penetrating agent, a pH adjusting agent, a chelating agent, an antiseptic or antifungal agent and an antirust agent as described above for the first embodiment.

The content (in a case where plural types of components are contained as the other component, the content is a sum of contents thereof) of the other component is preferably equal to or less than 6% by mass, and more preferably equal to or less than 5% by mass of the total mass of the ink jet composition.

In particular, when the aqueous ink jet composition of the invention contains a dispersing agent (another dispersing agent) other than the styrene maleic acid-based dispersing agent as described above, the content of the dispersing agent (the other dispersing agent) is preferably equal to or less than 5% by mass, and more preferably equal to or less than 3% by mass with respect to the total mass of the ink jet composition.

Preferred values for the surface tension and viscosity of the ink compositions, methods of measurement and the advantages of maintaining them in the preferred range are as described above for the first embodiment.

The aqueous ink jet composition of the invention is usually applied to a recording apparatus by an ink jet method in a container such as a cartridge, a bag, or a tank. In other words, the recording apparatus according to the invention includes a container (an ink cartridge or the like) for holding the aqueous ink jet composition of the invention.

### Recording method

The aqueous ink jet composition of the invention is suitable for use in a direct printing method, a thermal transfer printing method (for example, sublimation printing), and the like, and can be suitably applied to the thermal transfer printing method from the viewpoint that C.I. Disperse Blue 359 has sublimability.

A suitable recording method is substantially as described above for the first embodiment except that the pigment used in C.I. Disperse Blue 359 and, in particular, details of the Ink adhering step, the Intermediate transfer medium, the Transfer step and the Recording medium are as described above for the first embodiment.

In addition, as described above for the first embodiment, the aqueous ink jet composition may be applied to a method having other further steps (pre-treatment step, intermediate treatment step, and post-treatment step) in addition to the above-described steps.

For example a pre-treatment step of applying a coat layer to the recording medium, an intermediate treatment step of initially heating the recording medium and a post-treatment step of washing the recording medium.

In addition, the aqueous ink jet composition of the invention can also be suitably applied to sublimation transfer that does not use an intermediate transfer medium as described above for the first embodiment.

### Examples

Next, specific examples of the invention will be described.

### [1] Preparation of stock solution (aqueous ink jet composition) for producing ink jet ink

### Example A5-1

First, C.I. Disperse Blue 359 as a disperse dye, a styrene maleic acid-based dispersing agent represented by Formula (1) (which is a compound of Formula (1) wherein one of R¹ and R² in Formula (1) is -H, and the other is -CH₂CH(CH₃)₂, wherein the ratio of y:x is 1:1, and having a weight average molecular weight Mw of 13,000), and pure water were mixed in the proportions shown in Table 5-2, and the mixture was stirred with High Shear Mixer (manufactured by Silverson Machines, Inc.) at 3,000 rpm to produce a slurry. Thereafter, the slurry and glass beads having a diameter of 0.5 mm were stirred and dispersed in a bead mill (LMZ015, Ashizawa Finetech Ltd.) under water cooling, so that a stock solution for producing an ink jet ink as an aqueous ink jet composition was produced.

The average particle diameter of C.I. Disperse Blue 359 in the stock solution for producing an ink jet ink was 150 nm.

### Examples A5-2 to A5-21

Stock solutions for producing ink jet inks as aqueous ink jet compositions were produced in the same manner as in Example A1, except that chemical structures of the styrene maleic acid-based dispersing agents and blending proportions of the respective components were as shown in Tables 5-1 and 5-2.

### Comparative Examples A5-1 to A5-9

Stock solutions for producing ink jet inks as aqueous ink jet compositions were produced in the same manner as in Example A5-1, except that types of the disperse dyes, types of the dispersing agents, and blending proportions of the respective components were as shown in Tables 5-1 and 5-2.

Table 5-1 shows the R¹ and R² groups, the ratio of y:x and the molecular weight for each of dispersing agents SM1 to SM11 and H1 to H5 used for preparing the aqueous ink jet compositions (stock solutions for producing ink jet inks) of the Examples A5-1 to A5-21 and Comparative Examples A5-1 to A5-9. The compositions of the aqueous ink jet compositions (stock solutions for producing ink jet inks) of these Examples and Comparative Examples are shown in Table 5-2. In Tables 5-1 and 5-2:
C.I. Disperse Blue 359 is indicated as "DB359",
C.I. Disperse Blue 148 is indicated as "DB148",
C.I. Disperse Blue 270 is indicated as "DB270",
"H6" is J-67 (manufactured by BASF SE) used as a dispersing agent other than the styrene maleic acid-based dispersing agent, and
"H7" is X310 (manufactured by SEIKO PMC CORPORATION) used as a dispersing agent other than the styrene maleic acid-based dispersing agent.
In addition, each of the ink jet inks of Examples A5-1 to A5-21 had a viscosity which is a value within a range of equal to or greater than 2.0 mPa·s and equal to or less than 30 mPa·s, and surface tension which is a value within a range of equal to or greater than 25 mN/m and equal to or less than 50 mN/m. For the viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 20°C using a surface tension meter (CBVP-7, manufactured by Kyowa Interface Science Co., Ltd.).

**Table 5-1**

| Abbreviation for dispersing agent | Combination of R¹ and R² | Value of Y when X = 1 | Mw |
|---|---|---|---|
| SM1 | -H, -CH₂CH(CH₃)₂ | 1 | 13,000 |
| SM2 | -H, -(CH₂CH₂O)₃CH₂CH₃ | 1 | 13,000 |
| SM3 | -H, -(CH₂CH₂O)H | 1 | 13,000 |
| SM4 | -H, -(CH₂CH₂O)₃H | 1 | 13,000 |
| SM5 | -H, -(CH₂CH₂O)₅H | 1 | 13,000 |
| SM6 | -H, -(CH₂CH₂O)₃CH₃ | 1 | 13,000 |
| SM7 | -H, -(CH₂)₃CH₃ | 1 | 13,000 |
| SM8 | -H, (CH₂CH₂O)₂CH₂CH₃ | 1 | 13,000 |
| SM9 | -H, CH₂CH(CH₃)₂ | 1 | 6,000 |
| SM10 | -H, CH₂CH(CH₃)₂ | 1 | 21,000 |
| SM11 | -H, CH₂CH(CH₃)₂ | 0.2 | 13,000 |
| H1 | -H, -H | 1 | 13,000 |
| H2 | -Na, -Na | 1 | 13,000 |
| H3 | -C₂H₅, -C₂H₅ | 1 | 13,000 |
| H4 | -H, CH₂CH(CH₃)₂ | 0.1 | 13,000 |
| H5 | -H, CH₂CH(CH₃)₂ | 1.1 | 13,000 |
| H6 | J-67 (BASF SE) | | 12,500 |
| H7 | X310(SEIKO PMC CORPORATION) | | 14,000 |

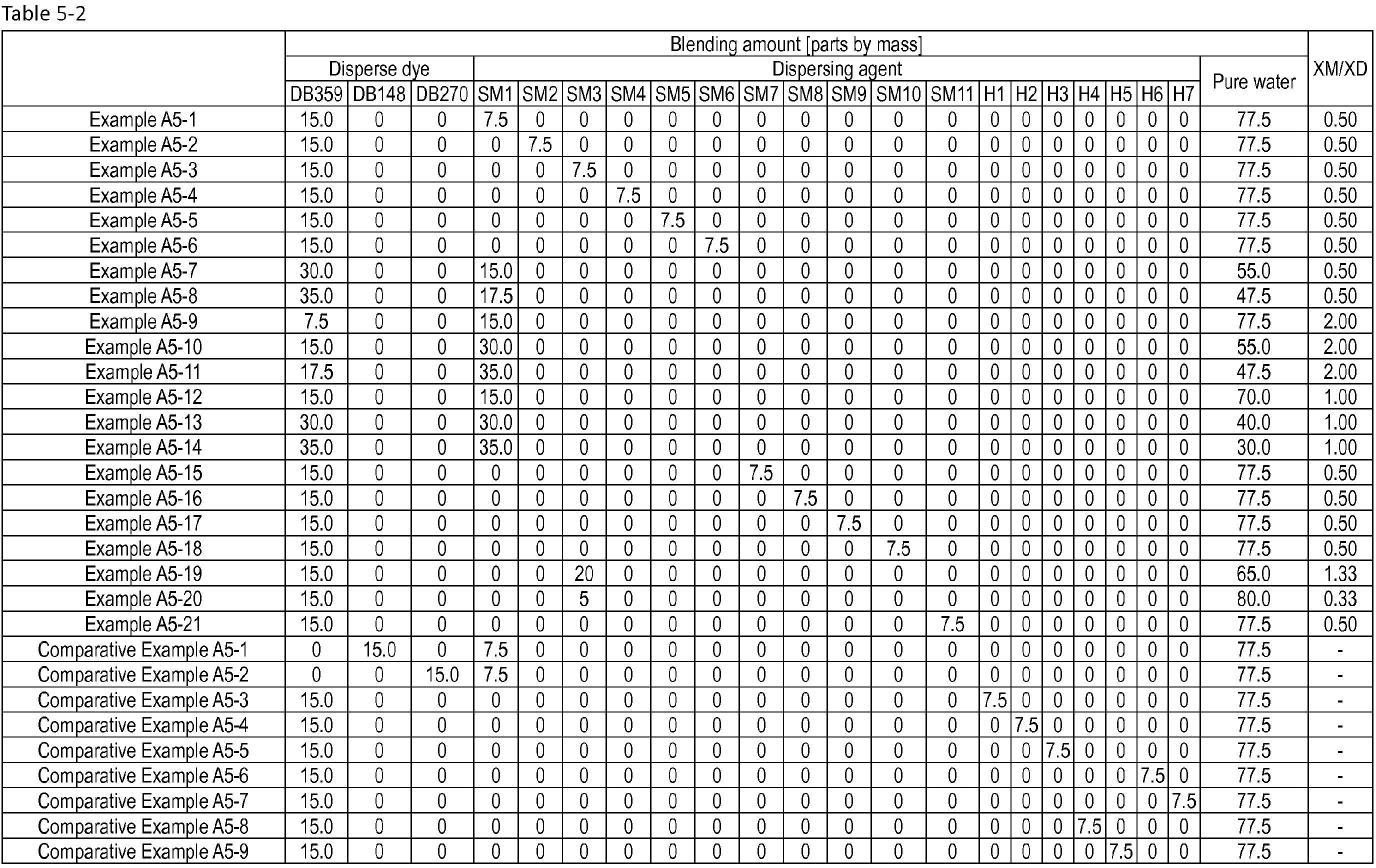

### [2] Evaluation on stock solution for producing ink jet ink

### [2-1] Storage stability (change in particle diameter)

The change in particle diameter of the disperse dye for each of the aqueous ink jet compositions (stock solutions for producing ink jet inks) of Examples A5-1 to A5-21 and Comparative Examples A5-1 to A5-9 immediately after production and after being placed in a predetermined container and left to stand for one week in an environment of 60°C were obtained as set out for the first embodiment. Evaluation criteria were as follows:
A: Variation rate of average particle diameter is less than 5%.
B: Variation rate of average particle diameter is equal to or greater than 5% and less than 10%.
C: Variation rate of average particle diameter is equal to or greater than 10% and less than 15%.
D: Variation rate of average particle diameter is equal to or greater than 15% and less than 20%.
E: Variation rate of average particle diameter is equal to or greater than 20%.

These results are summarized in Table 5-3.

**Table 5-3**

| | Storage stability |
|---|---|
| Example A5-1 | A |
| Example A5-2 | B |
| Example A5-3 | B |
| Example A5-4 | B |
| Example A5-5 | B |
| Example A5-6 | B |
| Example A5-7 | C |
| Example A5-8 | C |
| Example A5-9 | B |
| Example A5-10 | C |
| Example A5-11 | B |
| Example A5-12 | B |
| Example A5-13 | C |
| Example A5-14 | C |
| Example A5-15 | B |
| Example A5-16 | B |
| Example A5-17 | C |
| Example A5-18 | C |
| Example A5-19 | C |
| Example A5-20 | C |
| Example A5-21 | B |
| Comparative Example A5-1 | E |
| Comparative Example A5-2 | E |
| Comparative Example A5-3 | E |
| Comparative Example A5-4 | E |
| Comparative Example A5-5 | E |
| Comparative Example A5-6 | E |
| Comparative Example A5-7 | E |
| Comparative Example A5-8 | E |
| Comparative Example A5-9 | E |

As is apparent from Table 5-3, excellent results were obtained in the invention. On the contrary, satisfactory results were not obtained in the Comparative Examples.

### [3] Preparation of ink jet ink (aqueous ink jet composition)

### Example B5-1

The stock solution for producing an ink jet in which had been prepared in Example A5-1, glycerin, 2-pyrrolidone, propylene glycol, Olfine EXP4300 (manufactured by Nissin Chemical Industry Co., Ltd.) as an acetylene-based surfactant, and pure water were mixed at a proportion as shown in Table 5-4, and the mixture was stirred with High Shear Mixer (manufactured by Silverson Machines, Inc.) at 3,000 rpm to produce an ink jet ink as an aqueous ink jet composition.

An average particle diameter of C.I. Disperse Blue 359 in the ink jet ink was 150 nm.

### Examples B5-2 to B5-20

Ink jet inks as aqueous ink jet compositions were produced in the same manner as in Example B5-1, except that types of the stock solutions for producing ink jet inks were as shown in Table 5-4 and blending proportions of the respective components were as shown in Table 5-4.

### Comparative Examples B5-1 to B5-9

Ink jet inks as aqueous ink jet compositions were produced in the same manner as in Example B5-1, except that types of the stock solutions for producing ink jet inks were as shown in Table 5-4 and blending proportions of the respective components were as shown in Table 5-4.

Conditions for the aqueous ink jet compositions (ink jet inks) of the respective Examples and Comparative Examples are summarized in Table 5-4. In the tables, glycerin is indicated as "Gly", 2-pyrrolidone is indicated as "2-Py", propylene glycol is indicated as "PG", BYK 348 (manufactured by BYK Chemie Japan) as a silicone-based surfactant is indicated as "BYK 348", and Olfine EXP4300 (manufactured by Nissin Chemical Industry Co., Ltd.) as an acetylene-based surfactant is indicated as "EXP 4300". In addition, each of the ink jet inks of Examples B5-1 to B5-20 had a viscosity which is a value within a range of equal to or greater than 2.0 mPa·s and equal to or less than 5.0 mPa·s, and surface tension which is a value within a range of equal to or greater than 20 mN/m and equal to or less than 35 mN/m. For the viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 20°C using a surface tension meter (CBVP-7, manufactured by Kyowa Interface Science Co., Ltd.).

**Table 5-4**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B5-1 | Example A5-2 | 50 | 10 | 5 | 5 | 0 | 1 | 29 |
| Example B5-2 | Example A5-3 | 50 | 10 | 5 | 5 | 0 | 1 | 29 |
| Example B5-3 | Example A5-4 | 50 | 10 | 5 | 5 | 0 | 1 | 29 |
| Example B5-4 | Example A5-5 | 50 | 10 | 5 | 5 | 0 | 1 | 29 |
| Example B5-5 | Example A5-6 | 50 | 10 | 5 | 5 | 0 | 1 | 29 |
| Example B5-6 | Example A5-7 | 50 | 10 | 5 | 5 | 0 | 1 | 29 |
| Example B5-7 | Example A5-10 | 0.66 | 15 | 5 | 5 | 0 | 1 | 73.34 |
| Example B5-8 | Example A5-10 | 1.33 | 15 | 5 | 5 | 0 | 1 | 72.67 |
| Example B5-9 | Example A5-15 | 50 | 10 | 5 | 5 | 0 | 1 | 29 |
| Example B5-10 | Example A5-16 | 50 | 10 | 5 | 5 | 0 | 1 | 29 |
| Example B5-11 | Example A5-17 | 50 | 10 | 5 | 5 | 0 | 1 | 29 |
| Example B5-12 | Example A5-18 | 50 | 10 | 5 | 5 | 0 | 1 | 29 |
| Example B5-13 | Example A5-19 | 50 | 10 | 5 | 5 | 0 | 1 | 29 |
| Example B5-14 | Example A5-20 | 50 | 10 | 5 | 5 | 0 | 1 | 29 |
| Example B5-15 | Example A5-1 | 50 | 10 | 5 | 5 | 0 | 1 | 29 |
| Example B5-16 | Example A5-1 | 0.66 | 15 | 5 | 5 | 0 | 1 | 73.34 |
| Example B5-17 | Example A5-2 | 1.33 | 15 | 5 | 5 | 0 | 1 | 72.67 |
| Example B5-18 | Example A5-2 | 0.66 | 15 | 5 | 5 | 0 | 1 | 73.34 |
| Example B5-19 | Example A5-2 | 66 | 10 | 5 | 5 | 0 | 1 | 13 |
| Example B5-20 | Example A5-4 | 1.23 | 15 | 5 | 5 | 0 | 1 | 72.77 |
| Comparative Example B5-1 | Comparative Example A5-1 | 50 | 10 | 5 | 5 | 0 | 1 | 29 |
| Comparative Example B5-2 | Comparative Example A5-2 | 50 | 10 | 5 | 5 | 0 | 1 | 29 |
| Comparative Example B5-3 | Comparative Example A5-3 | 50 | 10 | 5 | 5 | 0 | 1 | 29 |
| Comparative Example B5-4 | Comparative Example A5-4 | 50 | 10 | 5 | 5 | 0 | 1 | 29 |
| Comparative Example B5-5 | Comparative Example A5-5 | 50 | 10 | 5 | 5 | 0 | 1 | 29 |
| Comparative Example B5-6 | Comparative Example A5-6 | 50 | 10 | 5 | 5 | 0 | 1 | 29 |
| Comparative Example B5-7 | Comparative Example A5-7 | 50 | 10 | 5 | 5 | 0 | 1 | 29 |
| Comparative Example B5-8 | Comparative Example A5-8 | 50 | 10 | 5 | 5 | 0 | 1 | 29 |
| Comparative Example B5-9 | Comparative Example A5-9 | 50 | 10 | 5 | 5 | 0 | 1 | 29 |

### [4] Evaluation on ink jet ink

### [4-1] Storage stability (change in particle diameter)

For each of the aqueous ink jet compositions (inkjet inks) of Examples B5-1 to B5-20 and Comparative Examples B5-1 to B59 the change in particle diameter was determined as set out for the ink of the first embodiment. Evaluation criteria were as follows:
A: Variation rate of average particle diameter is less than 5%.
B: Variation rate of average particle diameter is equal to or greater than 5% and less than 10%.
C: Variation rate of average particle diameter is equal to or greater than 10% and less than 15%.
D: Variation rate of average particle diameter is equal to or greater than 15% and less than 20%.
E: Variation rate of average particle diameter is equal to or greater than 20%.

### [4-2] Discharge stability by ink jet method

A predetermined ink-holding container was filled with each of the aqueous ink jet compositions (ink jet inks) of Examples B5-1 to B5-20 and Comparative Examples B5-1 to B59 and was left to stand for 5 days in an environment of 60°C.

Thereafter, the holding container was mounted on a recording apparatus PX-H 6000 (manufactured by Seiko Epson Corporation), and the ink jet ink was discharged so that a solid pattern was adhered on TRANSJET Classic (manufactured by Cham Paper), which is an intermediate transfer medium, at a recording resolution of 1440 × 720 dpi. An operating environment of the recording apparatus (printer) was set at 40°C and 20 RH%.

The number of times of nozzle omission at the time of recording 30 solid patterns on the intermediate transfer medium was examined, and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

### [4-3] Clogging recoverability

A predetermined ink-holding container was filled with each of the aqueous ink jet compositions (ink jet inks) of the respective Examples and Comparative Examples, and the holding container was mounted on a recording apparatus PX-H 6000 (manufactured by Seiko Epson Corporation).

After confirming that discharge normally occurs in all nozzles, the power of the recording apparatus was turned off in a normal state, and was left to stand for 1 month under an environment of 40°C.

Thereafter, the number of times taken to reach normal discharge by a suction-induced recovery operation was obtained, and evaluation was performed according to the following criteria.
A: Normalization is achieved with 1 to 3 recovery operations.
B: Normalization is achieved with 4 to 6 recovery operations.
C: Normalization is achieved with 7 to 9 recovery operations.
D: Normalization is achieved after 9 recovery operations, being left to stand for 12 hours at room temperature, and then 1 to 3 further recovery operations.
E: Normalization is not achieved after 9 recovery operations, being left to stand for 12 hours at room temperature, and then 3 further recovery operations.

### [4-4] Color development (OD value)

An adhesion side of the aqueous ink jet composition on the thirtieth intermediate transfer medium to which the ink jet ink had been adhered in [4-3] was brought into close contact with cloth (polyester 100%, Amina, manufactured by Toray Industries, Inc.) which is a white recording medium. In this state, sublimation transfer was carried out by performing heating using a heat press machine (TP-608M, manufactured by Taiyo Seiki Co., Ltd.) at a condition of 180°C and 60 seconds, so that each recorded matter was obtained.

For each recorded matter obtained, evaluation on color development was performed. Specifically, for each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

These results are summarized in Table 5-5.

**Table 5-5**

| | Storage stability | Discharge stability | Clogging recoverability | Color development |
|---|---|---|---|---|
| Example B5-1 | B | A | B | A |
| Example B5-2 | B | A | B | A |
| Example B5-3 | B | A | B | A |
| Example B5-4 | B | A | B | A |
| Example B5-5 | B | A | B | A |
| Example B5-6 | C | B | C | A |
| Example B5-7 | C | A | A | E |
| Example B5-8 | C | A | A | E |
| Example B5-9 | B | A | B | A |
| Example B5-10 | B | A | B | A |
| Example B5-11 | C | B | C | A |
| Example B5-12 | C | B | C | A |
| Example B5-13 | C | B | C | A |
| Example B5-14 | C | B | C | A |
| Example B5-15 | A | A | A | A |
| Example B5-16 | A | A | C | E |
| Example B5-17 | B | A | A | E |
| Example B5-18 | B | A | B | E |
| Example B5-19 | B | C | A | A |
| Example B5-20 | B | A | B | E |
| Comparative Example B5-1 | E | C | E | E |
| Comparative Example B5-2 | E | C | E | E |
| Comparative Example B5-3 | E | E | E | A |
| Comparative Example B5-4 | E | E | E | A |
| Comparative Example B5-5 | E | E | E | A |
| Comparative Example B5-6 | E | E | E | A |
| Comparative Example B5-7 | E | E | E | A |
| Comparative Example B5-8 | E | E | E | A |
| Comparative Example B5-9 | E | E | E | A |

As is apparent from Table 5-5, excellent results were obtained in the invention. On the contrary, satisfactory results were not obtained in the Comparative Examples.

Hereinafter, a sixth suitable embodiment of the invention will be described in detail.

### Aqueous ink jet composition

Among Of the various disperse dyes, C.I. Disperse Blue 359 has advangageous features such as an excellent color development but also has various problems. Thus, when C.I. Disperse Blue 359 is used as a constituent component of an aqueous ink jet composition in the related art, the aqueous ink jet composition does not have sufficient storage stability, which causes a problem clogging in nozzles of a liquid droplet discharge head during discharge by an ink jet method after long-term storage.

Therefore, the present inventor has conducted extensive studies aimed at providing an aqueous ink jet composition capable of effectively preventing occurrence of the problems as mentioned above while making full use of the excellent features of C.I. Disperse Blue 359.

As a result, the present inventor has reached the invention.

That is, the aqueous ink jet composition of the invention comprises C.I. Disperse Blue 359,
a substance A which is at least one type of compound selected from the group consisting of a compound represented by Formula (2-1) as defined above, a compound represented by Formula (2-2) as defined above, an ethylene oxide adduct of tristyrylphenol, and a derivative of the ethylene oxide adduct of tristyrylphenol, and
an anionic dispersing agent.

With such a constitution, it is possible to provide an aqueous ink jet composition which has the advantageous effects obtained by the inclusion of C.I. Disperse Blue 359, for exampleexcellent color development in a low-temperature process due to its relatively low molecular weight, while not causing significant clogging in a nozzle of a liquid droplet discharge head during discharge by an ink jet method. In particular, even during or after long-term storage or the like, excellent discharge stability can be maintained. Even when clogging occurs in a nozzle, the clogging can be suitably eliminated by capping the nozzle (nozzle capping) or by a suction-induced recovery operation, and excellent discharge stability can be easily recovered.

On the contrary, in a case where the above conditions are not satisfied, satisfactory results cannot be obtained.

For example, when the above-mentioned substance A is not used, dispersion stability of C.I. Disperse Blue 359 in the aqueous ink jet composition cannot be ensured, so that discharge stability according to an ink jet method is decreased during or after long-term storage of the aqueous ink jet composition, or the like. In addition, once clogging occurs in a nozzle, it becomes difficult to achieve recovery.

When the anionic dispersing agent is not used or when another dispersing agent (for example, a nonionic dispersing agent, a cationic dispersing agent) is used instead of the anionic dispersing agent, dispersion stability of C.I. Disperse Blue 359 in the aqueous ink jet composition cannot be ensured, so that discharge stability according to an ink jet method is decreased during or after long-term storage of the aqueous ink jet composition. In addition, once clogging occurs in a nozzle, it becomes difficult to achieve recovery.

As with previous embodiments, an "aqueous ink jet composition" includes not only an ink for discharge in an ink jet method but also a stock solution used for preparing the ink.

### Substance A

The aqueous ink jet composition of the invention contains a substance A which is at least one type of compound selected from the group consisting of a compound represented by Formula (1), a compound represented by Formula (2), an ethylene oxide adduct of tristyrylphenol, and a derivative of the ethylene oxide adduct of tristyrylphenol.

By using the substance A in combination with C.I. Disperse Blue 359 and the anionic dispersing agent, dispersion stability of C.I. Disperse Blue 359 in the aqueous ink jet composition and storage stability of the aqueous ink jet composition can be improved, and occurrence of clogging in a nozzle of a liquid droplet discharge head during discharge by an ink jet method can be effectively prevented even during or after long-term storage or the like. As a result, the aqueous ink jet composition can be stably discharged for a long period of time and high quality recorded matter obtained by an ink jet method can be consistently produced over a long period. In addition, the substance A is a component which causes no significant adverse effects the quality of recorded matter or in sublimation printing.

For the substance A, the aqueous ink jet composition of the invention may contain one type of compound or may contain plural types of compounds. More specifically, the substance A may be, for example, a mixture of a compound represented by Formula (2-1) and a compound represented by Formula (2-2).

The content of substance A in the aqueous ink jet composition is preferably equal to or greater than 0.1% by mass and equal to or less than 4.5% by mass, more preferably equal to or greater than 0.2% by mass and equal to or less than 4.0% by mass, and even more preferably equal to or greater than 0.5% by mass and equal to or less than 3.0% by mass.

Accordingly, storage stability of the aqueous ink jet composition is further improved, and occurrence of clogging in a nozzle of a liquid droplet discharge head during long-term storage or the like is more effectively prevented.

In particular, when the aqueous ink jet composition is an ink to be discharged by an ink jet method, the content of substance A in the ink is preferably equal to or greater than 0.1% by mass and equal to or less than 3.0% by mass, more preferably equal to or greater than 0.2% by mass and equal to or less than 2.0% by mass, and even more preferably equal to or greater than 0.5% by mass and equal to or less than 1.5% by mass.

When the aqueous ink jet composition is a stock solution used for preparing an ink to be discharged by an ink jet method, the content of substance A in the stock solution is preferably equal to or greater than 0.5% by mass and equal to or less than 4.5% by mass, more preferably equal to or greater than 1.0% by mass and equal to or less than 4.0% by mass, and even more preferably equal to or greater than 1.5% by mass and equal to or less than 3.0% by mass.

When the substance A contained in the aqueous ink jet composition comprises more than one type of compound, the content of substance A refers to the total content of all of these compounds.

### Anionic dispersing agent

The aqueous ink jet composition of the invention contains an anionic dispersing agent.

The anionic dispersing agent is not particularly limited as long as it can be ionized to form an anion, and it is preferably at least one of:
a compound represented by Formula (2-3) as defined above,
a sodium salt of a naphthalene sulfonic acid formalin condensate, and
lignin sulfonic acid.

Accordingly, hydrophobicity of the dispersing agent is improved, and adsorption of the dispersing agent onto C.I. Disperse Blue 359 is promoted, so that long-term stability of the aqueous ink jet composition is further improved.

R⁶ in Formula (2-3) is a hydrocarbon group having 1-4 carbon atoms. R⁶ is preferably a hydrocarbon group having one or 2 carbon atoms and especially a methyl group or an ethyl group.

Accordingly, it is possible to provide a more suitable balance between hydrophobicity and hydrophilicity of the anionic dispersing agent, and it is possible to achieve further excellent dispersion stability of C.I. Disperse Blue 359 in the aqueous ink jet composition.

The weight average molecular weight Mw of the anionic dispersing agent is preferably equal to or greater than 1,000 and equal to or less than 20,000, more preferably equal to or greater than 2,000 and equal to or less than 10,000, and even more preferably equal to or greater than 3,000 and equal to or less than 5,000.

Accordingly, storage stability of the aqueous ink jet composition is further improved, and occurrence of clogging in a nozzle of a liquid droplet discharge head during long-term storage or the like is more effectively prevented.

The aqueous ink jet composition may comprise a single anionic dispersing agentor may contain two or more types thereof.

The content of the anionic dispersing agent in the aqueous ink jet composition is preferably equal to or greater than 0.2% by mass and equal to or less than 30% by mass, more preferably equal to or greater than 0.3% by mass and equal to or less than 20% by mass, and even more preferably equal to or greater than 0.4% by mass and equal to or less than 15% by mass.

Accordingly, storage stability of the aqueous ink jet composition is further improved, and occurrence of clogging in a nozzle of a liquid droplet discharge head during long-term storage or the like is more effectively prevented.

In particular, when the aqueous ink jet composition is an ink to be discharged by an ink jet method, the content of the anionic dispersing agent in the ink is preferably equal to or greater than 0.2% by mass and equal to or less than 12% by mass, more preferably equal to or greater than 0.3% by mass and equal to or less than 9.0% by mass, and even more preferably equal to or greater than 0.4% by mass and equal to or less than 7.0% by mass.

When the aqueous ink jet composition is a stock solution used for preparing an ink to be discharged by an ink jet method, the content of the anionic dispersing agent in the stock solution is preferably equal to or greater than 5.5% by mass and equal to or less than 30% by mass, more preferably equal to or greater than 8.0% by mass and equal to or less than 20% by mass, and even more preferably equal to or greater than 10% by mass and equal to or less than 15% by mass.

When anionic dispersing agent of the aqueous ink jet composition comprises more than one type of compound, the content of the anionic dispersing agent refers to the total content of all of these compounds.

### C.I. Disperse Blue 359

The aqueous ink jet composition contains C.I. Disperse Blue 359 as a disperse dye.

The average particle diameter of C.I. Disperse Blue 359 in the aqueous ink jet composition is preferably equal to or greater than 50 nm and equal to or less than 300 nm, more preferably equal to or greater than 75 nm and equal to or less than 250 nm or less, and even more preferably equal to or greater than 100 nm and equal to or less than 200 nm.

Accordingly, storage stability of the aqueous ink jet composition is further improved. In addition, a recorded portion formed by using the aqueous ink jet composition can be more effectively sublimated, and application to sublimation printing can be more suitably achieved.

In the present specification, the average particle diameter refers to an average particle diameter on a volume basis unless otherwise specified. The average particle diameter can be obtained, for example, by measurement using Microtrac UPA (manufactured by Nikkiso CO., LTD.).

The content of C.I. Disperse Blue 359 in the aqueous ink jet composition is preferably equal to or greater than 0.1% by mass and equal to or less than 30% by mass, more preferably equal to or greater than 0.3% by mass and equal to or less than 25% by mass, and even more preferably equal to or greater than 0.5% by mass and equal to or less than 20% by mass with respect to the total mass of the aqueous ink jet composition.

Accordingly, it is possible to obtain a higher color density in a recorded portion formed by using the aqueous ink jet composition, while further improving storage stability of the aqueous ink jet composition and more effectively preventing occurrence of clogging in a nozzle of a liquid droplet discharge head during long-term storage or the like.

In particular, when the aqueous ink jet composition is an ink to be discharged by an ink jet method, the content of C.I. Disperse Blue 359 in the ink is preferably equal to or greater than 0.1% by mass and equal to or less than 15% by mass, more preferably equal to or greater than 0.3% by mass and equal to or less than 10% by mass, and even more preferably equal to or greater than 0.5% by mass and equal to or less than 8.0% by mass.

When the aqueous ink jet composition is a stock solution used for preparing an ink to be discharged by an ink jet method, the content of C.I. Disperse Blue 359 in the stock solution is preferably equal to or greater than 5.0% by mass and equal to or less than 30% by mass, more preferably equal to or greater than 10% by mass and equal to or less than 25% by mass, and even more preferably equal to or greater than 15% by mass and equal to or less than 20% by mass.

In the aqueous ink jet composition, when the content of C.I. Disperse Blue 359 is set as XD [% by mass] and the content of substance A is set as XA [% by mass], it is preferable that a relationship of 0.01 ≤ XA/XD ≤ 1.5 be satisfied, it is more preferable that a relationship of 0.03 ≤ XA/XD ≤ 0.90 be satisfied, and it is even more preferable that a relationship of 0.06 ≤ XA/XD ≤ 0.34 be satisfied.

Accordingly, storage stability of the aqueous ink jet composition is further improved, and occurrence of clogging in a nozzle of a liquid droplet discharge head during long-term storage or the like is more effectively prevented.

In the aqueous ink jet composition, when the content of C.I. Disperse Blue 359 is set as XD [% by mass] and a content of the anionic dispersing agent is set as XB [% by mass], it is preferable that a relationship of 0.4 ≤ XB/XD ≤ 2.0 be satisfied, it is more preferable that a relationship of 0.5 ≤ XB/XD ≤ 1.5 be satisfied, and it is even more preferable that a relationship of 0.6 ≤ XB/XD ≤ 1.2 be satisfied.

Accordingly, storage stability of the aqueous ink jet composition is further improved, and occurrence of clogging in a nozzle of a liquid droplet discharge head during long-term storage or the like is more effectively prevented.

In the aqueous ink jet composition, when the content of the substance A is set as XA [% by mass] and a content of the anionic dispersing agent is set as XB [% by mass], it is preferable that a relationship of 0.02 ≤ XA/XB ≤ 1.0 be satisfied, it is more preferable that a relationship of 0.10 ≤ XA/XB ≤ 0.75 be satisfied, and it is even more preferable that a relationship of 0.15 ≤ XA/XB ≤ 0.70 be satisfied.

Accordingly, storage stability of the aqueous ink jet composition is further improved, and occurrence of clogging in a nozzle of a liquid droplet discharge head during long-term storage or the like is more effectively prevented.

### Water

The aqueous ink jet composition contains water.

The content of water in the aqueous ink jet composition is not particularly limited. The content of water is preferably equal to or greater than 30% by mass and equal to or less than 85% by mass, more preferably equal to or greater than 35% by mass and equal to or less than 80% by mass, and even more preferably equal to or greater than 40% by mass and equal to or less than 75% by mass.

Accordingly, the viscosity of the aqueous ink jet composition can be more reliably adjusted to a suitable value, and discharge stability according to an ink jet method can be further improved.

### Solvent other than water

The aqueous ink jet composition may contain a solvent other than water.

Accordingly, the viscosity of the aqueous ink jet composition can be suitably adjusted, and a moisture retaining property of the aqueous ink jet composition can be increased. As a result, liquid droplet discharge by an ink jet method can be performed in a more stable manner.

Suitable solvents other than water include, for example, glycerin, propylene glycol, 2-pyrrolidone, and the like are mentioned.

By containing these solvents, a slow evaporation rate is achieved due to an excellent moisture retaining capability, which makes it possible to perform liquid droplet discharge in a more stable manner.

The content of the solvent other than water which is contained in the aqueous ink jet composition is preferably equal to or greater than 0% by mass and equal to or less than 45% by mass, more preferably equal to or greater than 10% by mass and equal to or less than 43% by mass, and even more preferably equal to or greater than 15% by mass and equal to or less than 40% by mass.

Accordingly, effects obtained by inclusion of the solvent other than water as described above are exerted in a more remarkable manner.

### Surfactant

The aqueous ink jet composition may contain a surfactant.

Accordingly, it is possible to achieve more suitable wettability of the aqueous ink jet composition with respect to a recording medium (base material), which is advantageous for obtaining better image quality.

Suitalbe surfactants are as described above for previous embodiments.

When the aqueous ink jet composition comprises a silicone-based surfactant, it is possible to achieve more suitable wettability of the aqueous ink jet composition with respect to a recording medium (base material), and it is possible to form an image (recorded portion) with further excellent gradation properties.

When the aqueous ink jet composition contains a silicone-based surfactant, the content of the silicone-based surfactant in the aqueous ink jet composition is preferably equal to or greater than 5.0 parts by mass and equal to or less than 150 parts by mass, more preferably equal to or greater than 7.0 parts by mass and equal to or less than 140 parts by mass, and even more preferably equal to or greater than 10 parts by mass and equal to or less than 70 parts by mass, with respect to 100 parts by mass of C.I. Disperse Blue 359.

Accordingly, effects obtained by containing the silicone-based surfactant as described above are exerted in a more remarkable manner.

Suitable commercially available silicone-based surfactants are as set out above for the second embodiment.

### Other components

The aqueous ink jet composition may contain a component (another component) other than the components as described above.

Examples of other components include coloring agents other than C.I. Disperse Blue 359, a dispersing agent other than the styrene maleic acid-based dispersing agent as described above, and a penetrating agent, a pH adjusting agent, a chelating agent such as ethylenediamine tetraacetate (EDTA), an antiseptic or antifungal agent, an antirust agent, and the like as described above for previous embodiments.

The content (in a case where plural types of components are contained as the other component, the content is a sum of contents thereof) of the other component is preferably equal to or less than 6% by mass, and more preferably equal to or less than 5% by mass.

In particular, when the aqueous ink jet composition of the invention contains a dispersing agent (another dispersing agent) other than the above-mentioned dispersing agents, the content of the dispersing agent (the other dispersing agent) is preferably equal to or less than 5% by mass, and more preferably equal to or less than 3% by mass.

Surface tension of the aqueous ink jet composition at 20°C is preferably equal to or greater than 20 mN/m and equal to or less than 50 mN/m, more preferably equal to or greater than 21 mN/m and equal to or less than 40 mN/m, and even more preferably equal to or greater than 23 mN/m and equal to or less than 30 mN/m.

Accordingly, clogging in a nozzle of a liquid droplet discharge head or the like becomes harder to occur, and discharge stability of the aqueous ink jet composition is further improved. In addition, even in a case where clogging in the nozzle occurs, recoverability achieved by making the nozzle capped (nozzle capping) can be made further excellent.

Preferred values for the surface tension and viscosity of the ink compositions, methods of measurement and the advantages of maintaining them in the preferred range are as described above for the first embodiment.The aqueous ink jet composition of the invention is usually applied to a recording apparatus by an ink jet method in a state of being held in a container such as a cartridge, a bag or a tank. In other words, the recording apparatus according to the invention includes a container (an ink cartridge or the like) for holding the aqueous ink jet composition of the invention.

### Recording method

The aqueous ink jet composition of the invention is suitable for use in, for example, a direct printing method, a thermal transfer printing method (for example, sublimation printing), and the like, and is particularly suitable for use in a thermal transfer printing method because C.I. Disperse Blue 359 has sublimability.
A suitable recording method is substantially as described above for the first embodiment except that the pigment is C.I. Disperse Blue 359 and, in particular, details of the Ink adhering step, the Intermediate transfer medium, the Transfer step and the Recording medium are as described above for the previous embodiment.

In addition, as described above for the previous embodiment, the aqueous ink jet composition may be applied to a method having other further steps (pre-treatment step, intermediate treatment step, and post-treatment step) in addition to the above-described steps.

For example a pre-treatment step of applying a coat layer to the recording medium, an intermediate treatment step of initially heating the recording medium and a post-treatment step of washing the recording medium.

In addition, the aqueous ink jet composition of the invention can also be suitably applied to sublimation transfer that does not use an intermediate transfer medium as described above for the first embodiment.

### Examples

Next, specific examples of the invention will be described.

### [1] Preparation of stock solution (aqueous ink jet composition) for producing ink jet ink

### Example A6-1

First, C.I. Disperse Blue 359 as a disperse dye, an ethylene oxide adduct of tristyrylphenol (a substance of Formula (2-4) in which R⁷ is H and the average value of n is 60 (EO60)) as a substance A, a methylnaphthalene sulfonic acid formalin condensate Na (a substance of Formula (2-3) in which R⁶ is -CH₃) as an anionic dispersing agent, and pure water were mixed in a proportion shown in Table 6-3, and the mixture was stirred with High Shear Mixer (manufactured by Silverson Machines, Inc.) at 3,000 rpm to produce a slurry. Thereafter, the slurry and glass beads having a diameter of 0.5 mm were stirred and dispersed in a bead mill (LMZ015, Ashizawa Finetech Ltd.) under water cooling, so that a stock solution for producing an ink jet ink as an aqueous ink jet composition was produced.

The average particle diameter of C.I. Disperse Blue 359 in the stock solution for producing an ink jet ink was 150 nm.

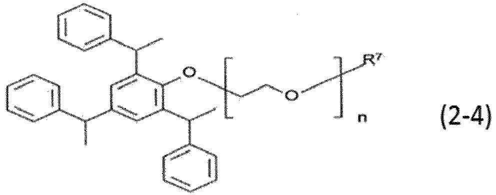

### Examples A6-2 to A6-21

Stock solutions for producing ink jet inks as aqueous ink jet compositions were produced in the same manner as in Example A6-1, except that types of the substance A's and the anionic dispersing agents, and blending proportions of the respective components were as shown in Tables 6-1, 6-2, 6-3, and 6-4.

### Comparative Examples A6-1 to A6-6

Stock solutions for producing ink jet inks as aqueous ink jet compositions were produced in the same manner as in Example A6-1, except that types of the disperse dyes, the substance A's, and the anionic dispersing agents, and blending proportions of the respective components were as shown in Tables 6-1, 6-2, and 6-4.

Table 6-1 shows the general formula and the nature of the substituents in that general formula for each of the substance A's (A-1 to A-5) used for preparing the aqueous ink jet compositions (stock solutions for producing ink jet inks) of Examples A6-1 to A6-21 and Comparative Examples A6-1 to A6-6. Table 6-2 shows the general formula or substance name, the substituents in the general formula and the molecular weight for each of anionic dispersing agents B-1 to B-6 used in Examples Examples A6-1 to A6-21 and Comparative Examples A6-1 to A6-6. Tables 6-3 and 6-4 show the compositions of the aqueous ink jet compositions (stock solutions for producing ink jet inks) of Examples A6-1 to A6-21 and Comparative Examples A6-1 to A6-6. In the
C.I. Disperse Blue 359 is indicated as "DB359",
C.I. Disperse Blue 148 is indicated as "DB148", C.I. Disperse Blue 270 is indicated as "DB270",
"A1'" isa polycarboxylic acid-based activator (CARRYBON L-400, manufactured by Sanyo Chemical Industries, Ltd.), and
"B1'" is a polyoxyethylene sorbitan fatty acid ester (Sorbon T-40, manufactured by Toho Chemical Industry Co., Ltd.) used as a dispersing agent (a nonionic dispersing agent) other than the anionic dispersing agent.
A3 as the substance A used in Example A6-4 and the like is represented by Formula (2-5). In addition, each of the ink jet inks of Examples A6-1 to A6-21 had a viscosity which is a value within a range of equal to or greater than 2.0 mPa·s and equal to or less than 30 mPa·s, and surface tension which is a value within a range of equal to or greater than 25 mN/m and equal to or less than 50 mN/m. For the viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 20°C using a surface tension meter (CBVP-7, manufactured by Kyowa Interface Science Co., Ltd.).

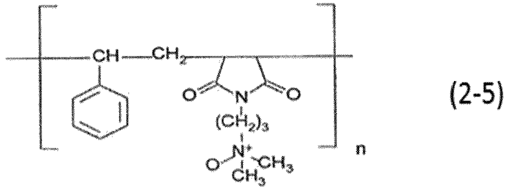

**Table 6-1**

| Abbreviation for substance A | Chemical formula | Condition in formula |
|---|---|---|
| A1 | Formula (4) | R⁷ = H (average value of n is 60) |
| A2 | Formula (4) | R⁷ = SO₃H |
| A3 | Formula (1) (Formula (5)) | R¹ = (CH₂)₃N⁺(CH₃)₂O⁻ |
| A4 | Formula (2) | One of R² and R³ is -OH, and the other is - N(CH₂)₃N(CH₃)₂O- |
| A5 | Formula (4) | R⁷ = H (average value of n is 20) |

**Table 6-2**

| Abbreviation for anionic dispersing agent | Chemical formula or substance name | Condition in formula | Mw |
|---|---|---|---|
| B1 | Formula (3) | R⁶ = CH₃ | 5,000 |
| B2 | Formula (3) | R⁶ = CH₂CH₃ | 5,000 |
| B3 | Formula (3) | R⁶ = CH₂CH₂CH₃ | 5,000 |
| B4 | Formula (3) | R⁶ = CH₂CH₂CH₂CH₃ | 5,000 |
| B5 | Sodium salt of naphthalene sulfonic acid formalin condensate | - | 5,000 |
| B6 | Lignin sulfonic acid | - | 5,000 |

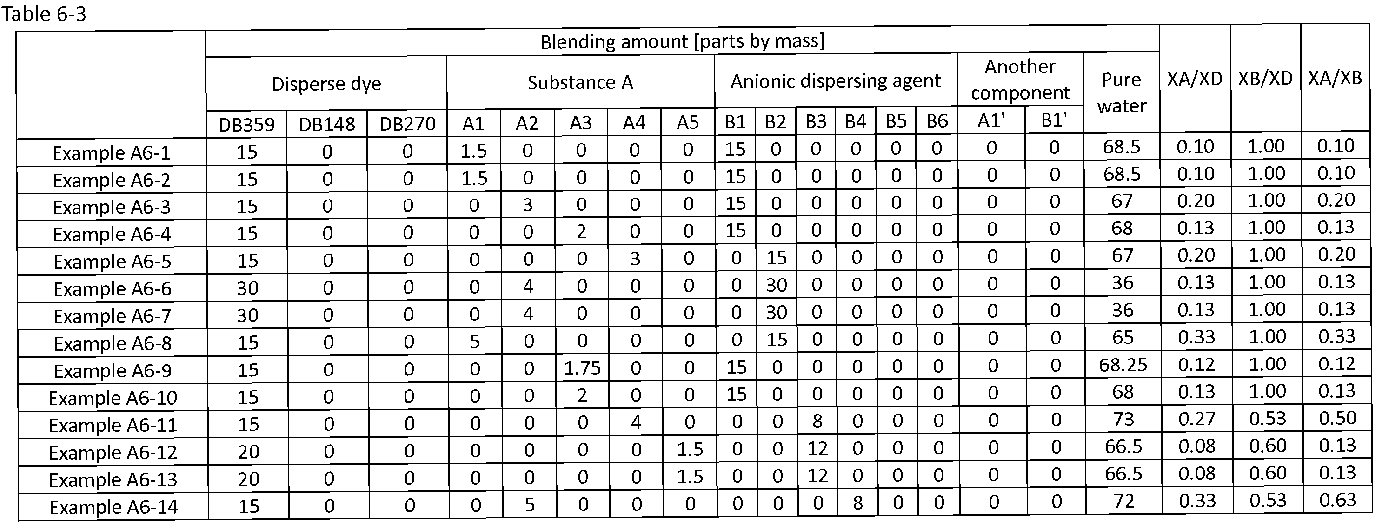

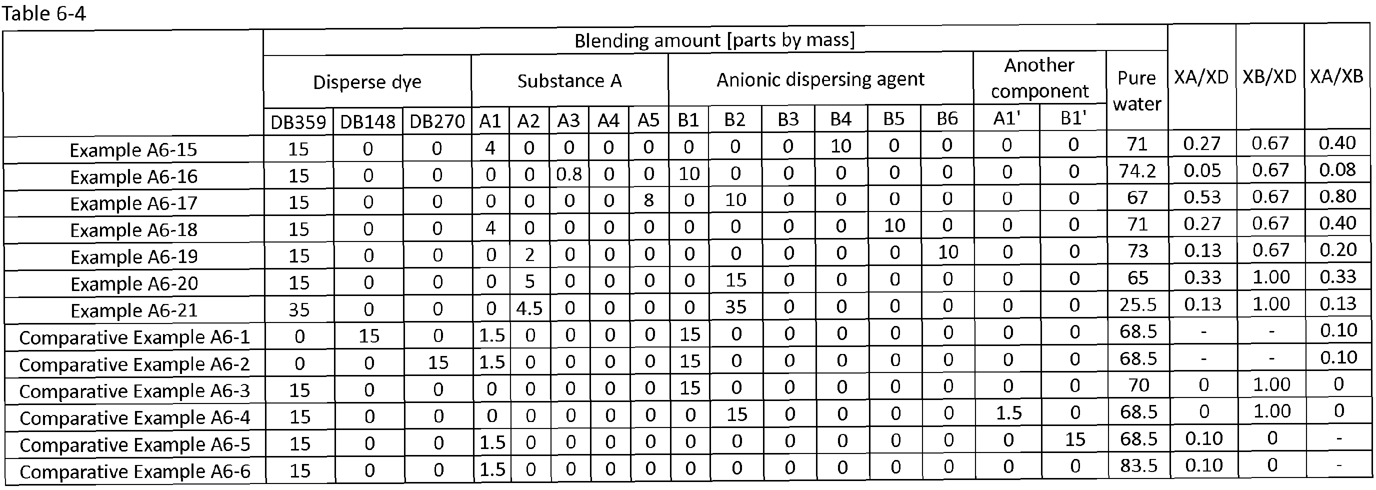

### [2] Evaluation on stock solution for producing ink jet ink

### [2-1] Storage stability (change in particle diameter)

For each of the aqueous ink jet compositions (stock solutions for producing ink jet inks) of Examples A6-1 to A6-21 and Comparative Examples A6-1 to A6-6 the change in average particle diameter was measured using the method described above for the first embodiment. Evaluation criteria were as follows.
A: Variation rate of average particle diameter is less than 5%.
B: Variation rate of average particle diameter is equal to or greater than 5% and less than 10%.
C: Variation rate of average particle diameter is equal to or greater than 10% and less than 15%.
D: Variation rate of average particle diameter is equal to or greater than 15% and less than 20%.
E: Variation rate of average particle diameter is equal to or greater than 20%.

These results are summarized in Table 6-5.

**Table 6-5**

| | Storage stability |
|---|---|
| Example A6-1 | A |
| Example A6-2 | A |
| Example A6-3 | A |
| Example A6-4 | A |
| Example A6-5 | B |
| Example A6-6 | B |
| Example A6-7 | B |
| Example A6-8 | B |
| Example A6-9 | A |
| Example A6-10 | A |
| Example A6-11 | B |
| Example A6-12 | B |
| Example A6-13 | B |
| Example A6-14 | B |
| Example A6-15 | B |
| Example A6-16 | C |
| Example A6-17 | C |
| Example A6-18 | B |
| Example A6-19 | B |
| Example A6-20 | B |
| Example A6-21 | D |
| Comparative Example A6-1 | E |
| Comparative Example A6-2 | E |
| Comparative Example A6-3 | E |
| Comparative Example A6-4 | E |
| Comparative Example A6-5 | E |
| Comparative Example A6-6 | E |

As is apparent from Table 6-5, excellent results were obtained in the invention. On the contrary, satisfactory results were not obtained in the Comparative Examples.

### [3] Preparation of ink jet ink (aqueous ink jet composition)

### Example B6-1

The stock solution for producing an ink jet ink prepared in Example A6-1, glycerin, 2-pyrrolidone, propylene glycol, BYK 348 (manufactured by BYK Chemie Japan) as a silicone-based surfactant, and pure water were mixed at a proportion as shown in Table 6-6, and the mixture was stirred with High Shear Mixer (manufactured by Silverson Machines, Inc.) at 3,000 rpm to produce an ink jet ink as an aqueous ink jet composition.

The average particle diameter of C.I. Disperse Blue 359 in the ink jet ink was 150 nm.

### Examples B6-2 to B6-19

Ink jet inks as aqueous ink jet compositions were produced in the same manner as in Example B6-1, except that types of the stock solutions for producing ink jet inks were as shown in Table 6-6 and blending proportions of the respective components were as shown in Table 6-6. Comparative Examples B6-1 to B6-6

Ink jet inks as aqueous ink jet compositions were produced in the same manner as in Example B6-1, except that types of the stock solutions for producing ink jet inks were as shown in Table 6-6 and blending proportions of the respective components were as shown in Table 6-6.

Conditions for the aqueous ink jet compositions (ink jet inks) of Examples B6-1 to B6-19 and Comparative Examples B6-1 to B6-6 are summarized in Table 6-6. In the tables:
glycerin is indicated as "Gly",
2-pyrrolidone is indicated as "2-Py",
propylene glycol is indicated as "PG",
"BYK 348" is BYK 348 (manufactured by BYK Chemie Japan) as a silicone-based surfactant ", and
"EXP 4300" is Olfine EXP4300 (manufactured by Nissin Chemical Industry Co., Ltd.) used as an acetylene-based surfactant.
In addition, each of the ink jet inks of Examples B6-1 to B6-19 had a viscosity which is a value within a range of equal to or greater than 2.0 mPa·s and equal to or less than 5.0 mPa·s, and surface tension which is a value within a range of equal to or greater than 20 mN/m and equal to or less than 35 mN/m. For the viscosity, measurement was performed at 20°C using a viscoelasticity tester MCR-300 (manufactured by Physica) by raising Shear Rate from 10 s⁻¹ to 1,000 s⁻¹ and reading a viscosity at the time of Shear Rate 200. In addition, for the surface tension, measurement was performed by the Wilhelmy method at 20°C using a surface tension meter (CBVP-7, manufactured by Kyowa Interface Science Co., Ltd.).

**Table 6-6**

| | Blending amount [parts by mass] | | | | | | | |
|---|---|---|---|---|---|---|---|---|
| | Stock solution | | Solvent other than water | | | Surfactant | | Pure water |
| | Type | | Gly | 2-Py | PG | BYK 348 | EXP 4300 | |
| Example B6-1 | Example A6-1 | 50.0 | 10.0 | 5.0 | 5.0 | 1.0 | 0 | 29.0 |
| Example B6-2 | Example A6-1 | 5.0 | 20.0 | 5.0 | 5.0 | 1.0 | 0 | 64.0 |
| Example B6-3 | Example A6-2 | 50.0 | 10.0 | 5.0 | 5.0 | 1.0 | 0 | 29.0 |
| Example B6-4 | Example A6-3 | 50.0 | 10.0 | 5.0 | 5.0 | 1.0 | 0 | 29.0 |
| Example B6-5 | Example A6-4 | 50.0 | 10.0 | 5.0 | 5.0 | 0 | 1.0 | 29.0 |
| Example B6-6 | Example A6-5 | 50.0 | 10.0 | 5.0 | 5.0 | 1.0 | 0 | 29.0 |
| Example B6-7 | Example A6-6 | 2.5 | 20.0 | 5.0 | 5.0 | 0 | 1.0 | 66.5 |
| Example B6-8 | Example A6-7 | 50.0 | 10.0 | 5.0 | 5.0 | 1.0 | 0 | 29.0 |
| Example B6-9 | Example A6-8 | 50.0 | 10.0 | 5.0 | 5.0 | 1.0 | 0 | 29.0 |
| Example B6-10 | Example A6-9 | 50.0 | 10.0 | 5.0 | 5.0 | 0 | 1.0 | 29.0 |
| Example B6-11 | Example A6-10 | 2.5 | 20.0 | 5.0 | 5.0 | 1.0 | 0 | 66.5 |
| Example B6-12 | Example A6-11 | 50.0 | 10.0 | 5.0 | 5.0 | 1.0 | 0 | 29.0 |
| Example B6-13 | Example A6-12 | 50.0 | 10.0 | 5.0 | 5.0 | 1.0 | 0 | 29.0 |
| Example B6-14 | Example A6-13 | 50.0 | 10.0 | 5.0 | 5.0 | 1.0 | 0 | 29.0 |
| Example B6-15 | Example A6-14 | 50.0 | 10.0 | 5.0 | 5.0 | 0 | 1.0 | 29.0 |
| Example B6-16 | Example A6-15 | 50.0 | 10.0 | 5.0 | 5.0 | 1.0 | 0 | 29.0 |
| Example B6-17 | Example A6-16 | 50.0 | 10.0 | 5.0 | 5.0 | 0 | 1.0 | 29.0 |
| Example B6-18 | Example A6-19 | 2.5 | 20.0 | 5.0 | 5.0 | 0 | 1.0 | 66.5 |
| Example B6-19 | Example A6-20 | 2.5 | 20.0 | 5.0 | 5.0 | 0 | 1.0 | 66.5 |
| Comparative Example B6-1 | Comparative Example A6-1 | 50.0 | 10.0 | 5.0 | 5.0 | 1.0 | 0 | 29.0 |
| Comparative Example B6-2 | Comparative Example A6-2 | 50.0 | 10.0 | 5.0 | 5.0 | 1.0 | 0 | 29.0 |
| Comparative Example B6-3 | Comparative Example A6-3 | 50.0 | 10.0 | 5.0 | 5.0 | 1.0 | 0 | 29.0 |
| Comparative Example B6-4 | Comparative Example A6-4 | 50.0 | 10.0 | 5.0 | 5.0 | 1.0 | 0 | 29.0 |
| Comparative Example B6-5 | Comparative Example A6-5 | 50.0 | 10.0 | 5.0 | 5.0 | 1.0 | 0 | 29.0 |
| Comparative Example B6-6 | Comparative Example A6-6 | 50.0 | 10.0 | 5.0 | 5.0 | 1.0 | 0 | 29.0 |

### [4] Evaluation on ink jet ink

### [4-1] Storage stability (change in particle diameter)

For each of the aqueous ink jet compositions (ink jet inks) of Examples B6-1 to B6-19 and Comparative Examples B6-1 to B6-6, the change in particle diameter was measured using the method described above for Embodiment 1. Evaluation criteria were as follows.
A: Variation rate of average particle diameter is less than 5%.
B: Variation rate of average particle diameter is equal to or greater than 5% and less than 10%.
C: Variation rate of average particle diameter is equal to or greater than 10% and less than 15%.
D: Variation rate of average particle diameter is equal to or greater than 15% and less than 20%.
E: Variation rate of average particle diameter is equal to or greater than 20%.

### [4-2] Discharge stability by ink jet method

A predetermined ink-holding container was filled with each of the aqueous ink jet compositions (ink jet inks) of Examples B6-1 to B6-19 and Comparative Examples B6-1 to B6-6 and was left to stand for 5 days in an environment of 60°C.

Thereafter, the holding container was mounted on a recording apparatus PX-H 6000 (manufactured by Seiko Epson Corporation), and the ink jet ink was discharged so that a solid pattern was adhered on TRANSJET Classic (manufactured by Cham Paper), which is an intermediate transfer medium, at a recording resolution of 1440 × 720 dpi. An operating environment of the recording apparatus (printer) was set at 40°C and 20 RH%.

The number of times of nozzle omission at the time of recording 30 solid patterns on the intermediate transfer medium was examined, and evaluation was performed according to the following criteria.
A: Number of times of nozzle omission is 0.
B: Number of times of nozzle omission is equal to or greater than 1 and equal to or less than 9.
C: Number of times of nozzle omission is equal to or greater than 10 and equal to or less than 19.
D: Number of times of nozzle omission is equal to or greater than 20 and equal to or less than 29.
E: Number of times of nozzle omission is equal to or greater than 30.

### [4-3] Clogging recoverability

A predetermined ink-holding container was filled with each of the aqueous ink jet compositions (ink jet inks) of the respective Examples and Comparative Examples, and the holding container was mounted on a recording apparatus PX-H 6000 (manufactured by Seiko Epson Corporation).

After confirming that discharge normally occurs in all nozzles, the power of the recording apparatus was turned off in a normal state, and was left to stand for 1 month under an environment of 40°C.

Thereafter, the number of times taken to reach normal discharge by a suction-induced recovery operation was obtained, and evaluation was performed according to the following criteria.
A: Normalization is achieved with 1 to 3 recovery operations.
B: Normalization is achieved with 4 to 6 recovery operations.
C: Normalization is achieved with 7 to 9 recovery operations.
D: Normalization is achieved after 9 recovery operations, being left to stand for 12 hours at room temperature, and then 1 to 3 further recovery operations.
E: Normalization is not achieved after 9 recovery operations, being left to stand for 12 hours at room temperature, and then 3 further recovery operations.

### [4-4] Color development (OD value)

An adhesion side of the aqueous ink jet composition on the thirtieth intermediate transfer medium to which the ink jet ink had been adhered in [4-3] was brought into close contact with cloth (polyester 100%, Amina, manufactured by Toray Industries, Inc.) which is a white recording medium. In this state, sublimation transfer was carried out by performing heating using a heat press machine (TP-608M, manufactured by Taiyo Seiki Co., Ltd.) at a condition of 180°C and 60 seconds, so that each recorded matter was obtained.

For each recorded matter obtained, evaluation on color development was performed. Specifically, for each recorded matter obtained, an OD value was measured using a colorimeter (Gretag Macbeth Spectrolino, manufactured by X-Rite), and evaluation was performed according to the following criteria.
A: OD value is equal to or greater than 1.50.
B: OD value is equal to or greater than 1.45 and less than 1.50.
C: OD value is equal to or greater than 1.40 and less than 1.45.
D: OD value is equal to or greater than 1.35 and less than 1.40.
E: OD value is less than 1.35.

These results are summarized in Table 6-7.

**Table 6-7**

| | Storage stability | Discharge stability | Clogging recoverability | Color development |
|---|---|---|---|---|
| Example B6-1 | A | A | A | A |
| Example B6-2 | A | A | A | E |
| Example B6-3 | A | A | A | A |
| Example B6-4 | A | A | A | A |
| Example B6-5 | B | A | B | A |
| Example B6-6 | B | B | B | A |
| Example B6-7 | A | A | A | E |
| Example B6-8 | A | B | A | A |
| Example B6-9 | A | B | A | A |
| Example B6-10 | B | B | B | A |
| Example B6-11 | B | A | B | E |
| Example B6-12 | B | B | B | A |
| Example B6-13 | B | B | B | A |
| Example B6-14 | B | B | C | A |
| Example B6-15 | C | B | B | A |
| Example B6-16 | C | B | B | A |
| Example B6-17 | A | C | B | A |
| Example B6-18 | C | A | B | E |
| Example B6-19 | C | A | B | E |
| Comparative Example B6-1 | E | E | E | E |
| Comparative Example B6-2 | E | E | E | E |
| Comparative Example B6-3 | E | E | E | A |
| Comparative Example B6-4 | E | E | E | A |
| Comparative Example B6-5 | E | E | E | A |
| Comparative Example B6-6 | E | E | E | A |

As is apparent from Table 6-7, excellent results were obtained in the invention. On the contrary, satisfactory results were not obtained in the Comparative Examples.

## Claims

1. An aqueous ink jet composition, comprising:
at least one disperse dye selected from the group consisting of C.I. Disperse Yellow 54, C.I. Disperse Red 60, and C.I. Disperse Blue 359; and
a styrene maleic acid-based dispersing agent represented by Formula (1): 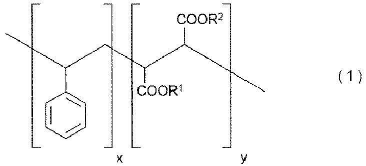 wherein:
one of R¹ and R² is -(CH₂CH₂O)ₙR³, -CH₂CH(CH₃)₂ or -(CH₂)₃CH₃; the other of R¹ and R² is -H, - (CH₂CH₂O)ₙR³, -CH₂CH(CH₃)₂,
-(CH₂)₃CH₃, or a counterion such that the compound of formula (1) is a salt;
each R³ is independently H, CH₃, or C₂H₅; and
each n is independently an integer of equal to or greater than 1; and
x and y have a relationship such that the ratio of y: x is equal to or greater than 0.2:1 and equal to or less than 1.0:1.

2. The aqueous ink jet composition according to Claim 1,
wherein when the content of the disperse dye is set as XD [% by mass] and the content of the styrene maleic acid-based dispersing agent is set as XM [% by mass], a relationship of 0.04 ≤ XM/XD ≤ 25 is satisfied.

3. The aqueous ink jet composition according to Claim 1 or Claim 2,
wherein the content of the disperse dye is equal to or greater than 0.1% by mass and equal to or less than 30% by mass.

4. The aqueous ink jet composition according to any one of Claims 1 to 3,
wherein the content of the styrene maleic acid-based dispersing agent is equal to or greater than 0.1% by mass and equal to or less than 30% by mass.

5. The aqueous ink jet composition according to to any one of Claims 1 to 4,
wherein the styrene maleic acid-based dispersing agent has a weight average molecular weight of equal to or greater than 7,000 and equal to or less than 20,000.

6. The aqueous ink jet composition according to to any one of Claims 1 to 6, further comprising:
an acetylene-based surfactant,
wherein the content of the acetylene-based surfactant is equal to or greater than 5.0 parts by mass and equal to or less than 75 parts by mass with respect to 100 parts by mass of the disperse dye.

7. An aqueous ink jet composition, comprising:
at least one disperse dye selected from the group consisting of C.I. Disperse Yellow 54, C.I. Disperse Red 60, and C.I. Disperse Blue 359;
a substance A which is at least one of a compound represented by Formula (2-1), a compound represented by Formula (2-2), an ethylene oxide adduct of tristyrylphenol, and a derivative of the ethylene oxide adduct of tristyrylphenol; and
an anionic dispersing agent; 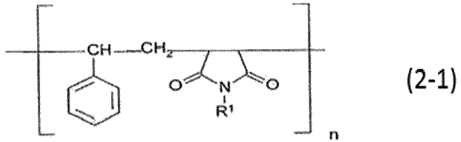 wherein:
R¹ is a hydrocarbon group having 1-6 carbon atoms, or
-(CH₂)ₘ-NR⁸R⁹
m is an integer of from 1 to 6; and
R⁸ and R⁹ are each independently a hydrogen atom or a hydrocarbon group 1-6 carbon atoms; and
n is an integer of equal to or greater than 1; 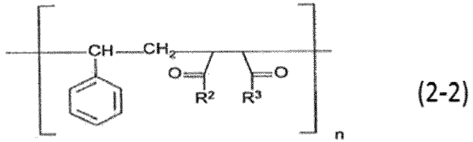 wherein:
one of R² and R³ is -OH, the other of R² and R³ is -NR⁴R⁵
R⁴ and R⁵ are each independently a hydrogen atom or a hydrocarbon group having 1-6 carbon atoms; and
n is an integer of equal to or greater than 1.

8. The aqueous ink jet composition according to Claim 7,
wherein the anionic dispersing agent is at least one of a compound represented by Formula (2-3), a sodium salt of a naphthalene sulfonic acid formalin condensate, and lignin sulfonic acid. 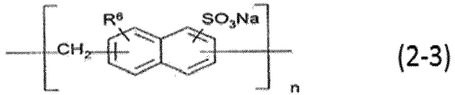 wherein
R⁶ is a hydrocarbon group having 1-4 carbon atoms; and
n is an integer of equal to or greater than 1.

9. The aqueous ink jet composition according to Claim 7 or Claim 8,
wherein when the content of the disperse dye is set as XD [% by mass] and a content of the substance A is set as XA [% by mass], a relationship of 0.002 ≤ XA/XD ≤ 1.5 is satisfied.

10. The aqueous ink jet composition according to any one of Claims 7 to 9,
wherein when the content of the disperse dye is set as XD [% by mass] and the content of the anionic dispersing agent is set as XB [% by mass], a relationship of 0.3 ≤ XB/XD ≤ 2.0 is satisfied.

11. The aqueous ink jet composition according to any one of Claims 7 to 10,
wherein when the content of the substance A is set as XA [% by mass] and the content of the anionic dispersing agent is set as XB [% by mass], a relationship of 0.002 ≤ XA/XB ≤ 1.5 is satisfied.

12. The aqueous ink jet composition according to any one of Claims 7 to 11,
wherein the content of the disperse dye is equal to or greater than 0.1% by mass and equal to or less than 30% by mass.

13. The aqueous ink jet composition according to any one of Claims 7 to 12,
wherein the content of substance A is equal to or greater than 0.05% by mass and equal to or less than 8.0% by mass.

14. The aqueous ink jet composition according to any one of Claims 7 to 13,
wherein the content of the anionic dispersing agent is equal to or greater than 0.1% by mass and equal to or less than 30% by mass.

15. The aqueous ink jet composition according to any one of Claims 7 to,
wherein the anionic dispersing agent has a weight average molecular weight of equal to or greater than 1,000 and equal to or less than 20,000.

## Patentansprüche

1. Wässrige Tintenstrahlzusammensetzung, umfassend:
mindestens einen Dispersionsfarbstoff, ausgewählt aus der Gruppe bestehend aus C.I. Disperse Yellow 54, C.I. Disperse Red 60 und C.I. Disperse Blue 359; und
ein Styrol-Maleinsäure-basiertes Dispergiermittel, dargestellt durch Formel (1) 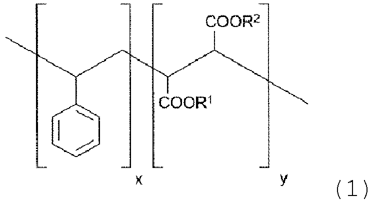 wobei:
eines von R¹ und R² -(CH₂CH₂O)ₙR³, -CH₂CH(CH₃)₂ oder -(CH₂)₃CH₃ ist, das andere von R¹ und R² -H, (CH₂CH₂O)ₙR³, CH₂CH (CH₃)₂,
-(CH₂)₃CH₃ oder ein Gegenion ist, sodass die Verbindung von Formel (1) ein Salz ist;
jedes R³ unabhängig H, CH₃ oder C₂H₅ ist; und
jedes n unabhängig eine ganze Zahl gleich oder größer 1 ist; und
x und y eine solche Beziehung haben, dass das Verhältnis von y:x gleich oder größer als 0,2:1 und gleich oder kleiner als 1,0:1 ist.

2. Wässrige Tintenstrahlzusammensetzung nach Anspruch 1, wobei der Gehalt des Dispersionsfarbstoffs als XD [Masseprozent] eingestellt ist und der Gehalt des Styrol-Maleinsäure-basierten Dispergiermittels als XM [Masseprozent] eingestellt ist, wobei eine Beziehung von 0,04 ≤ XM/XD ≤ 25 erfüllt ist.

3. Wässrige Tintenstrahlzusammensetzung nach Anspruch 1 oder Anspruch 2,
wobei der Gehalt des Dispersionsfarbstoffs gleich oder größer als 0,1 Masseprozent und gleich oder kleiner als 30 Masseprozent ist.

4. Wässrige Tintenstrahlzusammensetzung nach einem der Ansprüche 1 bis 3,
wobei der der Gehalt des Styrol-Maleinsäure-basierten Dispergiermittels gleich oder größer als 0,1 Masseprozent und gleich oder kleiner als 30 Masseprozent ist.

5. Wässrige Tintenstrahlzusammensetzung nach einem der Ansprüche 1 bis 4,
wobei das Styrol-Maleinsäure-basierte Dispergiermittel ein gewichtsgemitteltes Molekulargewicht gleich oder größer als 7.000 und gleich oder kleiner als 20.000 aufweist.

6. Wässrige Tintenstrahlzusammensetzung nach einem der Ansprüche 1 bis 6, weiter umfassend:
ein auf Acetylen basierendes Tensid,
wobei der Gehalt des auf Acetylen basierenden Tensids gleich oder größer als 5,0 Masseteile oder gleich oder kleiner als 75 Masseteile in Bezug auf 100 Masseteile des Dispersionsfarbstoffs ist.

7. Wässrige Tintenstrahlzusammensetzung, umfassend:
mindestens einen Dispersionsfarbstoff, ausgewählt aus der Gruppe bestehend aus C.I. Disperse Yellow 54, C.I. Disperse Red 60 und C.I. Disperse Blue 359;
eine Substanz A, die mindestens eine von einer Verbindung, dargestellt durch Formel (2-1), einer Verbindung, dargestellt durch Formel (2-2), einem Ethylenoxidaddukt von Tristyrolphenol und einem Derivat des Ethylenoxidaddukts von Tristyrylphenol ist; und
ein anionisches Dispergiermittel; 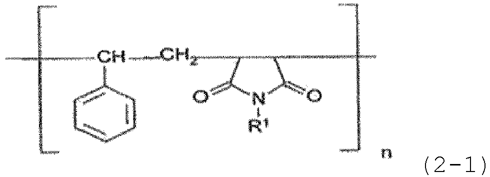 wobei:
R¹ eine Kohlenwasserstoffgruppe mit 1-6 Kohlenstoffatomen oder
-(CH₂)ₘ-NR⁸R⁹ ist,
m eine ganze Zahl von 1 bis 6 ist; und
R⁸ und R⁹ jeweils unabhängig ein Wasserstoffatom oder eine Kohlenwasserstoffgruppe mit 1-6 Kohlenstoffatomen sind; und
n eine ganze Zahl gleich oder größer 1 ist; 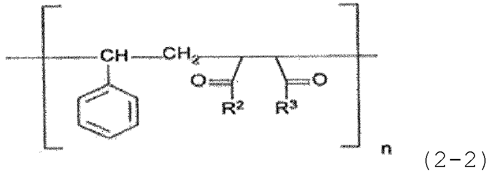 wobei:
eines von R² und R³ -OH ist, das andere von R² und R³ -NR⁴R⁵ ist,
R⁴ und R⁵ jeweils unabhängig ein Wasserstoffatom oder eine Kohlenwasserstoffgruppe mit 1-6 Kohlenstoffatomen sind; und
n eine ganze Zahl gleich oder größer 1 ist.

8. Wässrige Tintenstrahlzusammensetzung nach Anspruch 7,
wobei das anionische Dispergiermittel mindestens eine Verbindung dargestellt durch Formel (2-3), ein Natriumsalz eines Naphthalinsulfonsäureformalinkondensatis und Ligninsulfonsäure ist, 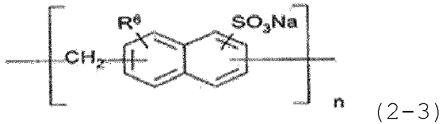 wobei:
R⁶ eine Kohlenwasserstoffgruppe mit 1-4 Kohlenstoffatomen ist; und
n eine ganze Zahl gleich oder größer 1 ist.

9. Wässrige Tintenstrahlzusammensetzung nach Anspruch 7 oder Anspruch 8,
wobei, wenn der Gehalt des Dispersionsfarbstoffs als XD [Masseprozent] eingestellt ist und ein Gehalt der Substanz A als XA [Masseprozent] eingestellt ist, eine Beziehung von 0,002 ≤ XA/XD ≤ 1,5 erfüllt ist.

10. Wässrige Tintenstrahlzusammensetzung nach einem der Ansprüche 7 bis 9,
wobei, wenn der Gehalt des Dispersionsfarbstoffs als XD [Masseprozent] eingestellt ist und der Gehalt des anionischen Dispergiermittels als XB [Masseprozent] eingestellt ist, eine Beziehung von 0,3 ≤ XB/XD ≤ 2,0 erfüllt ist.

11. Wässrige Tintenstrahlzusammensetzung nach einem der Ansprüche 7 bis 10,
wobei, wenn der Gehalt der Substanz A als XA [Masseprozent] eingestellt ist und der Gehalt des anionischen Dispergiermittels als XB [Masseprozent] eingestellt ist, eine Beziehung von 0,002 ≤ XA/XB ≤ 1,5 erfüllt ist.

12. Wässrige Tintenstrahlzusammensetzung nach einem der Ansprüche 7 bis 11,
wobei der Gehalt des Dispersionsfarbstoffs gleich oder größer als 0,1 Masseprozent und gleich oder kleiner als 30 Masseprozent ist.

13. Wässrige Tintenstrahlzusammensetzung nach einem der Ansprüche 7 bis 12,
wobei der Gehalt der Substanz A gleich oder größer als 0,05 Masseprozent und gleich oder kleiner als 8,0 Masseprozent ist.

14. Wässrige Tintenstrahlzusammensetzung nach einem der Ansprüche 7 bis 13,
wobei der Gehalt des anionischen Dispergiermittels gleich oder größer als 0,1 Masseprozent und gleich oder kleiner als 30 Masseprozent ist.

15. Wässrige Tintenstrahlzusammensetzung nach einem der Ansprüche 7 bis,
wobei das anionische Dispergiermittel ein gewichtsgemitteltes Molekulargewicht von gleich oder größer 1.000 und gleich oder kleiner 20.000 aufweist.

## Revendications

1. Composition à jet d'encre aqueuse, comprenant :
au moins un colorant dispersé sélectionné parmi le groupe comprenant le C.I. Disperse Yellow 54, le C.I. Disperse Red 60, et le C.I. Disperse Blue 359 ; et
un agent de dispersion à base d'acide maléique-styrène représenté par la Formule (1) : 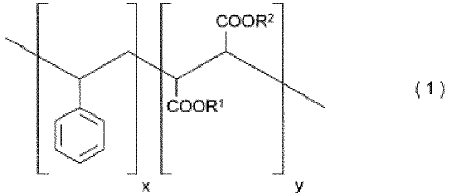 où :
l'un parmi R¹ et R² est -(CH₂CH₂O)ₙR³, -CH₂CH(CH₃)₂ ou - (CH₂)₃CH₃ ; l'autre parmi R¹ et R² est -H, -(CH₂CH₂O)ₙR³, -CH₂CH(CH₃)₂,
-(CH₂)₃CH₃ ou un contre-ion de sorte que le composé de la formule (1) est du sel ;
chaque R³ est indépendamment H, CH₃, ou C₂H₅ ; et
chaque n est indépendamment un entier égal ou supérieur à 1 ; et
x et y présentent une relation telle que le rapport de y:x est égal ou supérieur à 0,2:1 et égal ou inférieur à 1,0:1.

2. Composition à jet d'encre aqueuse selon la revendication 1,
dans laquelle, lorsque la teneur en colorant dispersé est définie comme XD[% en masse] et la teneur en agent de dispersion à base d'acide maléique-styrène est définie comme XM [% en masse], une relation de 0,04 ≤ XM/XD ≤ 25 est satisfaite.

3. Composition à jet d'encre aqueuse selon la revendication 1 ou la revendication 2,
dans laquelle la teneur en colorant dispersé est égale ou supérieure à 0,1 % en masse et égale ou inférieure à 30 % en masse.

4. Composition à jet d'encre aqueuse selon l'une quelconque des revendications 1 à 3,
dans laquelle la teneur en agent de dispersion à base d'acide maléique-styrène est égale ou supérieure à 0,1 % en masse et égale ou inférieure à 30 % en masse.

5. Composition à jet d'encre aqueuse selon l'une quelconque des revendications 1 à 4,
dans laquelle l'agent de dispersion à base d'acide maléique-styrène présente un poids moléculaire moyen égal ou supérieur à 7.000 et égal ou inférieur à 20.000.

6. Composition à jet d'encre aqueuse selon l'une quelconque des revendications 1 à 6, comprenant en outre :
un surfactant à base d'acétylène,
dans laquelle la teneur en surfactant à base d'acétylène est égale ou supérieure à 5,0 parts en masse et égale ou inférieure à 75 parts en masse par rapport à 100 parts en masse du colorant dispersé.

7. Composition à jet d'encre aqueuse comprenant :
au moins un colorant dispersé sélectionné parmi le groupe comprenant le C.I. Disperse Yellow 54, le C.I. Disperse Red 60, et le C.I. Disperse Blue 359 ;
une substance A, laquelle est l'une au moins parmi un composé représenté par la Formule (2-1), un composé représenté par la Formule (2-2), un produit d'addition d'oxyde d'éthylène de tristyrylphénol, et un dérivé du produit d'addition d'oxyde d'éthylène de tristyrylphénol ; et
un agent de dispersion anionique ; 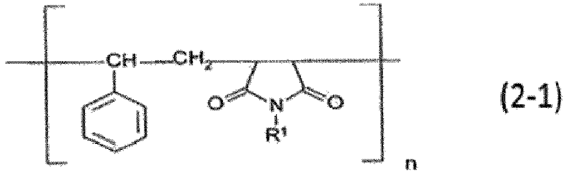 où :
R¹ est un groupe hydrocarbure comportant 1-6 atomes de carbone, ou
-(CH₂)ₘ-NR⁸R⁹
m étant un entier de 1 à 6 ; et
R⁸ et R⁹ étant respectivement indépendamment un atome d'hydrogène ou un groupe hydrocarbure comportant 1-6 atomes de carbone ; et
n est un entier égal ou supérieur à 1 ; 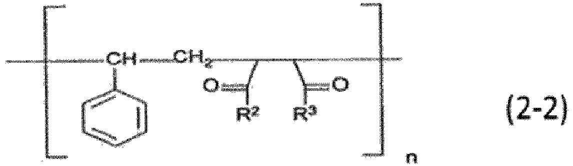 où :
l'un parmi R² et R³ est -OH, l'autre parmi R² et R³ est -NR⁴R⁵
R⁴ et R⁵ sont respectivement indépendamment un atome d'hydrogène ou un groupe hydrocarbure comportant 1-6 atomes de carbone ; et
n est un entier égal ou supérieur à 1.

8. Composition à jet d'encre aqueuse selon la revendication 7,
dans laquelle l'agent de dispersion anionique est l'un au moins parmi un composé représenté par la Formule (2-3), un sel de sodium d'un condensat de formaline acide sulfonique de naphtalène, et un acide sulfonique de lignine ; 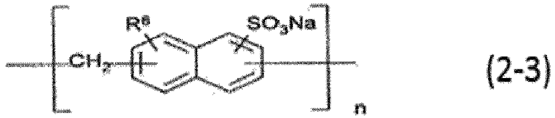 où :
R⁶ est un groupe hydrocarbure comportant 1-4 atomes de carbone ; et
n est un entier égal ou supérieur à 1.

9. Composition à jet d'encre aqueuse selon la revendication 7 ou la revendication 8,
dans laquelle, lorsque la teneur en colorant dispersé est définie comme XD [% en masse] et une teneur en substance A est définie comme XA [% en masse], une relation de 0,002 ≤ XA/XD ≤ 1,5 est satisfaite.

10. Composition à jet d'encre aqueuse selon l'une quelconque des revendications 7 à 9,
dans laquelle, lorsque la teneur en colorant dispersé est définie comme XD [% en masse] et la teneur en agent de dispersion anionique est définie comme XB [% en masse], une relation de 0,3 ≤ XB/XD ≤ 2,0 est satisfaite.

11. Composition à jet d'encre aqueuse selon l'une quelconque des revendications 7 à 10,
dans laquelle, lorsque la teneur en substance A est définie comme XA [% en masse] et la teneur en agent de dispersion anionique est définie comme XB [% en masse], une relation de 0,002 ≤ XA/XB ≤ 1,5 est satisfaite.

12. Composition à jet d'encre aqueuse selon l'une quelconque des revendications 7 à 11,
dans laquelle la teneur en colorant dispersé est égale ou supérieure à 0,1 % en masse et égale ou inférieure à 30 % en masse.

13. Composition à jet d'encre aqueuse selon l'une quelconque des revendications 7 à 12,
dans laquelle la teneur en substance A est égale ou supérieure à 0,05 % en masse et égale ou inférieure à 8,0 % en masse.

14. Composition à jet d'encre aqueuse selon l'une quelconque des revendications 7 à 13,
dans laquelle la teneur en agent de dispersion anionique est égale ou supérieure à 0,1 % en masse et égale ou inférieure à 30 % en masse.

15. Composition à jet d'encre aqueuse selon l'une quelconque des revendications 7 à,
dans laquelle l'agent de dispersion anionique présente un poids moléculaire moyen égal ou supérieur à 1.000 et égal ou inférieur à 20.000.
